# EUROPEAN PATENT APPLICATION

(11) **EP 4 582 928 A1**
(43) Date of publication of application: **09.07.2025**
(21) Application number: 23893588.6
(22) Date of filing: 31.10.2023
(51) Int. Cl.: G06F 3/16, H04M 1/60, H04M 1/72415, H04M 1/72442

(54) **WEARABLE DEVICE MANAGEMENT METHOD, RELATED APPARATUS, AND COMMUNICATION SYSTEM**

(30) Priority: 25.11.2022 CN 202211491575; 02.12.2022 CN 202211539055
(71) Applicant: Huawei Technologies Co., Ltd., Shenzhen, Guangdong 518129 (CN)
(72) Inventor: LIAO, Yousheng, Shenzhen, Guangdong 518129 (CN); ZHANG, Xianchun, Shenzhen, Guangdong 518129 (CN); YU, Haifeng, Shenzhen, Guangdong 518129 (CN); XIE, Su, Shenzhen, Guangdong 518129 (CN); FENG, Qianqian, Shenzhen, Guangdong 518129 (CN); ZHU, Changwei, Shenzhen, Guangdong 518129 (CN); KONG, Liang, Shenzhen, Guangdong 518129 (CN); ZHANG, Hao, Shenzhen, Guangdong 518129 (CN)
(74) Representative: Körber, Martin Hans
(86) International application number: PCT/CN2023/128820
(87) International publication number: WO 2024/109497

(57) **Abstract**

This application provides a wearable device management method, a related apparatus, and a communication system. The method may be applied to a wearable device that integrates a smartwatch and earphones. The smartwatch may be used as a control and management device of the earphones. A user may perform an operation on the smartwatch, to manage the smartwatch and the earphones. The user may further perform an operation on an electronic device connected to the smartwatch, to manage the smartwatch and the earphones. The foregoing method can improve use experience of the user using the wearable device, so that life convenience of the user can be improved through the wearable device.

## Description

This application claims priorities to Chinese Patent Application No. 202211491575.9, filed with the China National Intellectual Property Administration on November 25, 2022 and entitled "WEARABLE DEVICE MANAGEMENT METHOD, RELATED APPARATUS, AND COMMUNICATION SYSTEM", and to Chinese Patent Application No. 202211539055.0, filed with the China National Intellectual Property Administration on December 2, 2022 and entitled "WEARABLE DEVICE MANAGEMENT METHOD, RELATED APPARATUS, AND COMMUNICATION SYSTEM", both of which are incorporated herein by reference in their entireties.

### TECHNICAL FIELD

This application relates to the field of terminal technologies, and in particular, to a wearable device management method, a related apparatus, and a communication system.

### BACKGROUND

With development of electronic devices, wearable devices are more widely used. Wearable devices such as smartwatches and earphones make life of users more convenient.

### SUMMARY

This application provides a wearable device management method, a related apparatus, and a communication system. The method may be applied to a wearable device that integrates a smartwatch and earphones. The smartwatch may be used as a control and management device of the earphones. A user may perform an operation on the smartwatch, to manage the smartwatch and the earphones. The user may further perform an operation on an electronic device connected to the smartwatch, to manage the smartwatch and the earphones. The foregoing method can improve use experience of the user using the wearable device, so that life convenience of the user can be improved through the wearable device.

According to a first aspect, this application provides a wearable device management method. The method may be applied to a wearable device. A cover body and an audio apparatus slot that accommodates an audio apparatus are disposed in the wearable device, and a communication connection is established between the wearable device and the audio apparatus. When the cover body is closed, the wearable device displays a first interface, where the first interface includes audio apparatus information. The wearable device displays a second interface in response to a first operation on the first interface, where the second interface includes one or more audio apparatus management controls, and the audio apparatus management controls are used to manage the audio apparatus.

It can be learned from the foregoing method that the wearable device may be used as a control and management device of the audio apparatus. A user may perform an operation on the wearable device, to manage the wearable device and the audio apparatus. The foregoing method can improve user experience of using the wearable device and the audio apparatus.

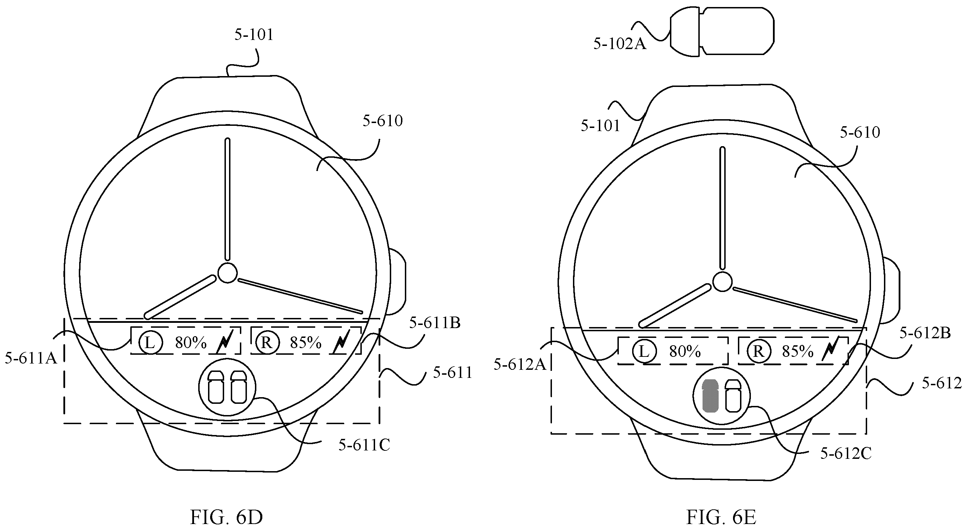

For the first interface, refer to a user interface 5-610 shown in FIG. 6D to FIG. 6F in a subsequent embodiment.

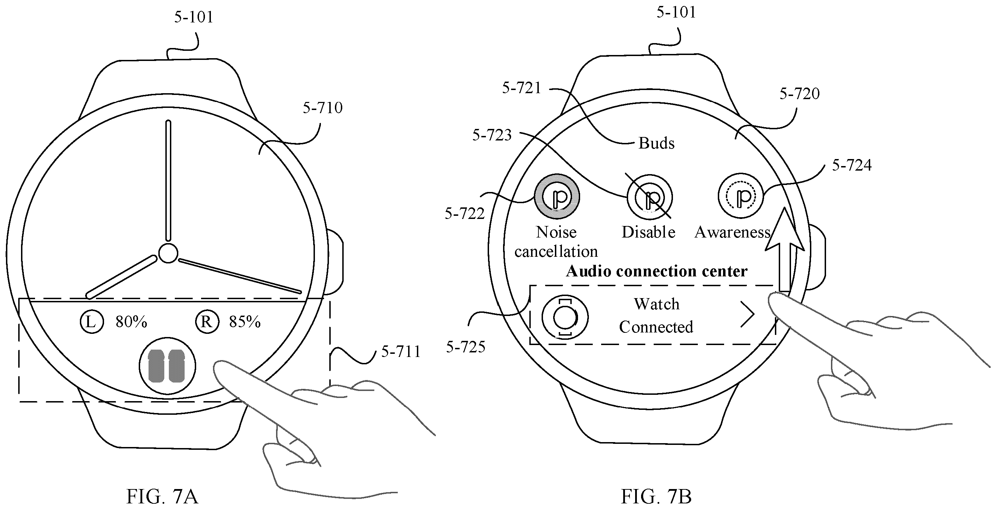

For the second interface, refer to user interfaces shown in FIG. 7B to FIG. 7G in a subsequent embodiment.

For the foregoing first operation, refer to an operation shown in FIG. 7A in a subsequent embodiment.

With reference to the first aspect, in some embodiments, the audio apparatus information may include an audio apparatus icon. The wearable device displays a third interface in response to an operation on the audio apparatus icon, where the third interface includes one or more of the following: in-position information and power information of the audio apparatus, the in-position information indicates whether the audio apparatus is placed in the audio apparatus slot, and the power information of the audio apparatus indicates power of the audio apparatus.

With reference to the first aspect, in some embodiments, the audio apparatus information includes one or more of the following: in-position information and power information of the audio apparatus, the in-position information indicates whether the audio apparatus is placed in the audio apparatus slot, and the power information of the audio apparatus indicates power of the audio apparatus.

It can be learned from the foregoing embodiments that, when the cover body of the wearable device is closed, the wearable device may display, on a screen, related information of the audio apparatus or an operation entry of viewing the related information of the audio apparatus. According to the foregoing embodiments, the user can conveniently quickly view the related information of the audio apparatus and manage the audio apparatus.

With reference to the first aspect, in some embodiments, when the cover body of the wearable device is closed, the wearable device may display the first interface. If there is no first operation on the first interface within a preset time period after the cover body is closed, the wearable device may cancel displaying the first interface. In this way, when the user does not need to view the related information of the audio apparatus or enter a management interface of the audio apparatus, interference caused by long-time display of the first interface to use the wearable device by the user can be reduced. According to the foregoing embodiments, user experience of using the wearable device and the audio apparatus can be improved.

With reference to the first aspect, in some embodiments, the audio apparatus slot includes a first audio apparatus slot and a second audio apparatus slot, and the in-position information indicates that there is an audio apparatus placed in each of the first audio apparatus slot and the second audio apparatus slot. The in-position information indicates that there is an audio apparatus placed in the first audio apparatus slot and there is no audio apparatus in the second audio apparatus slot. Alternatively, the in-position information indicates that there is an audio apparatus placed in the second audio apparatus slot and there is no audio apparatus in the first audio apparatus slot. Alternatively, the in-position information indicates that there is no audio apparatus in each of the first audio apparatus slot and the second audio apparatus slot.

It can be learned from the foregoing embodiments that the user can quickly learn an in state of the audio apparatus based on the in-position information.

With reference to the first aspect, in some embodiments, the first interface further includes wearable device information, and the wearable device information includes time display information.

For example, when the wearable device is a smartwatch, the wearable device information may include watch face display content. The audio apparatus information of the first interface may partially block the wearable device information.

With reference to the first aspect, in some embodiments, the second interface may include one or more of the following audio apparatus management controls: a noise control mode switching control, an audio apparatus-connected device management control, an audio apparatus sound effect setting control, and a left and right ear recognition control. The noise control mode switching control is used to switch a noise control mode of the audio apparatus, and the noise control mode includes a noise cancellation mode, an awareness mode, and a noise cancellation and awareness disabled mode. The audio apparatus-connected device management control is used to manage a device connected to the audio apparatus. The audio apparatus sound effect setting control is used to set a sound effect of the audio apparatus. The left and right ear recognition control is used to enable or disable a left and right ear recognition function of the audio apparatus.

With reference to the first aspect, in some embodiments, the wearable device detects a second operation, and displays a fourth interface, where the fourth interface includes one or more wearable device management controls and one or more audio apparatus management controls, and the wearable device management controls are used to manage the wearable device.

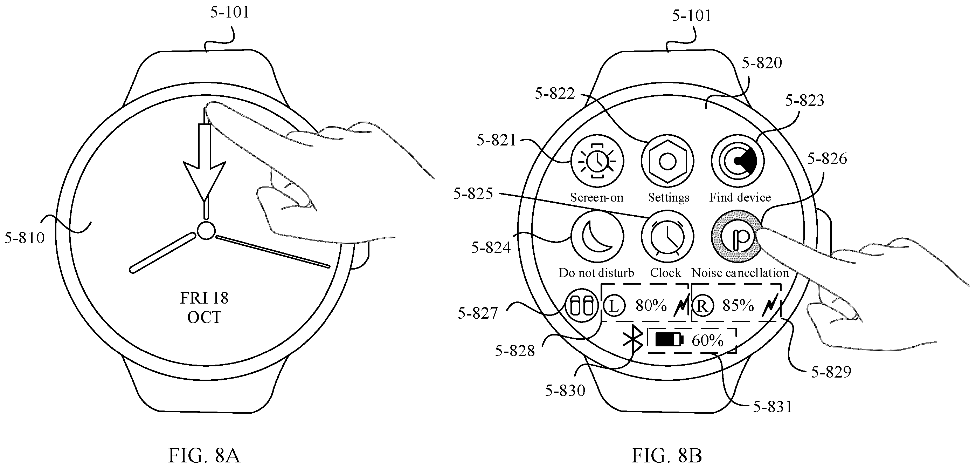

In a possible implementation, the second operation may include a screen pull-down operation performed on the wearable device. For example, the second operation may be an operation shown in FIG. 8A in a subsequent embodiment.

For the fourth interface, refer to a user interface 5-820 shown in FIG. 8B in a subsequent embodiment.

With reference to the first aspect, in some embodiments, the wearable device detects a third operation, where the third operation is used to search for the audio apparatus. When there is a communication connection established between the wearable device and the audio apparatus, the wearable device sends a first ringing instruction to the audio apparatus in response to the third operation, where the first ringing instruction instructs the audio apparatus to ring. When there is no communication connection between the wearable device and the audio apparatus, in response to the third operation, the wearable device queries a first location of the audio apparatus in a case in which the wearable device is disconnected from the audio apparatus last time, and the wearable device displays the first location.

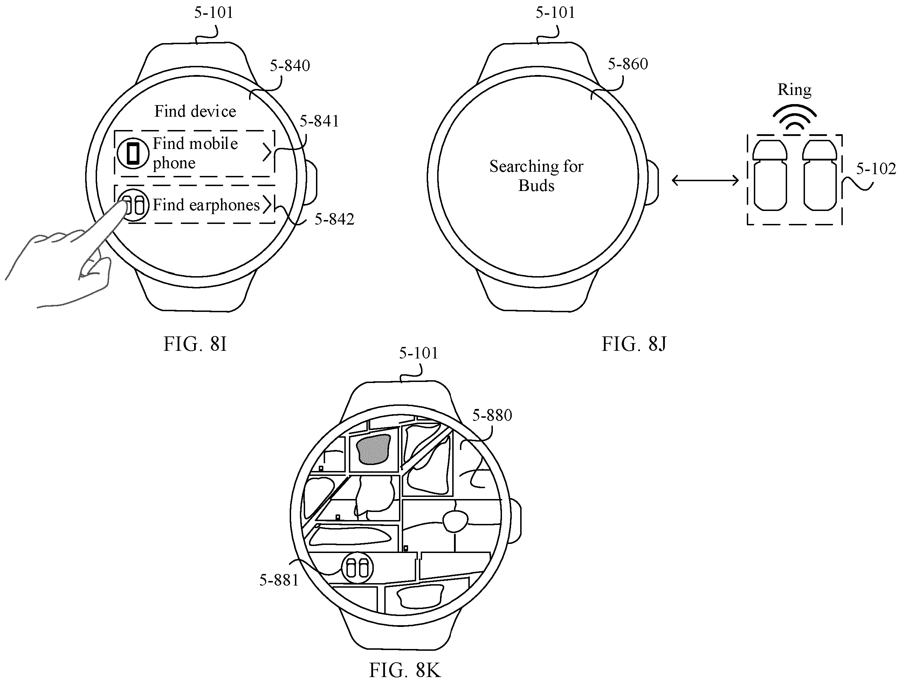

For the foregoing third operation, refer to an operation shown in FIG. 8I in a subsequent embodiment. For a scenario in which the wearable device displays the first location, refer to a scenario shown in FIG. 8K in a subsequent embodiment.

With reference to the first aspect, in some embodiments, the wearable device sends a first instruction to the audio apparatus, where the first instruction instructs the audio apparatus to establish a communication connection to a first device. The audio apparatus may establish the communication connection to the first device according to the first instruction, to play audio on the first device.

In some embodiments, the wearable device may further send, to the audio apparatus, an instruction for instructing the audio apparatus to establish a communication connection to a second device. The audio apparatus may establish the communication connection to the second device according to the instruction instructing the audio apparatus to establish the communication connection to the second device, so as to play audio on the second device.

It can be learned from the foregoing embodiments that the wearable device may manage the device connected to the audio apparatus. In this way, the user may control, through the wearable device, the audio apparatus to be connected to a specified device, so that the audio apparatus plays audio on the specified device.

With reference to the first aspect, in some embodiments, when there is a foreign matter in the audio apparatus slot, the wearable device provides a foreign matter prompt, where the foreign matter prompt indicates that there is the foreign matter in the audio apparatus slot.

In some embodiments, when there is the foreign object in the audio apparatus slot, the wearable device may disconnect a charging circuit used to charge the audio apparatus.

It can be learned from the foregoing embodiments that the wearable device may detect whether there is a foreign object in an earphone slot in a watch body, and after detecting the foreign object, disconnect the charging circuit, to give the user a prompt that the foreign object appears. This can improve security of charging the audio apparatus by the wearable device, and bring better user experience to the user.

With reference to the first aspect, in some embodiments, the wearable device is not connected to a charging apparatus, and when the audio apparatus is placed in the audio apparatus slot, the wearable device charges the audio apparatus.

With reference to the first aspect, in some embodiments, before the wearable device charges the audio apparatus, the wearable device detects that power of the wearable device is higher than a first power threshold. When the audio apparatus is placed in the audio apparatus slot, if the wearable device detects that the power of the wearable device is lower than the first power threshold, the wearable device may not charge the audio apparatus.

It can be learned from the foregoing embodiments that, when the power of the wearable device is excessively low, it is ensured that the wearable device has power as much as possible, to reduce a case in which the wearable device is automatically powered off due to power exhaustion.

With reference to the first aspect, in some embodiments, before the wearable device charges the audio apparatus, the wearable device obtains the power of the audio apparatus, and the power of the audio apparatus is lower than a second power threshold. When the audio apparatus is placed in the audio apparatus slot, if the power of the audio apparatus is higher than the second power threshold, the wearable device may not charge the audio apparatus.

It can be learned from the foregoing embodiments that the wearable device may charge the audio apparatus when the power of the audio apparatus is low. In this way, the power of the wearable device and the power of the audio apparatus can be properly allocated, and overall standby time of the wearable device and the audio apparatus can be prolonged.

With reference to the first aspect, in some embodiments, after the wearable device charges the audio apparatus, the wearable device determines whether the power of the wearable device is higher than the first power threshold; and when the power of the wearable device is higher than the first power threshold, the wearable device continues charging the audio apparatus; or when the power of the wearable device is lower than the first power threshold, the wearable device stops charging the audio apparatus.

It can be learned from the foregoing embodiments that, when the power of the wearable device is excessively low, it is ensured that the wearable device has power as much as possible, to reduce a case in which the wearable device is automatically powered off due to power exhaustion.

With reference to the first aspect, in some embodiments, after the wearable device charges the audio apparatus, the wearable device determines whether the power of the audio apparatus is lower than the second power threshold; and when the power of the audio apparatus is lower than the second power threshold, the wearable device continues charging the audio apparatus; or when the power of the audio apparatus is higher than the second power threshold, the wearable device stops charging the audio apparatus.

According to the foregoing embodiments, when the wearable device charges the audio apparatus when the wearable device is not connected to the charging apparatus, the wearable device only charges the audio apparatus to a preset power value, but does not fully charges the audio apparatus, so that the power of the wearable device and the power of the audio apparatus can be properly allocated, and overall standby time of the wearable device and the audio apparatus can be prolonged.

With reference to the first aspect, in some embodiments, the wearable device is connected to a charging apparatus, the audio apparatus is placed in the audio apparatus slot, and power from the charging apparatus is used to charge the wearable device and the audio apparatus according to a first charging time sequence. The first charging time sequence includes one or more of the following time sequences: the power from the charging apparatus is used to simultaneously charge the wearable device and the audio apparatus, the power from the charging apparatus is first used to charge the audio apparatus, and when the power of the audio apparatus reaches a third power threshold, the power from the charging apparatus is then used to charge the wearable device; and the power from the charging apparatus is first used to charge the wearable device, and when the power of the wearable device reaches a fourth power threshold, the power from the charging apparatus is then used to charge the audio apparatus.

Charging the wearable device and the audio apparatus according to the first charging time sequence can improve charging efficiency.

With reference to the first aspect, in some embodiments, the wearable device is any one of the following devices: a smartwatch, a smart band, smart glasses, a smart helmet, smart clothing, and a smart backpack.

According to a second aspect, this application provides a wearable device management method. The method may be applied to an audio apparatus, the audio apparatus is capable of being accommodated in an audio apparatus slot of a wearable device, and a communication connection is established between the audio apparatus and the wearable device. The audio apparatus receives a first instruction from the wearable device, where the first instruction instructs the audio apparatus to establish a communication connection to a first device. The audio apparatus establishes the communication connection to the first device in response to the first instruction.

It can be learned from the foregoing embodiment that the wearable device may manage the device connected to the audio apparatus. In this way, a user may control, through the wearable device, the audio apparatus to be connected to a specified device, so that the audio apparatus plays audio on the specified device.

With reference to the second aspect, in some embodiments, the audio apparatus receives first audio data from the first device. The audio apparatus plays first audio based on the first audio data.

With reference to the second aspect, in some embodiments, the audio apparatus receives a second instruction from the wearable device, where the second instruction instructs the audio apparatus to establish a communication connection to a second device. The audio apparatus establishes the communication connection to the second device in response to the second instruction. The audio apparatus receives second audio data from the second device. The audio apparatus plays second audio based on the second audio data.

With reference to the second aspect, in some embodiments, the audio apparatus receives a first ringing instruction from the wearable device. The audio apparatus rings according to the first ringing instruction. The first ringing instruction may be sent after the wearable device detects an operation of searching for the audio apparatus.

It can be learned from the foregoing embodiments that the user may search for the audio apparatus through the wearable device. This can reduce a case of losing of earphones.

With reference to the second aspect, in some embodiments, the audio apparatus includes a first audio apparatus and a second audio apparatus. The first audio apparatus and the second audio apparatus recognize a left ear and a right ear. When the first audio apparatus recognizes that the first audio apparatus is worn on the left ear, the first audio apparatus is configured to play audio of a left channel. When the second audio apparatus recognizes that the second audio apparatus is worn on the right ear, the second audio apparatus is configured to play audio of a right channel.

It can be learned from the foregoing embodiments that the first audio apparatus and the second audio apparatus may be worn on the left ear and the right ear of the user. The first audio apparatus and the second audio apparatus may have a left and right ear recognition function. In this way, the user does not need to distinguish whether the first audio apparatus should be worn on the left ear or the right ear, and does not need to distinguish whether the second audio apparatus should be worn on the left ear or the right ear. According to the foregoing embodiments, user experience of using the audio apparatus can be improved.

With reference to the second aspect, in some embodiments, the audio apparatus detects a fourth operation performed on a first area, where the first area includes an area in which an ear wearing the audio apparatus is located. The audio apparatus performs, in response to the fourth operation, one or more types of the following control: switching a noise control mode, pausing audio playing, resuming audio, switching audio playing, adjusting volume, answering a call, and hanging up a call.

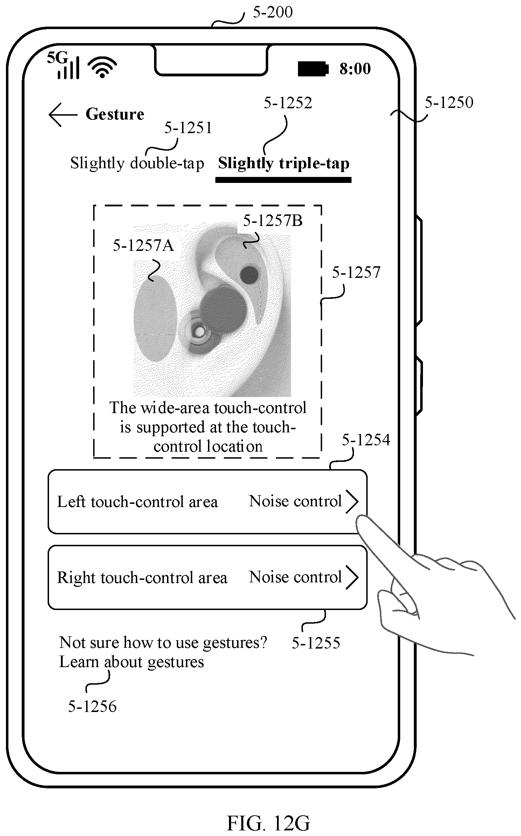

The first area may include a touch-control area 5-1257A and a touch-control area 5-1257B shown in FIG. 12G in a subsequent embodiment.

With reference to the second aspect, in some embodiments, the audio apparatus is any one of the following devices: earphones, a mini sound box, and a portable music player.

According to a third aspect, this application provides a wearable device. An audio apparatus slot accommodating an audio apparatus is disposed in the wearable device. The wearable device includes a communication apparatus, a memory, and a processor. The communication apparatus may be configured to establish a communication connection between the wearable device and the audio apparatus. The memory may be configured to store a computer program. The processor may be configured to invoke the computer program, for the wearable device to perform the method according to any possible implementation of the first aspect.

According to a fourth aspect, this application provides an audio apparatus. The audio apparatus is capable of being accommodated in an audio apparatus slot of a wearable device. The audio apparatus includes a communication apparatus, a memory, and a processor. The communication apparatus may be configured to establish a communication connection between the audio apparatus and the wearable device. The memory may be configured to store a computer program. The processor may be configured to invoke the computer program, for the audio apparatus to perform the method according to any possible implementation of the second aspect.

According to a fifth aspect, this application provides a computer-readable storage medium, including instructions. When the instructions are run on an electronic device, the electronic device is enabled to perform the method according to any possible implementation of the first aspect or the second aspect.

According to a sixth aspect, this application provides a computer program product. The computer program product may include computer instructions. When the computer instructions are run on an electronic device, the electronic device is enabled to perform the method according to any possible implementation of the first aspect or the second aspect.

According to a seventh aspect, this application provides a chip. The chip is used in an electronic device, the chip includes one or more processors, and the processor is configured to invoke computer instructions to enable the electronic device to perform the method according to any possible implementation of the first aspect or the second aspect.

It may be understood that the wearable device provided in the third aspect, the audio apparatus provided in the fourth aspect, the computer-readable storage medium provided in the fifth aspect, the computer program product provided in the sixth aspect, and the chip provided in the seventh aspect are all configured to perform the method provided in embodiments of this application. Therefore, for beneficial effects that can be achieved, refer to beneficial effects in the corresponding method. Details are not described herein again.

### BRIEF DESCRIPTION OF DRAWINGS

FIG. 1 to FIG. 4 show examples of a wearable device including a wireless audio apparatus;
FIG. 5A to FIG. 5D are diagrams of some device connection manners according to an embodiment of this application;
FIG. 6A to FIG. 6F are some diagrams of a scenario of managing a cover open/closed state of a smartwatch 5-101 according to an embodiment of this application;
FIG. 7Ato FIG. 7G are some diagrams of a scenario in which earphones 5-102 are managed through a smartwatch 5-101 according to an embodiment of this application;
FIG. 8A to FIG. 8K are some other diagrams of a scenario in which earphones 5-102 are managed through a smartwatch 5-101 according to an embodiment of this application;
FIG. 9A to FIG. 9D are some other diagrams of a scenario in which earphones 5-102 are managed through a smartwatch 5-101 according to an embodiment of this application;
FIG. 10A to FIG. 10I are some diagrams of a scenario in which playing audio with a sound by earphones 5-102 is managed through a smartwatch 5-101 according to an embodiment of this application;
FIG. 11A to FIG. 11K are some diagrams of a scenario in which power management is performed on a wearable device according to an embodiment of this application;
FIG. 11L is a flowchart of a power management method for a wearable device according to an embodiment of this application;
FIG. 11M is a flowchart of another power management method for a wearable device according to an embodiment of this application;
FIG. 12A to FIG. 12I are some diagrams of a scenario in which a wearable device is managed through an electronic device 5-200 according to an embodiment of this application;
FIG. 13 is a flowchart of a gesture recognition model training method according to an embodiment of this application;
FIG. 14 is a flowchart of a method in which an earphone 5-102 provides a wide-area touch-control function according to an embodiment of this application;
FIG. 15 is a software architecture of a watch and earphones according to an embodiment of this application;
FIG. 16 is a diagram of a structure of an electronic device 5-200 according to an embodiment of this application;
FIG. 17 is a diagram of a structure of a wearable device accommodating an audio apparatus according to an embodiment of this application; and
FIG. 18 is a diagram of a structure of an audio apparatus according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe purposes of specific embodiments, but are not intended to limit this application. The terms "one", "a", and "this" of singular forms used in this specification and the appended claims of this application are intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B each may be singular or plural. The character "/" generally indicates an "or" relationship between associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and variants of the terms all mean "include but are not limited to", unless otherwise specifically emphasized in another manner. The term "connection" includes a direct connection and an indirect connection, unless otherwise indicated. "First" and "second" are merely intended for a purpose of description, and shall not be understood as an indication or implication of relative importance or implicit indication of a quantity of indicated technical features.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a relative concept in a specific manner.

A term "user interface (user interface, UI)" in the following embodiments of this application is a medium interface for interaction and information exchange between an application (application, APP) or an operating system (operating system, OS) and a user, and implements conversion between an internal form of information and a form that can be accepted by the user. The user interface is source code written in a specific computer language like Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

Embodiments of this application provide a wearable device including a wireless audio apparatus, to form a new product form in which the wearable device and the audio apparatus are integrated, so that a user can easily obtain both the wearable device and the audio apparatus. Based on the new product form, an embodiment of this application provides a wearable device management method. In addition to providing new user experience, this application implements simple and efficient human-machine interaction. The wearable device and the audio apparatus may be treated as one device. The audio apparatus may be considered as a microphone and speaker of the wearable device, and the wearable device may alternatively serve as a display device and micro control center of the audio apparatus. In this way, the user can perform visual control such as volume adjustment, incoming call answering, and music playing on audio playing. The wearable device may be further used as a charger of the audio apparatus, and the like.

The following first describes the new product form and typical product features and functions, and then describes the wearable device management method provided in embodiments of this application based on the new product form one by one.

### New product form

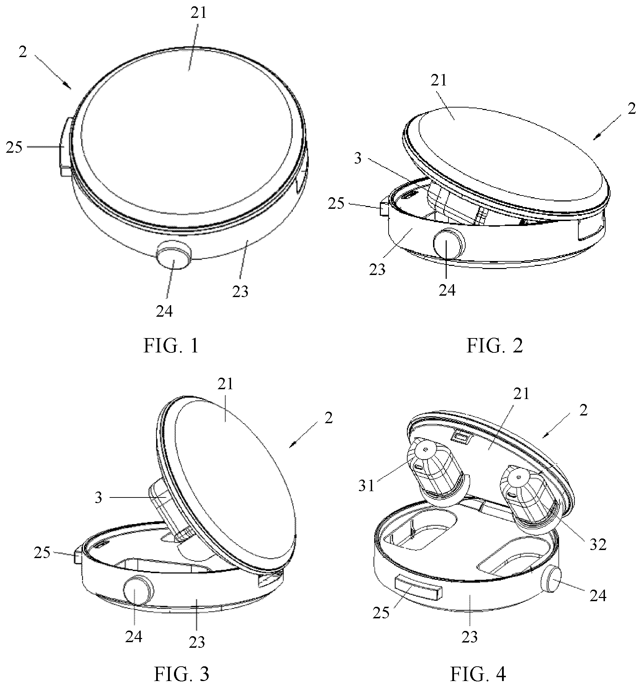

FIG. 1 to FIG. 4 show examples of a wearable device including a wireless audio apparatus, and provide a new product form in which the wearable device and the audio apparatus are integrated. The audio apparatus may be earphones, including but not limited to Bluetooth earphones (for example, true wireless stereo (true wireless stereo, TWS) earphones). Certainly, the audio apparatus may alternatively be another audio apparatus, for example, a mini sound box or a portable music player. The wearable device may be an electronic device like a smartwatch, an electronic sphygmomanometer, a smart band, a smart helmet, smart clothing, smart glasses, a mobile wireless fidelity (wireless-fidelity, Wi-Fi) device, or a smart backpack. The following uses an example in which the wearable device is a smartwatch and the audio apparatus is earphones for description.

As shown in FIG. 1 to FIG. 4, the wearable device 1 may include a host 2 and earphones 3. Here, "include" means that the earphones 3 may be accommodated in the host 2.

The host 2 may include a first part 21 and a second part 23. The first part 21 may be referred to as a cover body, and the second part 23 may be referred to as a main body. The host 2 may further include a wrist strap, and the wrist strap may be connected to two opposite sides of the second part 23. The earphones 3 may include a first earphone 31 and a second earphone 32. Structures of the first earphone 31 and the second earphone 32 may be completely consistent.

FIG. 1 shows that the host 2 is in a closed state. In this case, the first part 21 and the second part 23 are closed. When the host 2 is closed, the first part 21 and the second part 23 may enclose accommodation space, and the earphones 3 are accommodated in the accommodation space. A groove part that is of the second part 23 and that participates in forming the accommodation space may be referred to as an earphone compartment, and may specifically include a left-ear earphone compartment and a right-ear earphone compartment. The earphone compartment may also be referred to as an earphone slot.

FIG. 2 to FIG. 4 show that the host 2 is in an open state. In this case, the first part 21 may be opened at a specific angle relative to the second part 23. For example, an opening angle a of the first part 21 in FIG. 2 may be approximately 15 degrees. An opening angle b of the first part 21 in FIG. 3 may be approximately 75 degrees. It may be understood that a specific value of an opening angle in a case in which the first part 21 is at an extreme location may be designed based on a product requirement, for example, may be greater than or equal to 90 degrees. This is not limited to the foregoing description. As shown in FIG. 2 to FIG. 4, when the host 2 is in the open state, the earphones 3 may be detached from the second part 23 and attached to the first part 21. This design facilitates a user to take out and place the earphones 3. The attachment may be implemented by magnetically attracting an earphone magnet by an attracting magnet mounted on the first part 21. Certainly, when the host 2 is in the open state, the earphones 3 may alternatively not be detached from the second part 23, but are accommodated in the earphone compartment in the second part 23.

Not limited to the open state shown in FIG. 2 to FIG. 4, that the host 2 is in the open state may alternatively mean another state. For example, the first part 21 translates relative to the second part 23 until projections of the first part 21 and the second part 23 on a same plane do not overlap or slightly overlap. In this way, the earphones located in the earphone compartment in the second part 23 are fully exposed to the outside and available to the user.

As shown in FIG. 1 to FIG. 3, the host 2 may further include a function button 24 and an open button 25. The function button 24 is configured to be pressed and/or rotated by the user, so that the host 2 implements a corresponding function, for example, selection, confirmation, or image display switching. The function button 24 may be, for example, a power-on/off button. The open button 25 may be mounted on the second part 23. The open button 25 may have a lock structure, so that the open button 25 can cooperate with a lock structure in the first part 21 to implement unlocking and locking of the host 2. Alternatively, the open button 25 may be mounted on the first part. In this case, the second part also has a lock structure. The opening button cooperates with the lock structure in the second part, to implement unlocking and locking of the host.

It may be understood that the wearable device may have an audio apparatus slot. The audio apparatus slot may be configured to accommodate the audio apparatus. The audio apparatus may include a first audio apparatus and a second audio apparatus. When the audio apparatus is an earphone, the first audio apparatus may be the first earphone 31, and the second audio apparatus may be the second earphone 32. The audio apparatus slot may also include a first audio apparatus slot and a second audio apparatus slot. The first audio apparatus slot and the second audio apparatus slot may be configured to accommodate the first audio apparatus and the second audio apparatus. When the audio apparatus is earphones, the audio apparatus slot may be the earphone compartment (or the earphone slot). The first audio apparatus slot may be the left-ear earphone compartment. The second audio apparatus slot may be the right-ear earphone compartment.

The foregoing section briefly describes composition of the wearable device including the wireless audio apparatus. A person skilled in the related art can further understand typical product features and functions of the wearable device from the following content.

### Typical product features and functions

1. When the host 2 is opened, the earphones 3 are attracted to the first part 21 of the host 2.

Refer to FIG. 1 and FIG. 4. When the host 2 is in the closed state, the earphones 3 are accommodated in the space enclosed by the first part 21 and the second part 23. The first part 21 may have a first host attracting magnet, and a magnet (also referred to as an earphone magnet) may also be correspondingly configured in the earphones 3. Refer to FIG. 1 to FIG. 4. When the host 2 is gradually opened from the closed state, because there is a magnetic attraction force between the earphone magnet and the first host attracting magnet, the earphones 3 are attracted to the first part 21.

The second part 23 may have a second host attracting magnet, and the second host attracting magnet may also be magnetically attracted to the earphone magnet. Comparatively, a magnetic field of the first host attracting magnet is stronger, and the magnetic attraction force between the first host attracting magnet and the earphone magnet is larger; and a magnetic field of the second host attracting magnet is weaker, and a magnetic attraction force between the second host attracting magnet and the earphone magnet is smaller. When the host 2 is gradually opened from the closed state, because the magnetic attraction force of the first host attracting magnet is greater than the magnetic attraction force of the second host attracting magnet, the earphones 3 are attracted to the first part 21, and rotate relative to the second part 23 with the first part 21.

2. Detection of the open/closed state of the host 2

A status detection magnet may be mounted in the second part 23 of the host 2.

The first part 21 of the host 2 may have a magnetic field sensor. The magnetic field sensor may be referred to as a first magnetic field sensor, and is configured to detect a magnetic flux of the status detection magnet in the second part 23 of the host 2. The magnetic flux that is of the status detection magnet and that is detected by the first magnetic field sensor may be directly proportional to a spacing between the first magnetic field sensor and the status detection magnet. When the host 2 is in the closed state, the first magnetic field sensor detects a maximum magnetic flux. After the host 2 is completely opened, the first magnetic field sensor detects a minimum magnetic flux.

When the host 2 is gradually opened from the closed state, the spacing between the first magnetic field sensor and the status detection magnet gradually increases, and the magnetic flux that is of the status detection magnet and that is detected by the first magnetic field sensor tends to decrease. When the magnetic flux detected by the first magnetic field sensor is less than a first threshold, it may be considered that the host 2 is in the open state.

On the contrary, when the host 2 is gradually closed from the open state, the spacing between the first magnetic field sensor and the status detection magnet gradually decreases, and the magnetic flux that is of the status detection magnet and that is detected by the first magnetic field sensor tends to increase. When the magnetic flux detected by the first magnetic field sensor is greater than a second threshold, it may be considered that the host 2 is in the closed state.

When it is determined that the host 2 is in the open state, a display on the host 2 may perform corresponding interface display.

When it is determined that the host 2 is in the open state and the earphones 3 are in the host 2 (how to detect whether the earphones 3 are located in the host 2 is described below), a communication electrode of the host 2 may send a signal to a communication electrode of the earphones 3, to wake up the earphones 3. When it is determined that the host 2 is in the closed state and the earphones 3 are located in the host 2, the host 2 may start foreign object detection, and start charging of the earphones 3 after determining that no foreign object enters the host 2.

Locations of the first magnetic field sensor and the status detection magnet may be interchanged. To be specific, the first magnetic field sensor may be in the second part 23, and the status detection magnet may be in the first part 21.

Not limited to the status detection magnet and the magnetic field sensor, the open/closed state of the host 2 may be further detected in another detection manner. For example, a pair of contact detection spring plates may be respectively configured on the first part 21 and the second part 23, and whether the host 2 is in the closed state or the open state may be determined based on a detected contact state. For another example, a pair of an infrared transmitter and an infrared receiver may be respectively configured on the first part 21 and the second part 23, and whether the host 2 is in the closed state or the open state may be determined based on received signal strength.

When it is detected that the host 2 is in the open state, the host 2 may perform corresponding interface display on the display 211. The interface display is described in detail in the following embodiments. Details are not described here.

3. In-position detection of the earphones 3

An in-position status of the earphones 3 may include: Two earphones are in compartments, a single earphone is in a compartment, and the two earphones are not in the compartments (including a case in which the two earphones are attracted to the first part 21). Here, a "compartment" is an earphone compartment that is in the second part 23 and that is configured to accommodate an earphone. There may be two earphone compartments, and the first earphone 31 and the second earphone 32 may be respectively accommodated in different earphone compartments.

The in-position detection of the earphones may be performed by the host 2. The second part 23 of the host 2 may have a magnetic field sensor. The magnetic field sensor may be referred to as a second magnetic field sensor, and is configured to detect a change of a magnetic flux of the earphone magnet in the earphones. The two earphone compartments in the second part 23 may be respectively provided with magnetic field sensors, and are respectively configured to detect in-position statuses of the first earphone 31 and the second earphone 32. The magnetic flux that is of the earphone magnet and that is detected by the second magnetic field sensor may be directly proportional to a spacing between the second magnetic field sensor and the earphone magnet. When the magnetic flux detected by the second magnetic field sensor is large, for example, greater than a specific threshold, it may be considered that the earphones are in the compartment. When the magnetic flux detected by the second magnetic field sensor is small, for example, less than the specific threshold, it may be considered that the earphones are not in the compartment.

The in-position detection of the earphones may alternatively be performed by the earphones. The earphones may also have a magnetic field sensor. The magnetic field sensor may be referred to as a third magnetic field sensor, and may be configured to detect a change in the magnetic flux of the status detection magnet in the second part 23 of the host 2. The magnetic flux that is of the status detection magnet and that is detected by the third magnetic field sensor may be directly proportional to a spacing between the third magnetic field sensor and the status detection magnet. When the earphones are in the compartment, the magnetic flux detected by the third magnetic field sensor is large, for example, greater than a specific threshold. When the earphones are not in the compartment, the magnetic flux detected by the third magnetic field sensor is small, for example, less than the specific threshold.

The host 2 may display the in-position status of the earphones 3 on the display 211. For example, when the user presses the function button 24 to light up the display 211, an in-position earphone is displayed on the display 211, and an out-of-position earphone is displayed to be in a "vacant" state. The in-position status of the earphones 3 may also be displayed on an electronic device like a mobile phone that is paired with and connected to the wearable device. Display of the in-position status of the earphones is described in detail in subsequent embodiments. Details are not described here.

### 4. Charging

The earphones may have a charging electrode. After the earphones are placed in the earphone compartment, the charging electrode can be in contact with a charging electrode in the earphone compartment, to obtain power supply.

When the host 2 is not coupled to an external power supply, the host 2 supplies power to the earphones. When the host 2 is coupled to the external power supply, the host 2 and the earphones may be charged together. The earphones may be in contact with the charging electrode in the earphone compartment through the charging electrode of the earphones, to obtain power supply from the external power supply. A manner of charging through the external power supply may be wired charging or wireless charging. To implement wireless charging, the host 2 (for example, the bottom of the second part 23 of the host 2) needs to be provided with a wireless charging coil.

Here, coupling the external power supply may mean that the external power supply is directly connected in a wired manner or is in an effective contact range that is required by wireless charging and that is from the external power supply through the wireless charging coil.

Charging of the host 2 and the earphones may be further optimized based on a specific scenario. A charging method is described in the following embodiments. Details are not described here.

Not limited to the typical features and functions described in the foregoing 1 to 4, the wearable device including the wireless audio apparatus may further have other features or functions, for example, a foreign object detection function and charging overheat protection.

The following describes, by using an example in which the wearable device is a watch and the wireless audio apparatus is Bluetooth earphones, the wearable device management method provided in embodiments of this application based on the wearable device including the wireless audio apparatus.

**Before the wearable device management method is described, several device connection manners are first described. A wireless communication connection in a device connection manner may be a Bluetooth connection, a Wi-Fi connection, or the like, or a combination of a plurality of wireless communication connections.**

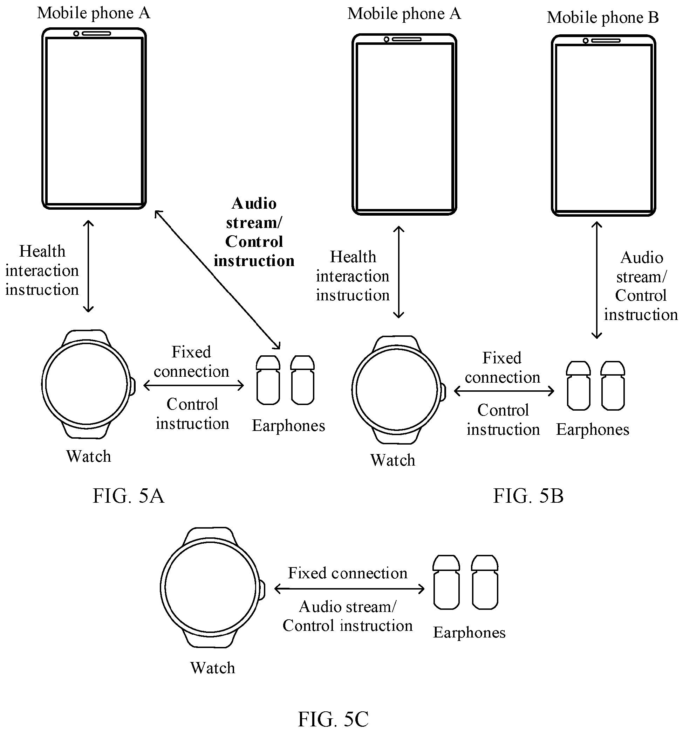

**FIG. 5A** **shows a first connection manner, which may be vividly referred to as a "triangular connection".** The "triangular connection" may be established based on a method of "one-time pairing of an entire device", or may be converted from a "U-shaped connection". This will be described in the following content. Details are not described here.

In the "triangular connection", wireless communication connections are established between a watch and earphones, between the watch and a mobile phone A, and between the mobile phone A and the earphones. Certainly, the mobile phone may be replaced with another electronic device, for example, a tablet computer, a notebook computer, a smart television, or a large-screen device.

A connection between the watch and the earphones may be referred to as a "fixed connection", and establishment of the connection may be automatically performed by a device, and does not need to be triggered by a user, thereby reducing use complexity. For example, when the watch is powered on for the first time and the earphones are in position, the connection may be automatically established. For the user, the connection seems to "exist naturally", and therefore is referred to as a "fixed connection (or an inherent connection)".

The "fixed connection" may be used for data transmission between the watch and the earphones. In a direction from the watch to the earphones, transmitted data may include a noise cancellation instruction and a volume control instruction. The control instruction may be generated when the user performs a control operation on the watch or the mobile phone A by using a series of graphical user interfaces. In the direction from the watch to the earphones, the transmitted data may further include an audio stream, to trigger the earphones to play audio on the watch. In a direction from the earphones to the watch, transmitted data may include earphone status information like power of the earphones, wearing detection data, and the like. The wearing detection data may include detection data about whether the earphones are worn, and include detection data such as a wearing direction and displacement in a wearing process that are obtained through a motion sensor like a gyroscope. The latter detection data may be used to recognize left and right earphones. The "fixed connection" may be further used by the earphones to forward data between the mobile phone A and the watch, for example, health interaction data.

The connection between the watch and the mobile phone A may be used for data transmission between the watch and the mobile phone A. In a direction from the mobile phone A to the watch, transmitted data may include an exercise report, a reminder, and the like in the health interaction data. In a direction from the watch to the mobile phone A, transmitted data may include device information (for example, MAC addresses and device names) of the watch and the earphones, statuses of the watch and the earphones (for example, power and an earphone in-position status), exercise data and physiological data such as blood oxygen and a heart rate in the health interaction data, and the like. In the direction from the watch to the mobile phone A, a connection between the watch and the mobile phone A may be further used to transmit an audio control instruction from the watch, for example, a music playing instruction like a previous/next track instruction, and a call control instruction like an answering/declining instruction, to trigger the mobile phone A to switch music, answer/decline an incoming call, and the like, and finally affect sound rendered by the earphones. In other words, for audio of the mobile phone A, the user may perform a control operation on the watch.

A connection between the mobile phone A and the earphones may be used for data transmission between the mobile phone A and the earphones. In a direction from the mobile phone A to the earphones, transmitted data may include an audio stream, for example, a streaming audio stream generated during music playing, and a voice audio stream generated during a call. This is not limited thereto. The connection may also be used by the mobile phone A to directly transmit a noise cancellation instruction or a volume decrease/increase instruction to the earphones. In a direction from the earphones to the mobile phone A, transmitted data may include audio collected by a microphone of the earphones, for example, voice audio collected by the microphone of the earphones in a call scenario, or a voice instruction like a "previous/next track" instruction in a music playing scenario. The connection may also be used by the earphones to directly transmit earphone status information such as the power of the earphones, the wearing detection data, and the like to the mobile phone A.

In the "triangle connection", after receiving the data from the earphones, the watch may correspondingly display the data on a watch screen, so that the user can learn about an earphone status like the power of the earphones and a wearing status of the earphones. After receiving the data from the watch, the mobile phone A may correspondingly display the data on a screen of the mobile phone A, so that the user learns of statuses of the watch and the earphones (for example, power and whether the earphones are in position), an exercise status (for example, a running speed) of the user, a physiological status (for example, the blood oxygen and the heart rate) of the user, and the like. A related user interface will be described in detail in the subsequent implementations. Details are not described here.

It can be learned that in the "triangle connection", the earphones may play audio from the watch or the mobile phone A. The "triangle connection" allows the user to control, through the watch, audio playing on the mobile phone A and answer/decline an incoming call of the mobile phone A, and the user does not need to find the mobile phone A (which may be placed in a bag) to perform these control operations.

**FIG. 5B** **shows a second connection manner, which may be vividly referred to as a "U-shaped connection".** The "U-shaped connection" may be generated because earphones independently perform pairing with a mobile phone or an entire device of a watch and the earphones changes a mobile phone. This will be described in the following content. Details are not described here.

In the "U-shaped connection", wireless communication connections are established between the watch and the earphones, between the watch and a mobile phone A, and between the earphones and a mobile phone B.

A "fixed connection" between the watch and the earphones may be used for data transmission between the watch and the earphones. In a direction from the watch to the earphones, transmitted data may include an audio control instruction like a noise cancellation instruction and a volume decrease/increase instruction, and an audio stream sent by the watch to the earphones. In a direction from the earphones to the watch, transmitted data may include power of the earphones, wearing detection data, and the like. In addition, in the direction from the earphones to the watch, the transmitted data may further include device information of the mobile phone B connected to the earphones, for example, a device name and a device model. In other words, even if the watch is not connected to the mobile phone B in the "U-shaped connection", the watch can still learn of information about the mobile phone connected to the earphones.

The connection between the watch and the mobile phone A may be used for data transmission between the watch and the mobile phone A. In a direction from the mobile phone A to the watch, transmitted data may include an exercise report, a reminder, and the like in the health interaction data. In a direction from the watch to the mobile phone A, transmitted data may include device information (for example, MAC addresses and device names) of the watch and the earphones, statuses of the watch and the earphones (for example, power and an earphone in-position status), exercise data and physiological data such as blood oxygen and a heart rate in the health interaction data, and the like.

A connection between the mobile phone B and the earphones may be used by the mobile phone B to transmit, to the earphones, an audio stream, for example, a streaming audio stream generated during music playing or a voice audio stream generated during a call. This is not limited thereto. The connection may also be used by the mobile phone B to directly transmit a control instruction like a noise cancellation instruction or a volume decrease/increase instruction to the earphones. The connection between the mobile phone B and the earphones may be used by the earphones to transmit device information (for example, a device name) of the earphones, a status (for example, the power) of the earphones, the wearing detection data, and the like to the mobile phone B. The connection may be further used by the earphones to transmit, to the mobile phone B, audio collected by a microphone of the earphones, for example, voice audio collected by the microphone of the earphones in a call scenario, or a voice instruction like a "previous/next track" instruction in a music playing scenario.

In the "U-shaped connection", after receiving the data from the earphones, the watch may correspondingly display the data, so that the user can learn about an earphone status like the power of the earphones and a wearing status of the earphones. After receiving the data from the watch, the mobile phone A may correspondingly display the data on a screen of the mobile phone A, so that the user learns of statuses of the watch and the earphones (for example, power and whether the earphones are in position), an exercise status (for example, a running speed) of the user, a physiological status (for example, the blood oxygen and the heart rate) of the user, and the like. After receiving the data from the earphones, the mobile phone B may correspondingly display the data on a screen of the mobile phone B, so that the user learns of the earphone status (for example, the power). A related user interface will be described in detail in the subsequent implementations. Details are not described here.

It can be learned that, different from the "triangular connection", in the "U-shaped connection", the earphones and the watch are no longer connected to a same mobile phone, but are respectively connected to different mobile phones. The "U-shaped connection" allows the user to use the earphones to play audio of the mobile phone B, and use the watch to exchange health data with the mobile phone A. In other words, the watch and the earphones may serve different devices.

Further, the "U-shaped connection" can further provide richer user experience.
1. The user may also control, through the watch, the earphones to play audio on the mobile phone B, for example, control, through the watch, the earphones to play a next track of music on the mobile phone B, answer an incoming call of the mobile phone B, and the like. In other words, the "fixed connection" between the watch and the earphones may further serve music playing and incoming call answering/declining of the mobile phone B.

Details are described below.

In the direction from the earphones to the watch, the "fixed connection" may be used to transmit interface description information of a music playing interface and an incoming call screen from the mobile phone B, for example, a music name and a play control name, for example, a name, an incoming call number, and a home location of a calling party. Correspondingly, the watch may display a music playing interface and an incoming call screen on the watch based on the interface description information, so that the user can control, through the watch, audio playing of the mobile phone B. However, because a screen of the watch and the screen of the mobile phone B are usually different in size, shape, and the like, the music playing interface/incoming call screen displayed on the watch is naturally different from the music playing interface/incoming call screen displayed on the mobile phone B, even if both the watch and the mobile phone B provide a user interface for same audio.

In addition, in the direction from the watch to the earphones, the "fixed connection" may be used to transmit an audio control instruction from the watch, for example, a music playing instruction like a previous/next track instruction, and a call control instruction like an answering/declining instruction. These control instructions are generated when the user performs a control operation on the watch by using the music playing interface and the incoming call screen. Then, these instructions are forwarded to the mobile phone B through the earphones, to trigger the mobile phone B to switch music, answer/decline an incoming call, and the like, and finally affect sound rendered by the earphones. In other words, for audio of the mobile phone B, the mobile phone B needs to be notified of the control operation performed by the user on the watch B through the earphones, so that the mobile phone B can learn of a control requirement of the user, and perform corresponding music playing control and call control.

To avoid a conflict that occurs when both the mobile phone A and the mobile phone B need to use the watch to display an interface, the watch may preferentially display an interface for the mobile phone A, or may display an interface for the mobile phone B in a manner such as a small window or a floating window while displaying an interface for the mobile phone A in full screen. An interface to be displayed may be further determined based on a function selected by the user on the watch. For example, if the user selects "Health", health interaction data between the watch and the mobile phone A is displayed. If the user selects "Current music", audio of the mobile phone B currently played by the earphones is displayed. In actual application, the conflict may alternatively be resolved according to another policy. This is not limited herein.

2. The user may also use the earphones to play audio of the mobile phone A, and control, through the watch, the earphones to play the audio on the mobile phone A.

Details are described below.

The communication connection between the watch and the mobile phone A and the "fixed connection" between the watch and the earphones may be further used to transmit the audio stream of the mobile phone A. In other words, the audio stream of the mobile phone A may be forwarded to the earphones through the watch, to implement rendering and playing.

In addition, in the direction from the mobile phone A to the watch, the communication connection between the watch and the mobile phone A may be further used to transmit interface description information of a music playing interface and an incoming call screen of the mobile phone A to the watch. Correspondingly, the watch may display a music playing interface and an incoming call screen on the watch based on the interface description information, so that the user controls, through the watch, audio playing of the mobile phone A. In the direction from the watch to the mobile phone A, the communication connection between the watch and the mobile phone A may be further used to transmit an audio control instruction generated by the user on the watch, for example, a music playing instruction like a previous/next track instruction, and a call control instruction like an answering/declining instruction, to trigger the mobile phone A to switch music, answer/decline an incoming call, and the like, and finally affect sound rendered by the earphones. The "fixed connection" may be further used to transmit a volume control instruction, a noise cancellation instruction, and the like from the mobile phone A, to control the earphones to adjust volume, perform noise cancellation, and the like.

To avoid a conflict that occurs when both the mobile phone A and the mobile phone B need to use the earphones to play audio, the watch may receive, only when the mobile phone B does not use the earphones to play audio, an audio stream from the mobile phone A and forward the audio stream to the earphones. In other words, the earphones may preferentially play the audio of the mobile phone B. The watch may determine, based on an audio service priority, which audio is to be preferentially played. For example, a priority of a phone call is higher than a priority of music, and the watch and the mobile phone agree on this priority policy. For example, if the mobile phone A receives an incoming call when the mobile phone B plays music, the watch may send a playing pause instruction to the mobile phone B through the earphones, and forward an audio stream of the mobile phone A to the earphones. In actual application, the conflict may alternatively be resolved according to another policy. This is not limited herein.

**FIG. 5C** **shows a third connection manner, namely, the "fixed connection" mentioned above.** The "fixed connection" may be generated due to automatic pairing of a watch and earphones. This will be described in the following content. Details are not described here.

A scenario to which the "fixed connection" is applicable may be an exercise scenario. In the exercise scenario, the earphones may play audio from the watch. The "fixed connection" may be mainly used to transmit an audio stream that is sent by the watch to the earphones and a control instruction like a noise cancellation instruction or a volume decrease/increase instruction. Certainly, the "fixed connection" may further be used to transmit power of the earphones and wearing detection data that are sent by the earphones to the watch, a voice instruction collected by a microphone of the earphones, for example, a voice instruction like a "previous/next track" instruction in a music playing scenario, and the like.

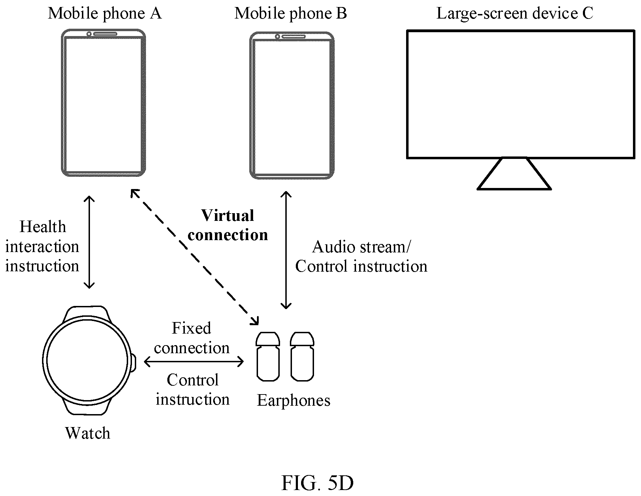

**FIG. 5D** **shows a fourth connection manner, which may be vividly referred to as "2+1 connection".** "2+1" in the "2+1 connection" is described from a perspective of earphones, where "2" indicates two physical connections respectively established between the earphones and a watch and between the earphones and a mobile phone, and "1" indicates a virtual connection established between the earphones and another device (for example, a large-screen device).

If the watch and earphones are connected to a same mobile phone, for example, a mobile phone A, the "2+1 connection" is a "triangle connection" plus a virtual connection. If the watch and the earphones are respectively connected to different mobile phones, for example, mobile phones A and B, the "2+1 connection" is a "U-shaped connection" plus a virtual connection.

The "2+1 connection" may be generated because the earphones are paired with and connected to a new mobile phone, and keep a virtual connection with an old mobile phone. This will be mentioned in the following content. Details are not described here.

Not limited to one virtual connection, the earphones can further establish more virtual connections with more devices, to form a "2+2 connection", a "2+3 connection", or even a more complex communication architecture. In this way, the Bluetooth earphone can automatically switch, through the virtual connection, to process audio services of a plurality of electronic devices. Technologies of the "2+1 connection", the "2+2 connection", and even the "2+3 connection" are not limited in this application. For example, Bluetooth dual-connection and Bluetooth multi-connection technologies recorded in the following two patent documents may be used: Chinese Patent Application No. 201910314715.7, entitled "BLUETOOTH CONNECTION METHOD, DEVICE, AND SYSTEM", and Chinese Patent Application No. 202011292453.8, entitled "AUDIO CONTROL SYSTEM". The entire content of the two patent documents is hereby incorporated herein by reference.

This application provides a wearable device management method. The method may be applied to a wearable device provided in this application and an audio apparatus that can be accommodated in the wearable device. A smartwatch 5-101 may be used as a control and management device of earphones 5-102. A user may perform an operation on the smartwatch 5-101, to manage the smartwatch 5-101 and the earphones 5-102. Optionally, the user may further perform an operation on an electronic device 5-200 connected to the smartwatch 5-101, to manage the smartwatch 5-101 and the earphones 5-102.

The management of the smartwatch 5-101 may include: managing an open/closed state of a watch cover of the smartwatch 5-101, managing a charging status of the smartwatch 5-101, managing a function of controlling another electronic device provided by the smartwatch 5-101, managing content displayed on a user interface of the smartwatch 5-101, and the like.

The management of the earphones 5-102 may include: managing an electronic device connected to the earphones 5-102, managing a noise control mode of the earphones 5-102, managing volume of the earphones 5-102, managing a sound effect of the earphones 5-102, managing a function that can be controlled through an operation performed on the earphones 5-102, and the like.

According to the foregoing method for managing the wearable device and the audio apparatus that can be accommodated in the wearable device, user experience of using the wearable device and the audio apparatus can be improved, so that life convenience of the user can be improved through the wearable device and the audio apparatus.

It should be noted that the smartwatch 5-101 may be the wearable device 1 shown in FIG. 1 to FIG. 4. The earphones 5-102 may be an audio apparatus that can be accommodated in the wearable device 1, for example, the earphones 3 shown in FIG. 1 to FIG. 4. The earphones 5-102 may include the first earphone 31 and the second earphone 32 shown in FIG. 4.

Here, an example in which the wearable device is the smartwatch 5-101 and the audio apparatus is the earphones 5-102 is used, and the following describes some wearable device management scenarios provided in embodiments of this application in the foregoing device connection manner.

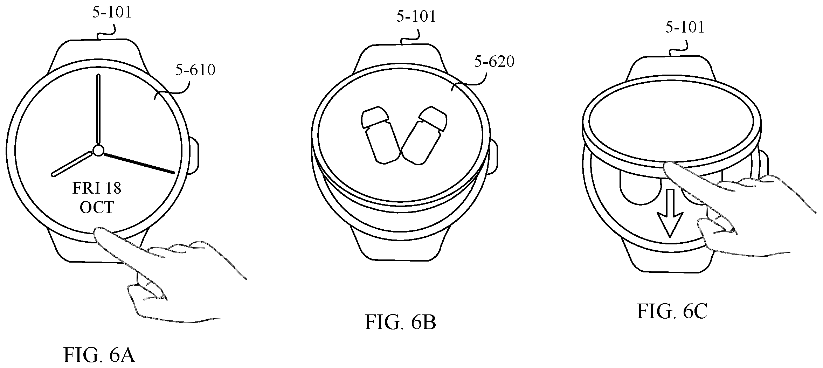

**FIG. 6A to FIG. 6F** **show an example of a scenario of managing a cover open/closed state of the smartwatch 5-101.**

As shown in FIG. 6A, the smartwatch 5-101 may display a user interface 5-610. The user interface 5-610 may be a home screen of the smartwatch 5-101. Content displayed on the user interface 5-610 may be a watch face of the smartwatch 5-101. The watch face displayed on the user interface 5-610 may be preset before delivery of the smartwatch 5-101, or may be set by the user. A display style of the watch face of the smartwatch 5-101 is not limited in embodiments of this application.

A watch cover open button may be disposed on the smartwatch 5-101. An implementation of the watch cover open button and a location of the watch cover open button on the smartwatch 5-101 are not limited in embodiments of this application. In response to an operation, for example, a press operation, performed on the watch cover open button 5-101, the watch cover of the smartwatch 5-101 may be opened.

As shown in FIG. 6B, in a process in which the watch cover of the smartwatch 5-101 is opened, the smartwatch 5-101 may display a cover opening animation. The cover opening animation may be played on a user interface 5-620. Content of the cover opening animation is not limited in embodiments of this application. The cover opening animation can improve interest of opening the watch cover by the user.

With reference to FIG. 1 to FIG. 4, it can be learned that an earphone slot (for example, a left earphone slot and a right earphone slot) may be disposed in a watch body of the smartwatch 5-101. The earphone slot may be configured to place the earphones 5-102. In addition, magnets may be disposed on the earphones 5-102 and the watch cover of the smartwatch 5-101. In response to the operation of opening the watch cover shown in FIG. 6A, the watch cover of the smartwatch 5-101 may attract the earphones 5-102, so that the earphones 5-102 are taken out of the earphone slot. The earphones 5-102 are attracted to the watch cover after the cover of the smartwatch 5-101 is opened, so that the user can take the earphones 5-102.

As shown in FIG. 6C, in response to an operation of closing the watch cover, the smartwatch 5-101 may close the watch cover.

In some embodiments, when the earphones 5-102 are not attracted to the watch cover, and no earphone 5-102 is placed in the left earphone slot and the right earphone slot, the smartwatch 5-101 may close the watch cover. In this case, there is no earphone 5-102 in the watch body of the smartwatch 5-101. Two earphones in the earphones 5-102 are both in an out state.

In some other embodiments, when only one earphone in the earphones 5-102 is attracted to the watch cover, the smartwatch 5-101 may close the watch cover. When the smartwatch 5-101 closes the watch cover, the earphone attracted to the watch cover may be placed in the earphone slot (for example, the left earphone slot and the right earphone slot) in the watch body of the smartwatch 5-101 as the watch cover is closed. Alternatively, when there is an earphone placed in only one of the two earphone slots, the smartwatch 5-101 may close the watch cover. In this case, one earphone in the earphones 5-102 is placed in the earphone slot in the watch body of the smartwatch 5-101. One earphone in the earphones 5-102 is in the out state, and the other earphone is in an in state.

In some other embodiments, when the two earphones in the earphones 5-102 are attracted to the watch cover, the smartwatch 5-101 may close the watch cover. When the smartwatch 5-101 closes the watch cover, the two earphones attracted to the watch cover may be placed in the earphone slot in the watch body of the smartwatch 5-101 as the watch cover is closed. Alternatively, when an earphone is placed in each of the two earphone slots, the smartwatch 5-101 may close the watch cover. In this case, the two earphones in the earphones 5-102 are placed in the earphone slots in the watch body of the smartwatch 5-101. The two earphones in the earphones 5-102 are both in the out state.

It can be learned that the user may attract the earphones 5-102 to the watch cover by opening the watch cover, and then close the watch cover, or may directly place the earphones 5-102 in the earphone slot by opening the watch cover, and then close the watch cover, so that the earphones 5-102 are placed back into the watch body of the smartwatch 5-101.

When the watch cover is closed, the smartwatch 5-101 may detect whether an earphone is placed in the watch body and a quantity of placed earphones. The smartwatch 5-101 may detect, based on whether charging electrodes in the left earphone slot and the right earphone slot are connected to charging electrodes of the earphones 5-102, whether the earphones are placed in the left earphone slot and the right earphone slot. An implementation in which the smartwatch 5-101 detects whether an earphone is placed in the watch body and a quantity of placed earphones is not limited in embodiments of this application.

As shown in FIG. 6D, when it is detected that two earphones are placed in the watch body of the smartwatch 5-101 (that is, an earphone is placed in each of the left earphone slot and the right earphone slot), the smartwatch 5-101 may display an earphone status area 5-611 on a user interface 5-610. In some embodiments, the smartwatch 5-101 may display the earphone status area 5-611 within a preset time period (for example, 3 seconds or 5 seconds) after the watch cover is closed. After the preset time period, the smartwatch 5-101 may cancel displaying the earphone status area 5-611, to display the user interface 5-610 shown in FIG. 6A. A value of the preset time period is not limited in embodiments of this application.

The earphone status area 5-611 may include left earphone information 5-611A, right earphone information 5-611B, and earphone in-compartment information 5-611C.

The left earphone information 5-611A may indicate related information of a left earphone. For example, the left earphone information 5-611A may include power information "80%" and a charging icon. The power information "80%" may indicate that current power of the left earphone is 80% of full power. The charging icon in the left earphone information 5-611A may indicate that the left earphone is being charged. That the left earphone information 5-611A including a charging icon may indicate that an earphone is placed in the left earphone slot.

The right earphone information 5-611B may indicate related information of a right earphone. For example, the right earphone information 5-611A may include power information "85%" and a charging icon. The power information "85%" may indicate that current power of the right earphone is 85% of full power. The charging icon in the right earphone information 5-611B may indicate that the right earphone is being charged. That the right earphone information 5-611B including a charging icon may indicate that an earphone is placed in the right earphone slot.

The earphone in-compartment information 5-611C may indicate whether earphones are placed in the left earphone slot and the right earphone slot in the watch body. As shown in FIG. 6D, that the earphone in-compartment information 5-611C includes two earphone icons may indicate that an earphone is placed in each of the left earphone slot and the right earphone slot.

It should be noted that, in some embodiments, the smartwatch 5-101 may reset left and right earphones in the earphones 5-102 that are placed in a compartment. The smartwatch 5-101 may reset an earphone placed in the left earphone slot to the left earphone. The smartwatch 5-101 may reset an earphone placed in the right earphone slot to the right earphone. An implementation method in which the smartwatch 5-101 resets the left and right earphones is not limited in embodiments of this application.

In some embodiments, after the earphones 5-102 are removed from the compartment and worn, the earphones 5-102 may perform left and right ear recognition, to determine an ear of the user on which each of the two earphones in the earphones 5-102 is worn. For example, the earphones 5-102 include two earphones: an earphone 5-102A and an earphone 5-102B. When the earphone 5-102A recognizes that the earphone 5-102A is worn on the left ear of the user, the earphone 5-102A may give, with a sound, the user a prompt that the earphone 5-102A is a left earphone. When the earphone 5-102A is the left earphone, the earphone 5-102Amay play audio of a left audio channel with a sound. When the earphone 5-102A recognizes that the earphone 5-102A is worn on the right ear of the user, the earphone 5-102A may give, with a sound, the user a prompt that the earphone 5-102A is a right earphone. When the earphone 5-102A is the right earphone, the earphone 5-102A may play audio of a right audio channel with a sound. Similarly, the earphone 5-102B may also determine whether the earphone 5-102B is worn on the left ear or the right ear. Details are not described herein again.

The earphone 5-102A may be the first earphone 31 shown in FIG. 4. The earphone 5-102B may be the second earphone 32 shown in FIG. 4.

In some embodiments, when the watch cover is closed, the smartwatch 5-101 may display an earphone icon on a screen. For example, the earphone icon may be displayed on the user interface 5-610 shown in FIG. 6A. In response to an operation performed on the earphone icon, the smartwatch 5-101 may display, on the screen, the earphone status area 5-611 shown in FIG. 6D. Optionally, display of the earphone icon may be canceled when no operation is performed within a preset time period.

As shown in FIG. 6E, the earphone 5-102A included in the earphones 5-102 is in the out state, and the earphone 5-102B included in the earphones 5-102 is in the in state. When it is detected that an earphone is placed only in the right earphone slot in the watch body of the smartwatch 5-101, the smartwatch 5-101 may display an earphone status area 5-612 on the user interface 5-610. In some embodiments, the smartwatch 5-101 may display the earphone status area 5-612 within a preset time period (for example, 3 seconds or 5 seconds) after the watch cover is closed. After the preset time period, the smartwatch 5-101 may cancel displaying the earphone status area 5-612, to display the user interface 5-610 shown in FIG. 6A. A value of the preset time period is not limited in embodiments of this application.

The earphone status area 5-612 may include left earphone information 5-612A, right earphone information 5-612B, and earphone in-compartment information 5-612C.

The left earphone information 5-612A may indicate related information of the left earphone. For example, the left earphone information 5-612A may include power information "80%". The power information "80%" may indicate that current power of the left earphone is 80% of full power. The power information "80%" may be sent by the left earphone to the smartwatch 5-101 through a communication connection. That the left earphone information 5-612A does not include the charging icon shown in FIG. 6D may indicate that there is no earphone in the left earphone slot.

For the right earphone information 5-612B, refer to the right earphone information 5-611B shown in FIG. 6D.

The earphone in-compartment information 5-612C may indicate whether earphones are placed in the left earphone slot and the right earphone slot in the watch body. As shown in FIG. 6E, the earphone in-compartment information 5-612C includes one empty earphone slot icon and one earphone icon, and the empty earphone slot icon is located on a left side of the earphone icon. This may indicate that there is no earphone in the left earphone slot, and an earphone is placed in the right earphone slot.

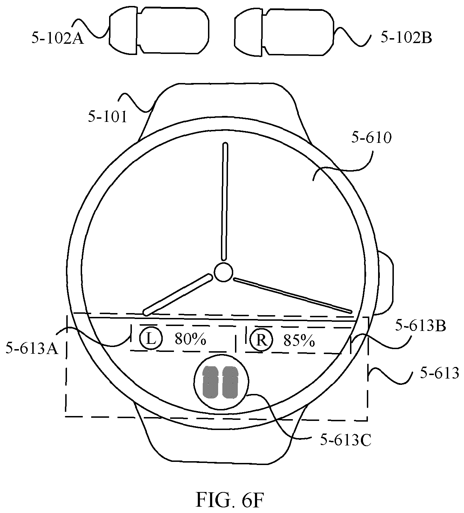

As shown in FIG. 6F, both the earphone 5-102A and the earphone 5-102B included in the earphones 5-102 are in the out state. When it is detected that there is no earphone in the watch body of the smartwatch 5-101, the smartwatch 5-101 may display an earphone status area 5-613 on the user interface 5-610. In some embodiments, the smartwatch 5-101 may display the earphone status area 5-613 within a preset time period (for example, 3 seconds or 5 seconds) after the watch cover is closed. After the preset time period, the smartwatch 5-101 may cancel displaying the earphone status area 5-613, to display the user interface 5-610 shown in FIG. 6A. A value of the preset time period is not limited in embodiments of this application.

For the left earphone information 5-613A, refer to the left earphone information 5-612A shown in FIG. 6E.

The right earphone information 613B may indicate related information of the right earphone. For example, the right earphone information 5-613B may include power information "85%". The power information "85%" may indicate that current power of the right earphone is 85% of full power. That the right earphone information 5-613B does not include the charging icon shown in FIG. 6D may indicate that there is no earphone in the right earphone slot.

The earphone in-compartment information 5-613C may indicate whether earphones are placed in the left earphone slot and the right earphone slot in the watch body. As shown in FIG. 6F, that the earphone in-compartment information 5-613C includes two empty earphone slot icons may indicate that there is no earphone in the left earphone slot and the right earphone slot.

It can be learned from FIG. 6D to FIG. 6F that, based on the earphone status area 5-611, the earphone status area 5-612, or the earphone status area 5-613, after the watch cover is closed, the user may quickly learn about power of the earphones 5-102 and placement locations of the two earphones in the earphones 5-102 in the watch body.

In some embodiments, when the watch cover is opened, the smartwatch 5-101 may detect duration in which the watch cover is in an open state. When it is detected that the duration in which the watch cover is in the open state exceeds preset duration, the smartwatch 5-101 may prompt the user to close the watch cover. For example, the smartwatch 5-101 may prompt, in a manner such as vibration or ringing, the user to close the watch cover. A manner in which the smartwatch 5-101 prompts the user to close the watch cover is not limited in embodiments of this application. This can avoid a case in which the user forgets to close the watch cover and consequently use of the smartwatch 5-101 is affected.

**FIG. 7A to FIG. 7G** **show an example of a scenario in which the earphones 5-102 are managed through the smartwatch 5-101.**

As shown in FIG. 7A, the smartwatch 5-101 may display a user interface 5-710. The user interface 5-710 may include an earphone status area 5-711. For the earphone status area 5-711, refer to the earphone status area 5-613 shown in FIG. 6F. It can be learned from the earphone status area 5-711 in the figure that two earphones in the earphones 5-102 are both in an out state. In response to an operation, for example, a tap operation, performed on the earphone status area 5-711, the smartwatch 5-101 may display a user interface 5-720 shown in FIG. 7B. The user interface 5-720 may be a user interface that is in the smartwatch 5-101 and that is for managing the earphones 5-102.

It may be understood that both the earphone status area 5-611 shown in FIG. 6D and the earphone status area 5-612 shown in FIG. 6E may be used to open a user interface for managing the earphones 5-102.

As shown in FIG. 7B, the user interface 5-720 may include an earphone name 5-721, a noise cancellation control 5-722, a disable control 5-723, an awareness control 5-724, and a device connection option 5-725.

The earphone name 5-721 may indicate a name of the earphones 5-102. For example, the name of the earphones 5-102 is "Buds". The name of the earphones 5-102 is not limited in embodiments of this application.

The noise cancellation control 5-722 may be used to enable a noise cancellation mode of the earphones 5-102. The noise cancellation mode may reduce interference caused by an external ambient sound to audio listening performed by the user through the earphones 5-102. In response to an operation, for example, a tap operation, performed on the noise cancellation control 5-722, the smartwatch 5-101 may send, to the earphones 5-102, a message for enabling the noise cancellation mode. Then, the earphones 5-102 may enable the noise cancellation mode, to filter out the external ambient sound and cancel noise. An implementation method in which the earphones 5-102 filter out the external ambient sound in the noise cancellation mode and cancel the noise is not limited in embodiments of this application.

The awareness control 5-724 may be used to enable an awareness mode of the earphones 5-102. The foregoing awareness mode may help the user talk with another person when the user wears the earphones. In response to an operation, for example, a tap operation, performed on the awareness control 5-724, the smartwatch 5-101 may send, to the earphones 5-102, a message for enabling the awareness mode. Then, the earphones 5-102 may enable the awareness mode, to filter out a background sound in the external ambient sound, but retain a human voice. An implementation method in which the earphones 5-102 filter out the background sound in the external ambient sound in the awareness mode but retain the human voice is not limited in embodiments of this application.

The disable control 5-723 may be used to disable the awareness mode and the noise cancellation mode of the earphones 5-102. In response to an operation, for example, a tap operation, performed on the disable control 5-723, the smartwatch 5-101 may send, to the earphones 5-102, a message indicating to maintain the awareness mode and the noise cancellation mode in a disabled state. In this way, the earphones 5-102 may maintain the awareness mode and the noise cancellation mode in the disabled state.

It may be understood that, in a same time period, only one of the noise cancellation control 5-722, the disable control 5-723, and the awareness control 5-724 can be in a selected state in the same time period. A display style used when any one of the noise cancellation control 5-722, the disable control 5-723, and the awareness control 5-724 is in the selected state may be different from a display style used when any one of the noise cancellation control 5-722, the disable control 5-723, and the awareness control 5-724 is in an unselected state. For example, as shown in FIG. 7B, the noise cancellation control 5-722 is in the selected state. The noise cancellation control 5-722 may have a dark display style. The disable control 5-723 and the awareness control 5-724 are in the unselected state. The disable control 5-723 and the awareness control 5-724 may have light-color display styles. Display styles of the noise cancellation control 5-722, the disable control 5-723, and the awareness control 5-724 are not limited in embodiments of this application.

The device connection option 5-725 may indicate a status of a connection between the earphones 5-102 and a smartwatch named "Watch", and may be used to disconnect a communication connection between the earphones 5-102 and the smartwatch named "Watch". The smartwatch named "Watch" may be the smartwatch 5-101. The name of the smartwatch 5-101 is not limited in embodiments of this application. For example, the device connection option 5-725 includes a text prompt "Connected". The text prompt "Connected" may indicate that a communication connection is currently established between the earphones 5-102 and the smartwatch 5-101. When the earphones 5-102 are not connected to the smartwatch 5-101, the device connection option 5-725 may include a text prompt "Not connected".

In some embodiments, the user interface 5-720 may further include more controls for managing the earphones 5-102.

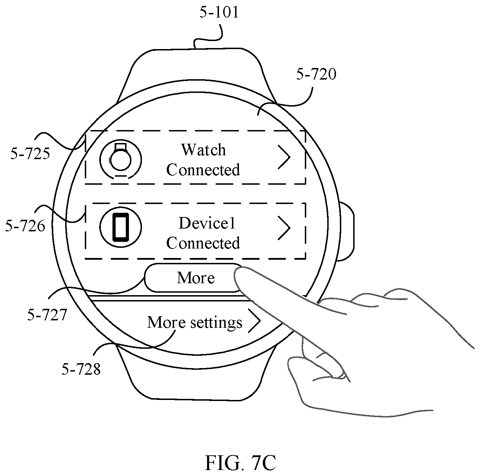

In response to an operation of sliding upward on the user interface 5-720 shown in FIG. 7B, the smartwatch 5-101 may display a user interface 5-720 shown in FIG. 7C, to provide more controls for managing the earphones 5-102.

As shown in FIG. 7C, in addition to the device connection option 5-725, the user interface 5-720 may further include a device connection option 5-726, a more control 5-727, and a more settings control 5-728.

The device connection option 5-726 may indicate a status of a connection between the earphones 5-102 and a mobile phone named "Device1", and may be used to control the earphones 5-102 to be disconnected from or reconnected to the mobile phone named "Devicel". The mobile phone named "Device1" may be the electronic device 5-200. The name and a device type of the electronic device 5-200 are not limited in embodiments of this application. In subsequent embodiments, an example in which the electronic device 5-200 is the mobile phone named "Device1" is used for description. For example, the device connection option 5-726 includes a text prompt "Connected". The text prompt "Connected" may indicate that a communication connection is currently established between the earphones 5-102 and the electronic device 5-200. When the earphones 5-102 are not connected to the electronic device 5-200, the device connection option 5-726 may include a text prompt "Not connected".

The more control 5-727 may be used to view more device connection options corresponding to electronic devices currently connected to the earphones 5-102, and a device connection option corresponding to an electronic device having been connected to the earphones 5-102 but currently being not connected to the earphones 5-102.

The more settings option 5-728 may be used to trigger the smartwatch 5-101 to display more controls for managing the earphones 5-102.

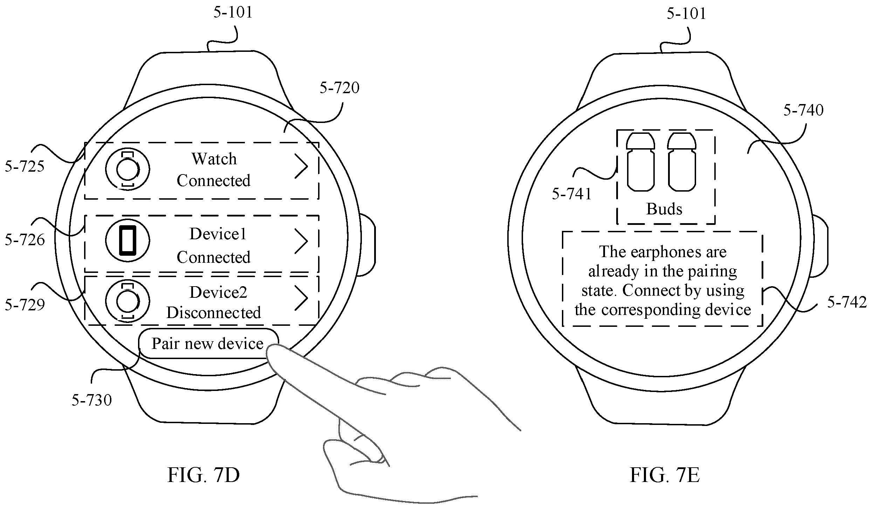

For example, the earphones 5-102 have been connected to an electronic device 5-300, but currently are not connected to the electronic device 5-300. In response to an operation, for example, a tap operation, performed on the more control 5-727 shown in FIG. 7C, the smartwatch 5-101 may display, on the user interface 5-720, a device connection option 5-729 and a pairing control 5-730 shown in FIG. 7D.

The device connection option 5-729 may indicate a status of a connection between the earphones 5-102 and a mobile phone named "Device2", and may be used to control the earphones 5-102 to be disconnected from or reconnected to the mobile phone named "Device2". The mobile phone named "Device2" may be the electronic device 5-300. The name and a device type of the electronic device 5-300 are not limited in embodiments of this application. In subsequent embodiments, an example in which the electronic device 5-300 is the mobile phone named "Device2" is used for description. For example, the device connection option 5-729 includes a text prompt "Not connected". The text prompt "Not connected" may indicate that the earphones 5-102 currently are not connected to the electronic device 5-300. When the earphones 5-102 are connected to the electronic device 5-300, the device connection option 5-729 may include a text option "Connected".

The pairing control 5-730 may be used to control the earphones 5-102 to enter a pairing state. When the earphones 5-102 are in the pairing state, the earphones 5-102 may perform pairing with an electronic device that the earphones have not been connected to, and establish a communication connection. In response to an operation performed on the pairing control 5-730, the smartwatch 5-101 may display a user interface 5-740 shown in FIG. 7E.

As shown in FIG. 7E, the user interface 5-740 may include to-be-paired device information 5-741 and a pairing prompt 5-722. The to-be-paired device information 5-741 may include related information of a device that is in the pairing state. For example, the to-be-paired device information 5-741 may include an icon and a name of the earphones 5-102. Based on the to-be-paired device information 5-741, the user may know that the device in the pairing state is the earphones 5-102. The pairing prompt 5-722 may be used to prompt the user with an operation method for pairing the earphones 5-102 with another electronic device. For example, content of the pairing prompt 5-722 may include "The earphones are already in the pairing state. Connect by using the corresponding device". The content of the pairing prompt 5-722 is not limited in embodiments of this application. An implementation of pairing the earphones 5-102 with the electronic device and establishing the communication connection is not limited in embodiments of this application.

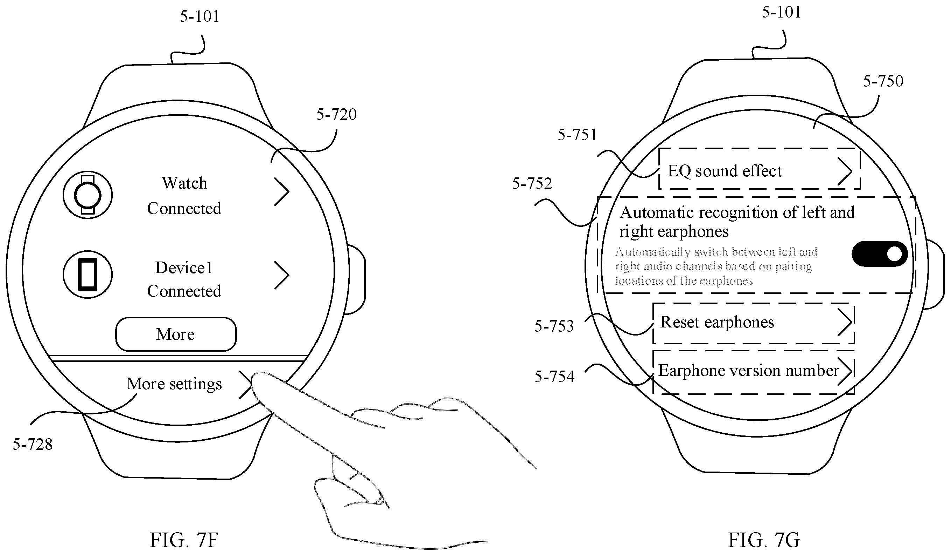

As shown in FIG. 7F, the smartwatch 5-101 may display the user interface 5-720. In response to an operation performed on the more settings control 5-728 on the user interface 5-720, the smartwatch 5-101 may display a user interface 5-750 shown in FIG. 7G.

As shown in FIG. 7G, the user interface 5-750 may include a sound effect setting option 5-751, a left and right ear recognition option 7-752, an earphone reset option 5-753, and an earphone version number 5-754.

The sound effect setting option 5-751 may be used to manage a sound effect of audio played with a sound by the earphones 5-102. Content of sound effect management may include bass enhancement, treble enhancement, sound clarity adjustment, reverberation and surround sound control, and the like. In a possible implementation, in response to an operation performed on the sound effect setting option 5-751, the smartwatch 5-101 may provide one or more controls for setting a sound effect parameter. The sound effect parameter may include but is not limited to a frequency, a gain, and a frequency band width. The sound effect parameter may be used to adjust a sound effect of audio played with a sound by the earphones 5-102.

The left and right ear recognition option 7-752 may be used to enable or disable a left and right ear recognition function. The left and right ear recognition function may be a function of recognizing, when the earphones 5-102 are in a worn state, an ear of the user on which each of the two earphones in the earphones 5-102 is worn. When one earphone in the earphones 5-102 recognizes that the earphone is worn on the left ear, the earphone may play audio of a left audio channel with a sound. When one earphone in the earphones 5-102 recognizes that the earphone is worn on the right ear, the earphone may play audio of a right audio channel with a sound. The left and right ear recognition option 7-752 may include a function switch. An operation may be performed on the switch to enable or disable the left and right ear recognition function.

The earphone reset option 5-753 may be used to reset the earphones 5-102, so that the earphones 5-102 are restored to factory settings. A specific method for resetting the earphones 5-102 is not limited in embodiments of this application.

The earphone version number 5-754 may be used to view a current version number of the earphones 5-102.

The user interface 5-750 may further include more controls for managing the earphones 5-102. This is not limited in embodiments of this application.

It can be learned from the scenario shown in FIG. 7A to FIG. 7G that, after the watch cover of the smartwatch 5-101 is closed, the user may view, in the earphone status area 5-711 shown in FIG. 7A, the power of the earphones 5-102 and a placement location of the earphones 5-102 in the watch body, and may further open, through the earphone status area 5-711, a user interface for managing the earphones 5-102, to manage content such as a noise control mode, a connected electronic device, a sound effect, and the left and right ear recognition function of the earphones 5-102. According to the foregoing embodiments, the user can conveniently manage the earphones 5-102 through the smartwatch 5-101, to improve user experience of using the earphones 5-102.

**FIG. 8A to FIG. 8F** **show an example of another scenario in which the earphones 5-102 are managed through the smartwatch 5-101.**

As shown in FIG. 8A, the smartwatch 5-101 may display a user interface 5-810. For the user interface 5-810, refer to the user interface 5-610 shown in FIG. 6A. In response to a pull-down operation shown in FIG. 8A of sliding downward from the top of a screen of the smartwatch 5-101, the smartwatch 5-101 may display a user interface 5-820 shown in FIG. 8B. The user interface 5-820 may be a pull-down control interface of the smartwatch 5-101.

It may be understood that, not limited to the user interface 5-810 shown in FIG. 8A, when another user interface is displayed on the screen of the smartwatch 5-101, the smartwatch 5-101 may also display the user interface 5-820 in response to the pull-down operation.

As shown in FIG. 8B, the user interface 5-820 may include a screen-on control 5-821, a setting control 5-822, a device search control 5-823, a do-not-disturb control 5-824, an alarm clock control 5-825, a noise cancellation switching control 5-826, earphone in-compartment information 5-827, left earphone information 5-828, right earphone information 5-829, a Bluetooth icon, and a power identifier 5-831.

The screen-on control 5-821 may be used to enable or disable a screen steady-on function of the smartwatch 5-101. When the screen steady-on function is enabled, the smartwatch 5-101 may keep the screen always on. When the screen steady-on function is disabled, after the screen is turned on, the smartwatch 5-101 may automatically turn off the screen when no user operation is detected on the screen within a preset time period.

The setting control 5-822 may be used to start a Settings application in the smartwatch 5-101. The Settings application may be used to perform a related setting on the smartwatch 5-101.

The device search control 5-823 may be used to provide a function of searching for a device, for example, searching for a mobile phone connected to the smartwatch 5-101, searching for the earphones 5-102 connected to the smartwatch 5-101, and the like.

The do-not-disturb control 5-824 may be used to enable or disable a do-not-disturb function.

The alarm clock control 5-825 may be used to provide functions of viewing and setting an alarm clock on the smartwatch 5-101.

The noise cancellation switching control 5-826 may be used to switch a noise control mode. The noise control mode may include a noise cancellation mode, an awareness mode, and a noise cancellation and awareness disabled mode. For the noise cancellation mode and the awareness mode, refer to the descriptions in the foregoing embodiments. That the earphones 5-102 are in the noise cancellation and awareness disabled mode may indicate that the earphones 5-102 disable the noise cancellation mode and the awareness mode.

In response to an operation performed on the noise cancellation switching control 5-826, the smartwatch 5-101 may control the earphones 5-102 to switch among the noise cancellation mode, the awareness mode, and the noise cancellation and awareness disabled mode.

The smartwatch 5-101 may determine, based on whether the earphones 5-102 are in the noise cancellation mode, the awareness mode, or the noise cancellation and awareness disabled mode, display content included in the noise cancellation switching control 5-826. This can help a user determine a current state of the earphones 5-102 based on the noise cancellation switching control 5-826.

For example, when the earphones 5-102 are in the noise cancellation mode, the noise cancellation switching control 5-826 may include an icon corresponding to the noise cancellation mode shown in FIG. 8B. The icon corresponding to the noise cancellation mode may be the icon of the noise cancellation control 5-722 shown in FIG. 7B. When the noise cancellation switching control 5-826 may include the icon corresponding to the noise cancellation mode shown in FIG. 8B, in response to an operation, for example, a tap operation, performed on the noise cancellation switching control 5-826, the smartwatch 5-101 may send, to the earphones 5-102, an instruction for switching to the awareness mode, and change the display content of the noise cancellation switching control 5-826 to an icon corresponding to the awareness mode. The icon corresponding to the awareness mode may be the icon of the awareness control 5-724 shown in FIG. 7B. The earphones 5-102 may switch to the awareness mode in response to the instruction for switching to the awareness mode.

Further, when the noise cancellation switching control 5-826 includes the icon corresponding to the awareness mode, in response to an operation, for example, a tap operation, performed on the noise cancellation switching control 5-826, the smartwatch 5-101 may send, to the earphones 5-102, an instruction for switching to the noise cancellation and awareness disabled mode, and change the display content of the noise cancellation switching control 5-826 to an icon corresponding to the noise cancellation and awareness disabled mode. The icon corresponding to the noise cancellation and awareness disabled mode may be the icon of the disable control 5-723 shown in FIG. 7B. The earphones 5-102 may switch to the noise cancellation and awareness disabled mode in response to the instruction for switching to the noise cancellation and awareness disabled mode.

Further, when the noise cancellation switching control 5-826 includes the icon corresponding to the noise cancellation and awareness disabled mode, in response to an operation, for example, a tap operation, performed on the noise cancellation switching control 5-826, the smartwatch 5-101 may send, to the earphones 5-102, an instruction for switching to the noise cancellation mode, and change the display content of the noise cancellation switching control 5-826 to the icon corresponding to the noise cancellation mode shown in FIG. 6B. The earphones 5-102 may switch to the noise cancellation mode in response to the instruction for switching to the noise cancellation mode.

For the earphone in-compartment information 5-827, the left earphone information 5-828, and the right earphone information 5-829, refer to the earphone in-compartment information 5-611C, the left earphone information 5-611A, and the right earphone information 5-611B shown in FIG. 6D, respectively. Details are not described herein again. It can be learned from the earphone in-compartment information 5-827, the left earphone information 5-828, and the right earphone information 5-829 that the two earphones in the earphones 5-102 are currently in an in state.

It may be understood that, if an earphone is placed only in a right earphone slot in a watch body of the smartwatch 5-101, for display styles of the earphone in-compartment information 5-827, the left earphone information 5-828, and the right earphone information 5-829, refer to the earphone in-compartment information 5-612C, the left earphone information 5-612A, and the right earphone information 5-612B shown in FIG. 6E. If there is no earphone in the watch body of smartwatch 5-101, for display styles of the earphone in-compartment information 5-827, the left earphone information 5-828, and the right earphone information 5-829, refer to the earphone in-compartment information 5-613C, the left earphone information 5-613A, and the right earphone information 5-613B shown in FIG. 6F.

The Bluetooth icon 5-830 may indicate that Bluetooth of the smartwatch 5-101 is currently in an enabled state. If the Bluetooth of the smartwatch 5-101 is disabled, the smartwatch 5-101 may cancel display of the Bluetooth icon 5-830 on the user interface 5-820.

The power identifier 5-831 may indicate current remaining power of the smartwatch 5-101.

The user interface 5-820 may further include more or fewer controls. This is not limited in embodiments of this application.

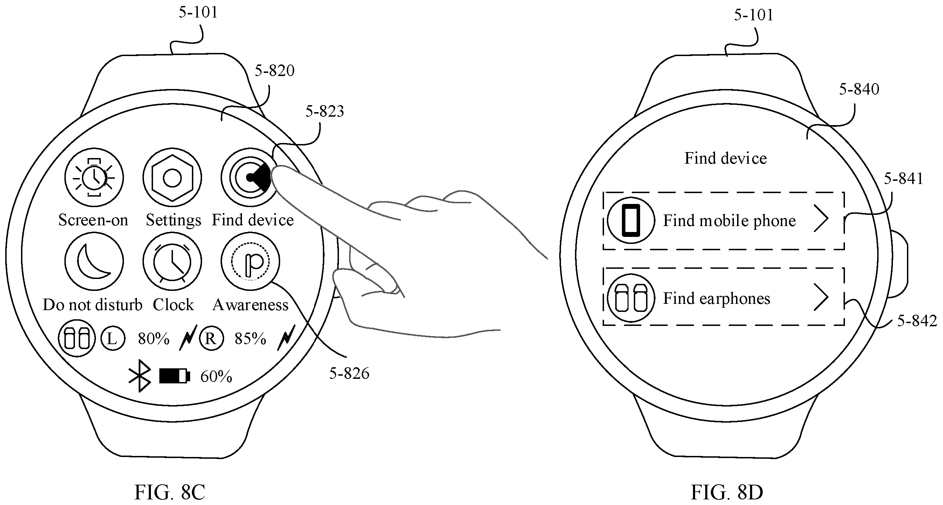

As shown in FIG. 8B, when the noise cancellation switching control 5-826 may include the icon corresponding to the noise cancellation mode, in response to an operation performed on the noise cancellation switching control 5-826, the smartwatch 5-101 may change the display content of the noise cancellation switching control 5-826 from the icon corresponding to the noise cancellation mode shown in FIG. 8B to the icon corresponding to the awareness mode shown in FIG. 8C. That the noise cancellation switching control 5-826 includes the icon corresponding to the awareness mode may indicate that the earphones 5-102 are currently in the awareness mode.

In response to an operation, for example, a tap operation, performed on the device search control 5-823 shown in FIG. 8C, the smartwatch 5-101 may display a user interface 5-840 shown in FIG. 8D.

As shown in FIG. 8D, the user interface 5-840 may include a mobile phone search option 5-841 and an earphone search option 5-842. The mobile phone search option 5-841 may be used to provide a function of searching, through the smartwatch 5-101, for a mobile phone connected to the smartwatch 5-101, for example, the electronic device 5-200. The earphone search option 5-842 may be used to provide a function of searching for the earphones 5-102 through the smartwatch 5-101. An implementation in which the smartwatch 5-101 searches for the mobile phone and the earphones 5-102 is specifically described in subsequent embodiments of this application.

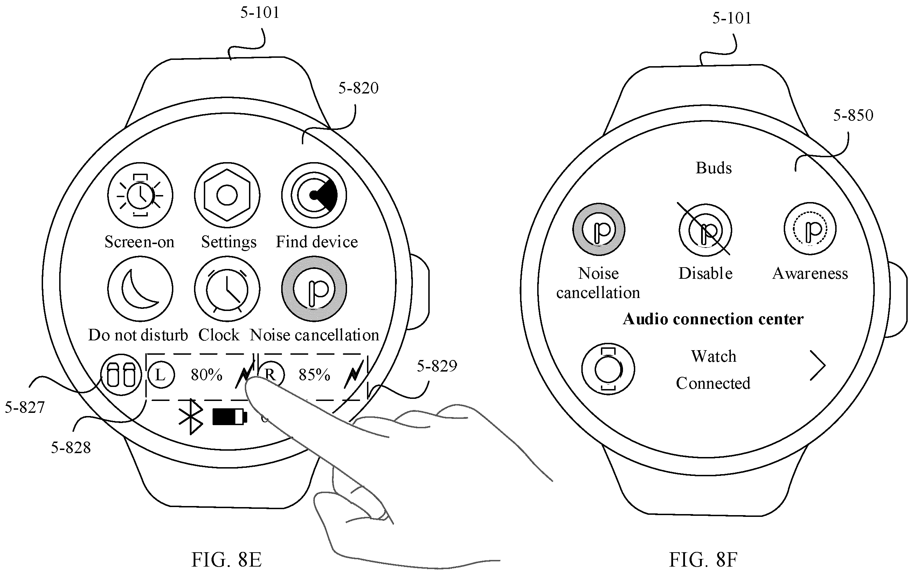

As shown in FIG. 8E, in response to a user operation, for example, a tap operation, performed on a display area of the earphone in-compartment information 5-827, the left earphone information 5-828, or the right earphone information 5-829, the smartwatch 5-101 may display a user interface 5-850 shown in FIG. 8F. For the user interface 5-850, refer to the user interface 5-720 shown in FIG. 7B. Details are not described herein again. The user may manage the earphones 5-102 through a control displayed on the user interface 5-850.

It can be learned from the scenario shown in FIG. 8A to FIG. 8F that the user may further perform a pull-down operation on the screen of the smartwatch 5-101, to quickly find an operation entry for managing the earphones 5-102. According to the foregoing embodiments, the user can conveniently quickly manage the earphones 5-102 through the smartwatch 5-101, to improve user experience of using the earphones 5-102.

**The following describes a method for searching for a mobile phone through the smartwatch 5-101 provided in an embodiment of this application.**

Here, an example in which the electronic device 5-200 is searched for is used for description.

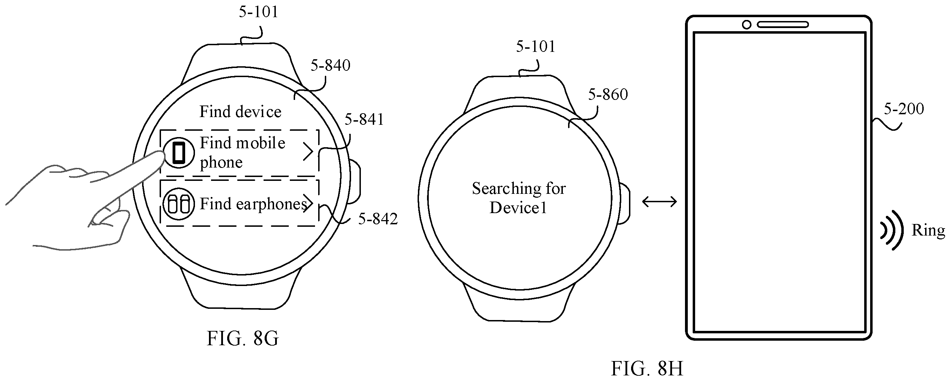

As shown in FIG. 8G, in response to an operation, for example, a tap operation, performed on the mobile phone search option 5-841, the smartwatch 5-101 may detect whether the smartwatch 5-101 is connected to the electronic device 5-200.

As shown in FIG. 8H, when the smartwatch 5-101 is connected to the electronic device 5-200, the smartwatch 5-101 may send a ringing instruction to the electronic device 5-200, and display a user interface 5-850 shown in FIG. 8H. Content displayed on the user interface 5-850 may be used to give the user a prompt that the smartwatch 5-101 is searching for the electronic device 5-200. The display content on the user interface 5-850 is not limited in embodiments of this application. The electronic device 5-200 may ring according to the ringing instruction through an audio playing apparatus, for example, a speaker, on the electronic device 5-200. In this way, the user may search for the electronic device 5-200 based on a sound made by the electronic device 5-200.

Optionally, when searching for the electronic device 5-200 through the smartwatch 5-101, the smartwatch 5-101 may further send a vibration instruction to the electronic device 5-200, to indicate the electronic device 5-200.

In some embodiments, when the smartwatch 5-101 is not connected to the electronic device 5-200, the smartwatch 5-101 may give the user a prompt that the smartwatch 5-101 is not connected to the electronic device 5-200, and the electronic device 5-200 cannot be found.

In some embodiments, the smartwatch 5-101 may obtain location information of the electronic device 5-200. When the smartwatch 5-101 is not connected to the electronic device 5-200, the smartwatch 5-101 may display location information of the electronic device 5-200 that is obtained when the smartwatch 5-101 is connected to the electronic device 5-200 last time, to prompt the user to search for the electronic device 5-200.

The foregoing method is merely an example for description of this application. An implementation method for searching for the mobile phone through the smartwatch 5-101 is not limited in embodiments of this application.

**The following describes a method for searching for the earphones 5-102 through the smartwatch 5-101 provided in an embodiment of this application.**

As shown in FIG. 8I, in response to an operation, for example, a tap operation, performed on the mobile phone search option 5-842, the smartwatch 5-101 may detect whether the smartwatch 5-101 is connected to the earphones 5-102.

As shown in FIG. 8J, when the smartwatch 5-101 is connected to the earphones 5-102, the smartwatch 5-101 may send a ringing instruction to the earphones 5-102, and display a user interface 5-860 shown in FIG. 8J. Content displayed on the user interface 5-860 may be used to give a user a prompt that the smartwatch 5-101 is searching for the earphones 5-102. The display content on the user interface 5-860 is not limited in embodiments of this application. The earphones 5-102 may ring according to the ringing instruction through an audio playing apparatus, for example, a speaker, on the earphones 5-102. A ringing sound of the earphones 5-102 may be heard without a need for the user to wear the earphones. In this way, the user may search for the earphones 5-102 based on the sound made by the earphones 5-102.

As shown in FIG. 8K, the smartwatch 5-101 may obtain and store location information when the smartwatch 5-101 is disconnected from the earphones 5-102. When the smartwatch 5-101 is not connected to the electronic device 5-200, the smartwatch 5-101 may display a user interface 5-880 shown in FIG. 8K. The user interface 5-880 may include an earphone location 5-881. The earphone location 5-881 may indicate location information of the earphones 5-102 in a case in which the smartwatch 5-101 is disconnected from the earphones 5-102 last time. The earphone location 5-881 may prompt the user to search for the earphones 5-102.

The foregoing method is merely an example for description of this application. An implementation method for searching for the earphones 5-102 through the smartwatch 5-101 is not limited in embodiments of this application.

It may be understood that, not limited to searching for the mobile phone and the earphones 5-102, the smartwatch 5-101 may be further used to search for another electronic device connected to the smartwatch 5-101. For a method in which the smartwatch 5-101 searches for the another electronic device connected to the smartwatch 5-101, refer to the foregoing method for searching for the mobile phone and the earphones 5-102 through the smartwatch 5-101. Details are not described herein again.

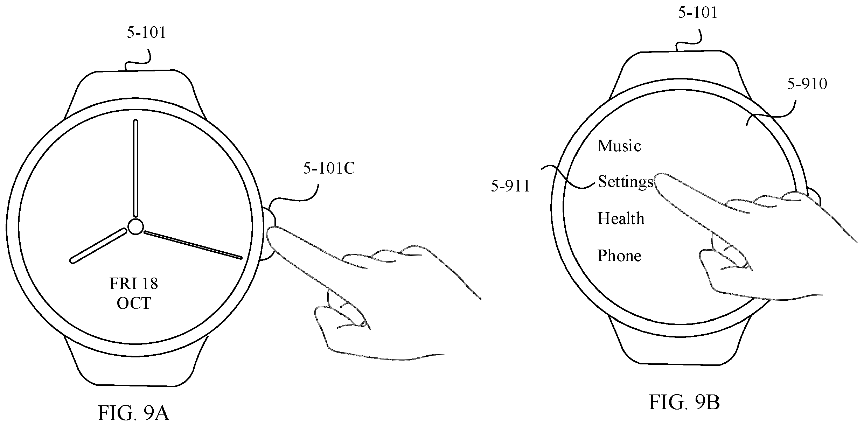

**FIG. 9A to FIG. 9D** **show an example of another scenario in which the earphones 5-102 are managed through the smartwatch 5-101.**

As shown in FIG. 9A, a button 5-101C may be disposed on the smartwatch 5-101. The button 5-101C may be disposed on a side of a watch body of the smartwatch 5-101. A location of the button 5-101C on the smartwatch 5-101 is not limited in embodiments of this application. In response to an operation, for example, a press operation, performed on the button 5-101C, the smartwatch 5-101 may display a user interface 5-910 shown in FIG. 9B.

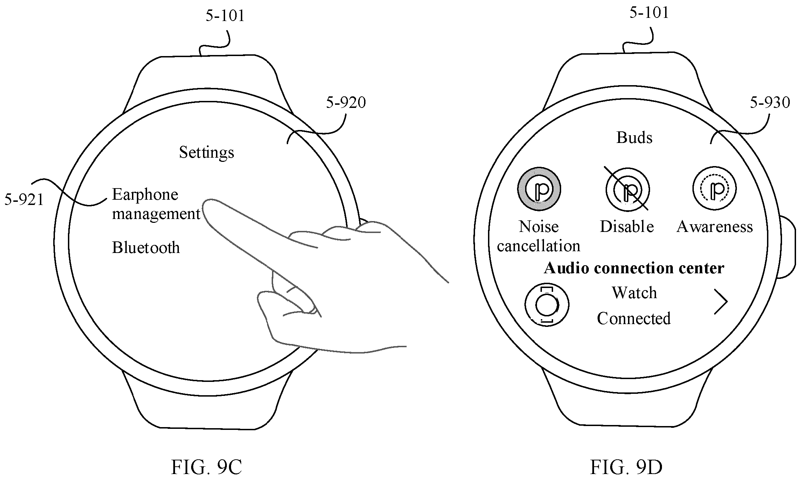

As shown in FIG. 9B, the user interface 910 may include a setting control 5-911. In response to an operation performed on the setting control 5-911, the smartwatch 5-101 may display a user interface 5-920 shown in FIG. 9C. The user interface 5-920 may be a user interface of a Settings application in the smartwatch 5-101.

As shown in FIG. 9C, the user interface 5-920 may include an earphone management control 5-921. In response to an operation performed on the earphone management control 5-921, the smartwatch 5-101 may display a user interface 5-930 shown in FIG. 9D. For the user interface 5-930, refer to the user interface 5-720 shown in FIG. 7B. Details are not described herein again. The user may manage the earphones 5-102 through a control displayed on the user interface 5-930.

It can be learned from the scenario shown in FIG. 9A to FIG. 9D that the user may quickly find, through the button 5-101C on the smartwatch 5-101, an operation entry for managing the earphones 5-102. According to the foregoing embodiments, the user can conveniently quickly manage the earphones 5-102 through the smartwatch 5-101, to improve user experience of using the earphones 5-102.

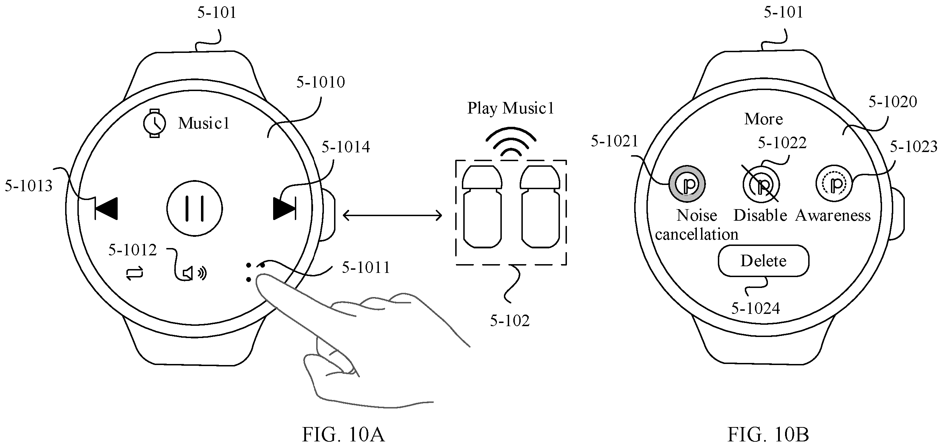

**FIG. 10A to FIG.** 10I **show an example of a scenario in which the smartwatch 5-101 manages playing audio with a sound by the earphones 5-102.**

1. Manage playing music with a sound by the earphones 5-102.

As shown in FIG. 10A, the smartwatch 5-101 may control the earphones 5-102 to play local music on the smartwatch 5-101 with a sound. For example, the smartwatch 5-101 may send audio data of the local music (for example, music Music1) on the smartwatch 5-101 to the earphones 5-102. Based on the received audio data, the earphones 5-102 may play the local music (for example, the music Music1) of the smartwatch 5-101 with a sound.

The smartwatch 5-101 may display a user interface 5-1010. The user interface 5-1010 may be a music playing interface in the smartwatch 5-101. The user interface 5-101 may include a control for controlling the smartwatch 5-101 to play music. For example, the user interface 5-101 may include a music setting control 5-1011, a volume control 5-1012, a previous track control 5-1013, and a next track control 5-1014.

The volume control 5-1012 may be used to adjust volume of audio (for example, the music Music1) played with a sound by the earphones 5-102.

The previous track control 5-1013 may be used to switch to a previous track of music of currently played music.

The next track control 5-1014 may be used to switch to a next track of music of currently played music.

In response to an operation performed on the music setting control 5-1011, the smartwatch 5-101 may display a user interface 5-1020 shown in FIG. 10B.

As shown in FIG. 10B, the user interface 5-1020 may include a noise cancellation control 5-1021, a disable control 5-1022, an awareness control 5-1023, and a delete control 5-1024. For the noise cancellation control 5-1021, the disable control 5-1022, and the awareness control 5-1023, refer to the descriptions of the noise cancellation control 5-722, the disable control 5-723, and the awareness control 5-724 shown in FIG. 7B. The delete control 5-1024 may be used to delete, from the smartwatch 5-101, music indicated by the user interface 5-1010 shown in FIG. 10A.

It can be learned from FIG. 10A and FIG. 10B that, as a control and management device of the earphones 5-102, the smartwatch 5-101 may control the earphones 5-102 to play the local music on the smartwatch 5-101 with a sound. In addition, the user may quickly find, on the music playing interface displayed on the smartwatch 5-101, functions of switching music, adjusting volume, and switching a noise control mode, so that song switching, volume adjustment of the earphones 5-102, and noise control mode switching of the earphones 5-102 can be conveniently performed.

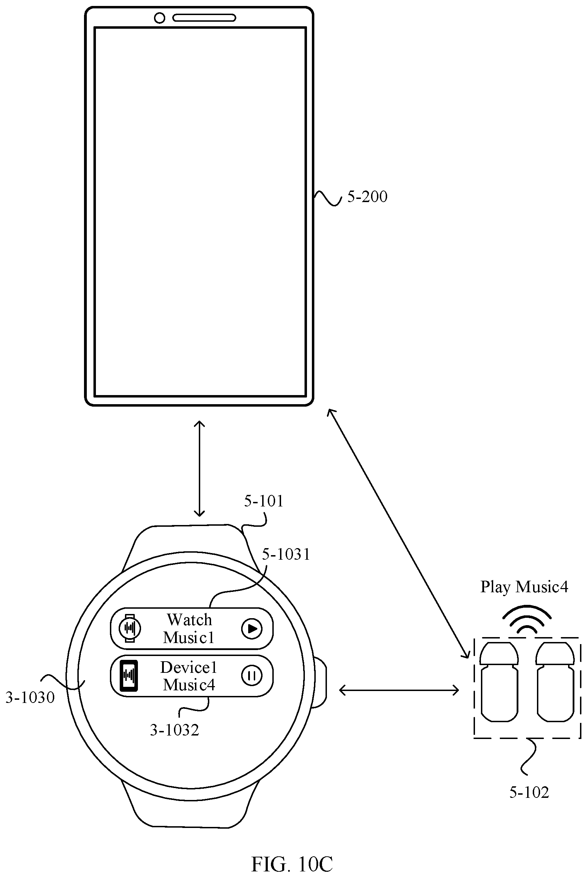

As shown in FIG. 10C, in some embodiments, the smartwatch 5-101 may further control the earphones 5-102 to play music on the electronic device 5-200 connected to the smartwatch 5-101 with a sound. When the earphones 5-102 play the music on the electronic device 5-200 with a sound, the smartwatch 5-101 may display a user interface 5-1030. The user interface 5-1030 may be a leftmost screen interface of the smartwatch 5-101. In a possible implementation, the user interface 5-1030 may be displayed by the smartwatch 5-101 in response to an operation of sliding rightward on a screen when the smartwatch displays the user interface 5-610 shown in FIG. 6A. A method operation of triggering the smartwatch 5-101 to display the user interface 5-1030 is not limited in embodiments of this application.

The user interface 5-1030 may include one or more music controls. The one or more music controls may be separately used to control music on devices to which the earphones 5-102 have been connected. For example, the earphones 5-102 have been connected to both the smartwatch 5-101 and the electronic device 5-200. The user interface 5-1030 may include a music control 5-1031 and a music control 5-1032.

The music control 5-1031 may be used to control the local music on the smartwatch 5-101. For example, the music control 5-1031 may include a play/pause control. In response to an operation performed on the play/pause control in the music control 5-1031, the smartwatch 5-101 may control the earphones 5-102 to play the local music (for example, the music Music1) of the smartwatch 5-101 or pause playing of the local music.

The music control 5-1032 may be used to control the music on the electronic device 5-200. For example, the music control 5-1032 may include a play/pause control. In response to an operation performed on the play/pause control in the music control 5-1032, the smartwatch 5-101 may control the earphones 5-102 to play the music (for example, music Music4) on the electronic device 5-200 or pause playing the music.

In some embodiments, a music control displayed on the user interface 5-1020 may be used to trigger the smartwatch 5-101 to open a music playing interface of music on a device that can be controlled by the music control.

For example, in response to the operation performed on the music control 5-1031, the smartwatch 5-101 may display the user interface 5-1010 shown in FIG. 10A. In this way, the user may manage volume of the local music on the smartwatch 5-101 played with a sound by the earphones 5-102, a noise control mode, and the like.

In response to the operation performed on the music control 5-1032, the smartwatch 5-101 may display a music playing interface of the music on the electronic device 5-200. For the music playing interface of the music on the electronic device 5-200, refer to the foregoing user interface 5-1010. In this way, the user may manage volume, a noise control mode, and the like of music on the electronic device 5-200 played with a sound by the earphones 5-102.

It can be learned from the scenario shown in FIG. 10C that the music control 5-1031 and the music control 5-1032 provided by the smartwatch 5-101 can help the user switch music played with a sound by the earphones 5-102 between the music on the smartwatch 5-101 and the music on the electronic device 5-200. When the user wants to listen to the music on the smartwatch 5-101, the user may quickly switch music played with a sound by the earphones 5-102 to the music on the smartwatch 5-101. When the user wants to listen to the music on the electronic device 5-200, the user may quickly switch the music played with a sound by the earphones 5-102 to the music on the electronic device 5-200. In addition, the user may quickly find, through the music control, the functions of switching the music, adjusting the volume, and switching the noise control mode, so that song switching, the volume adjustment of the earphones 5-102, and noise control mode switching of the earphones 5-102 can be conveniently performed.

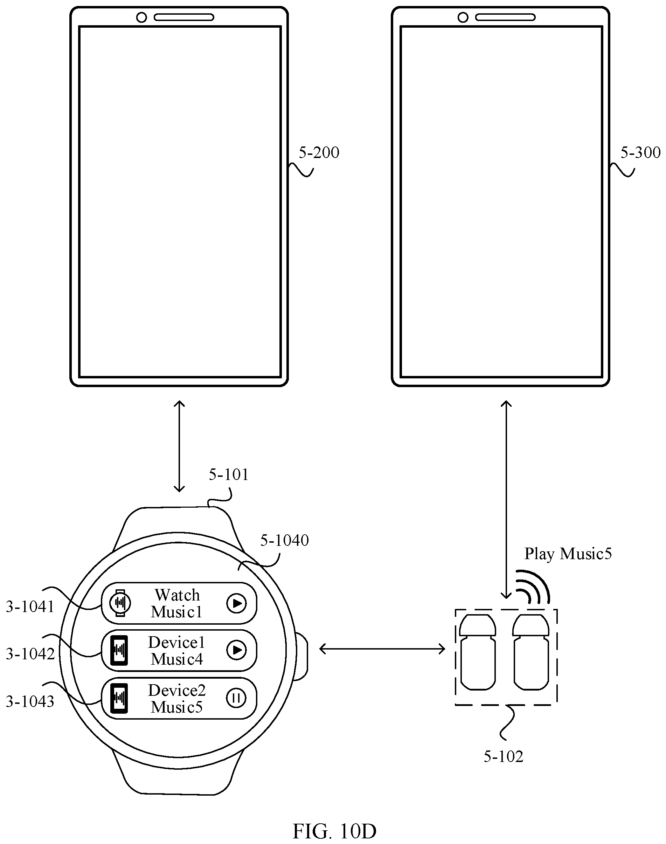

As shown in FIG. 10D, in some embodiments, the smartwatch 5-101 may further control, through the earphones 5-102, the earphones 5-102 to play, with a sound, music on the electronic device 5-300 that is not connected to the smartwatch 5-101. When the earphones 5-102 play the music on the electronic device 5-300 with a sound, the smartwatch 5-101 may display a user interface 5-1040. For the user interface 5-1040, refer to the user interface 5-1030 shown in FIG. 10C.

The user interface 5-1040 may include a music control 5-1041, a music control 5-1042, and a music control 5-1043.

For the music control 5-1041 and the music control 5-1042, refer to the music control 5-1031 and the music control 5-1032 shown in FIG. 10C, respectively. Details are not described herein again.

The music control 5-1043 may be used to control the music on the electronic device 5-300. For example, the music control 5-1043 may include a play/pause control. In response to an operation performed on the play/pause control in the music control 5-1043, the smartwatch 5-101 may control the earphones 5-102 to play the music (for example, music Music5) on the electronic device 5-300 or pause playing of the music. In response to the operation performed on the music control 5-1043, the smartwatch 5-101 may display a music playing interface of the music on the electronic device 5-300. For the music playing interface of the music on the electronic device 5-300, refer to the foregoing user interface 5-1010. In this way, the user may manage volume, a noise control mode, and the like of the music on the electronic device 5-300 played with a sound by the earphones 5-102.

It can be learned from the scenario shown in FIG. 10D that the music control 5-1041, the music control 5-1042, and the music control 5-1043 provided by the smartwatch 5-101 can help the user switch the music played with a sound by the earphones 5-102 among the music on the smartwatch 5-101, the music on the electronic device 5-200, and the music on the electronic device 5-300. In addition, the user may quickly find, through the music control, the functions of switching the music, adjusting the volume, and switching the noise control mode, so that song switching, the volume adjustment of the earphones 5-102, and noise control mode switching of the earphones 5-102 can be conveniently performed.

2. Manage playing call audio with a sound by the earphones 5-102.

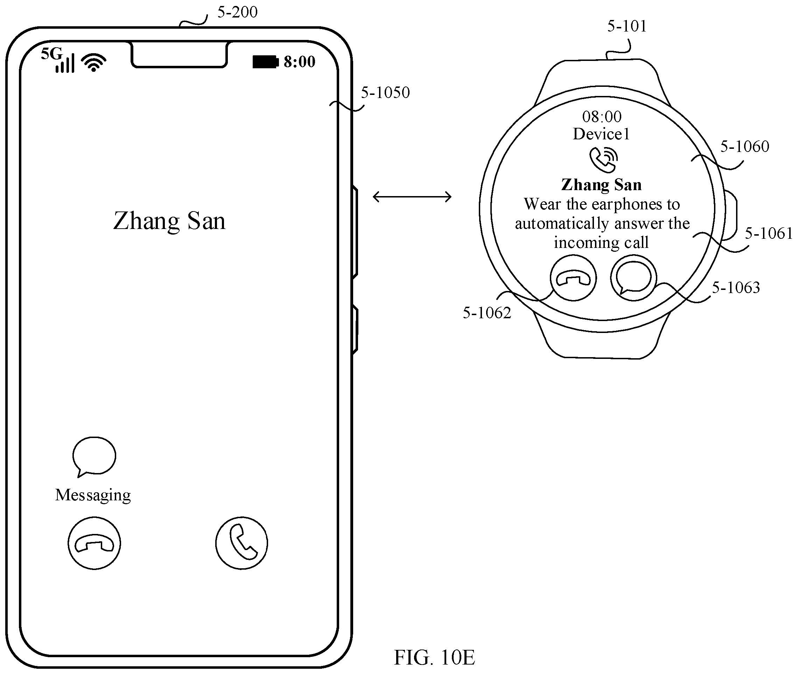

As shown in FIG. 10E, in some embodiments, the smartwatch 5-101 may control a call on the electronic device 5-200 connected to the smartwatch 5-101. After receiving an incoming call, the electronic device 5-200 may display a user interface 5-1050, and send incoming call information to the smartwatch 5-101. When receiving the incoming call information, the smartwatch 5-101 may detect whether the earphones 5-102 are in a worn state.

When it is detected that the earphones 5-102 are in a not-worn state, the smartwatch 5-101 may display, based on the received incoming call information, a user interface 5-1060. The user interface 5-1060 may be an incoming call notification screen, to give the user a prompt that the electronic device 5-200 receives the incoming call.

The user interface 5-1060 may include an answer prompt 5-1061, a decline control 5-1062, and a decline by message control 5-1063.

The answer prompt 5-1061 may be used to prompt the user with an operation manner of answering, through the earphones 5-102, the incoming call received by the electronic device 5-200. For example, because the earphones 5-102 are currently in the not-worn state, content of the answer prompt 5-1061 may include "Wear the earphones to automatically answer the incoming call". That is, after wearing the earphones 5-102, the user may answer the incoming call received by the electronic device 5-200.

The decline control 5-1062 may be used to trigger the smartwatch 5-101 to decline the incoming call received by the electronic device 5-200. In response to an operation performed on the decline control 5-625, the smartwatch 5-101 may send a call declining instruction to the electronic device 5-200. The electronic device 5-200 may decline the call according to the call declining instruction.

The decline by message control 5-1063 may be used to decline a call with a message. The declining a call with a message may be declining the call and replying with preset SMS message content.

When it is detected that the earphones 5-102 are in the worn state, the smartwatch 5-101 may display an answer control on the incoming call notification screen. In this way, the user may tap the answer control on the smartwatch 5-101, to answer the call on the electronic device 5-200. In addition, the user may listen to the call audio on the electronic device 5-200 through the earphones 5-102.

After the user interface 5-1060 shown in FIG. 10E is displayed, if it is detected that a state of the earphones 5-102 changes to the worn state, the smartwatch 5-101 may send a call answering instruction to the electronic device 5-200. The smartwatch 5-101 may answer the call according to the call answering instruction.

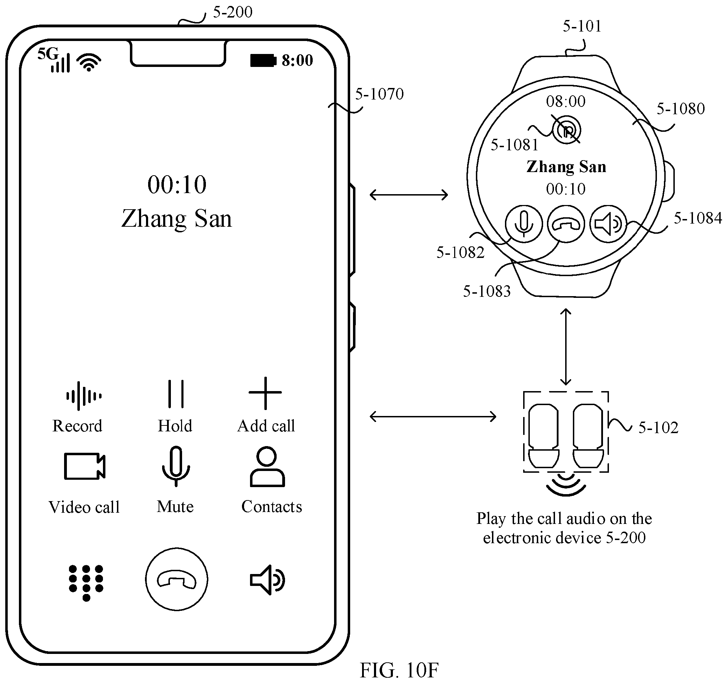

As shown in FIG. 10F, after answering the call, the electronic device 5-200 may display a user interface 5-1070. The electronic device 5-200 may transmit audio data of the call to the earphones 5-102. The earphones 5-102 may play the call audio on the electronic device 5-200 with a sound. The earphones 5-102 may collect audio of the user on the electronic device 5-200 side, and send the audio to the electronic device 5-200. The electronic device 5-200 may send the audio collected by the earphones 5-102 to an electronic device of a call peer end. The electronic device 5-200 may further transmit call control information to the earphones 5-102. The smartwatch 5-101 may display a user interface 5-1080. The user interface 5-1080 may be a call screen. The user interface 5-1080 may include a noise cancellation switching control 5-1081, a mute control 5-1082, a hang-up control 5-1083, and a volume control 5-1084.

For the noise cancellation switching control 5-1081, refer to the noise cancellation switching control 5-826 shown in FIG. 8B.

The mute control 5-1082 may be used to mute a call. In response to an operation, for example, a tap operation, performed on the mute control 5-1082, the smartwatch 5-101 may send a mute instruction to the earphones 5-102. When receiving the mute instruction, the earphones 5-102 may stop collecting audio.

The hang-up control 5-1083 may be used to hang up a call. In response to an operation performed on the hang-up control 5-1083, the smartwatch 5-101 may send a call hang-up instruction to the electronic device 5-200. When receiving the call hang-up instruction, the electronic device 5-200 may hang up the call.

The volume control 5-1084 may be used to adjust call volume. In response to an operation of increasing (or decreasing) the call volume through the volume control 5-1084, the smartwatch 5-101 may send a volume increase (or decrease) instruction to the earphones 5-102. The earphones 5-102 may increase volume of playing the call audio (or decrease volume of playing the call audio) based on the volume increase (or decrease) instruction. After indicating, based on the operation of increasing or decreasing the call volume, the earphones 5-102 to increase or decrease the call volume, the smartwatch 5-101 may send volume information to the electronic device 5-200. The volume information may indicate volume of the call audio currently played with a sound by the earphones 5-102. In this way, after performing a call volume adjustment operation on the smartwatch 5-101, the user may view current volume of the earphones 5-102 on the electronic device 5-200, and may further perform a call volume adjustment operation on the electronic device 5-200 based on the current volume, to adjust the volume of the earphones 5-102.

In some embodiments, when the earphones 5-102 play the call audio on the electronic device 5-200 with a sound, in response to an operation performed on the electronic device 5-200 to increase or decrease the call volume, the electronic device 5-200 may send, to the earphones 5-102, a call volume increase or decrease instruction. Then, the earphones 5-102 may increase or decrease the call volume according to the received instruction. Similarly, after indicating the earphones 5-102 to adjust the call volume, the electronic device 5-200 may also send the volume information to the smartwatch 5-101. In this way, the call volume of the call audio played with a sound by the earphones 5-102 can be synchronized among the earphones 5-102, the smartwatch 5-101, and the electronic device 5-200.

In addition to controlling the electronic device 5-200 to answer the incoming call, the smartwatch 5-101 may control the electronic device 5-200 to make an outgoing call. The earphones 5-102 may play the call audio of the electronic device 5-200 with a sound when the electronic device 5-200 makes the outgoing call. In some embodiments, the smartwatch 5-101 may further control, through the earphones 5-102, the electronic device 5-300 that is not connected to the smartwatch 5-101 to answer or make a call. The earphones 5-102 may play call audio of the electronic device 5-300 with a sound when the electronic device 5-300 answers the incoming call or makes the outgoing call. For a method in which the smartwatch 5-101 controls the electronic device 5-200 to make an outgoing call and controls the electronic device 5-300 to answer or make a call, refer to the descriptions of controlling, by the smartwatch 5-101, the electronic device 5-200 to answer the call shown in FIG. 10E and FIG. 10F. Details are not described herein again.

In some embodiments, when a call on the electronic device 5-200 or the electronic device 5-300 is answered through the earphones 5-102, and it is detected that two earphones in the earphones 5-102 are placed in compartments, the electronic device 5-200 or the electronic device 5-300 may hang up the call. In other words, the smartwatch 5-101 and the earphones 5-102 may provide an in-compartment hang-up function.

It can be learned from FIG. 10E and FIG. 10F that, when an incoming call is received on an electronic device connected to the earphones 5-102, the user may wear the earphones 5-102 to answer the call (that is, perform answer through wearing), and may place the earphones 5-102 in a watch body to hang up the call (that is, perform in-compartment hanging up). The smartwatch 5-101 may control the earphones 5-102 to play call audio on different electronic devices. In addition, the user may adjust the call volume of the earphones 5-102 on the call screen displayed on the smartwatch 5-101.

The foregoing embodiments are implemented, so that the user can quickly find an operation control of a common function when listening to music, answering a call, or listening to other audio, to conveniently manage the earphones 5-102. This can improve user experience of using a wearable device.

3. A prompt is displayed when the volume of the earphones 5-102 is too high.

In some embodiments, the earphones 5-102 may prompt the user when volume of playing audio is excessively high, to avoid damage to hearing of the user due to the excessively high volume.

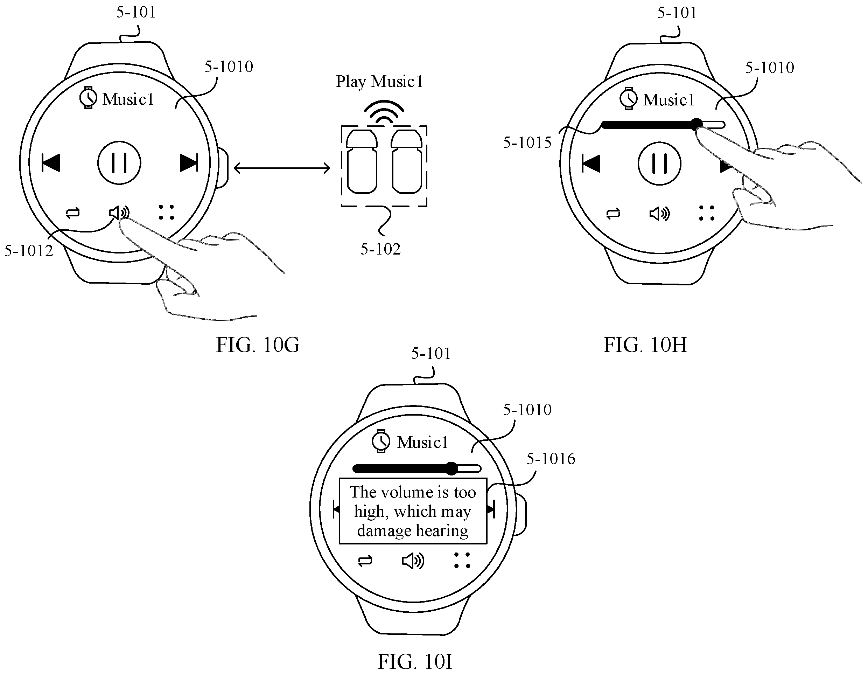

As shown in FIG. 10G, the smartwatch 5-101 may display the user interface 5-1010. For the user interface 5-1010, refer to the descriptions in the foregoing embodiments. In response to an operation performed on the volume control on the user interface 5-1010, the smartwatch 5-101 may display, on the user interface, a volume control bar 5-1015 shown in FIG. 10H. The volume control bar 5-1015 may be used to adjust the volume of the earphones 5-102. In response to the operation of adjusting the volume of the earphones 5-102 on the volume control bar 5-1015, the smartwatch 5-101 may indicate the earphones 5-102 to adjust the volume. In addition, the smartwatch 5-101 may detect whether adjusted volume is greater than a volume threshold. The volume threshold may be a maximum volume value that does not damage hearing or greatly affect hearing when the user wears the earphones to listen to audio. For example, a value of the volume threshold may be 85 decibels. The value of the volume threshold is not limited in embodiments of this application. When it is detected that the adjusted volume is greater than the volume threshold, the smartwatch 5-101 may display, on the user interface 5-1016, a prompt box 5-1016 shown in FIG. 10I. The prompt box 5-1016 may include a text prompt "The volume is too high, which may damage hearing". The prompt box 5-1016 may give the user a prompt that the current volume is too high, which may damage hearing.

4. A hearing health report is provided based on statistics of audio played with a sound by the earphones 5-102.

In some embodiments, the smartwatch 5-101 may collect statistics on sound volume of audio played with a sound by the earphones 5-102, and provide a hearing health report based on the sound volume obtained through statistics collection. The hearing health report may include duration in which the user wears the earphones 5-102, a quantity of times and duration in which volume of the audio played with a sound by the earphones 5-102 is greater than the volume threshold, a suggestion and a reminder for using an ear, and the like. The hearing health report may be a daily report, a weekly report, a monthly report, or the like. For example, the daily report may indicate a hearing health report provided by performing statistical analysis based on sound volume of audio played with a sound by the earphones 5-102 in a day. The weekly report may indicate a hearing health report provided by performing statistical analysis based on sound volume of audio played with a sound by the earphones 5-102 in a week.

According to the foregoing embodiments, the user can be prompted to use the earphones 5-102 in a healthy manner, to reduce a case in which the user excessively uses the earphones 5-102 or volume of the earphones 5-102 is excessively high, resulting in damage to hearing of the user.

5. The earphones 5-102 broadcast health data.

In some embodiments, the smartwatch 5-101 may monitor health data of the user. For example, the health data may include a heart rate, blood oxygen, blood pressure, a stress value, sleep data, and the like. The smartwatch 5-101 may indicate the earphones 5-102 to verbally broadcast the health data. For example, when it is determined that the heart rate of the user is excessively high, the smartwatch 5-101 may send a heart rate broadcast instruction to the earphones 5-102. The heart rate broadcast instruction may include a monitored value of the heart rate of the user. The earphones 5-102 may verbally broadcast the heart rate of the user based on the heart rate broadcast instruction, to give the user a prompt that the current heart rate is excessively high. When it is determined that the blood pressure of the user is excessively high, the smartwatch 5-101 may send a blood pressure broadcast instruction to the earphones 5-102. The blood pressure broadcast instruction may include a monitored value of the blood pressure of the user. The earphones 5-102 may verbally broadcast the blood pressure of the user based on the blood pressure broadcast instruction, to give the user a prompt that the current blood pressure is excessively high.

6. Manage the earphones 5-102 in a meditation mode and a sleep assistance mode.

In some embodiments, the smartwatch 5-101 may provide a meditation mode and a sleep assistance mode. The meditation mode may be used to play audio of a corresponding meditation course with a sound through the earphones 5-102, to help the user meditate. The sleep assistance mode may be used to play audio of a corresponding sleep assistance course with a sound through the earphones 5-102, to help the user quickly fall asleep.

In response to an operation of enabling the meditation mode, the smartwatch 5-101 may indicate the earphones 5-102 to play the audio of the corresponding meditation course with a sound. When playing the audio of the meditation course with a sound, the earphones 5-102 may automatically enable a noise cancellation mode, to reduce impact of external environmental noise on the meditation of the user.

In response to an operation of enabling the sleep assistance mode, the smartwatch 5-101 may indicate the earphones 5-102 to play the audio of the corresponding sleep assistance course with a sound. When the sleep assistance mode is enabled, the smartwatch 5-101 may monitor a sleep status of the user. When it is detected that the user is not asleep, the smartwatch 5-101 may indicate the earphones 5-102 to continuously play the audio of the corresponding sleep assistance course with a sound. After detecting that the user already falls asleep, the smartwatch 5-101 may indicate the earphones 5-102 to stop playing the audio of the sleep assistance course. An implementation in which the smartwatch 5-101 monitors the sleep status of the user is not limited in embodiments of this application.

The following describes a voice interaction function provided by the smartwatch 5-101.

In some embodiments, a voice interaction application may be installed in the smartwatch 5-101. For example, the voice interaction application may be a voice assistant. The smartwatch 5-101 may wake up the voice assistant in response to a detected wake-up word. After being woken up, the voice assistant may be configured to execute a voice instruction of the user.

For example, in response to a voice instruction for playing local music on the smartwatch 5-101, the smartwatch 5-101 may indicate, based on the scenario shown in FIG. 10A, the earphones 5-102 to play the local music on the smartwatch 5-101.

For another example, in response to a voice instruction for playing music on the electronic device 5-200, the smartwatch 5-101 may indicate, based on the scenario shown in FIG. 10C, the earphones 5-102 to play the music on the electronic device 5-200 with a sound.

For another example, in response to a voice instruction for playing music on the electronic device 5-300, the smartwatch 5-101 may indicate, based on the scenario shown in FIG. 10D, the earphones 5-102 to play the music on the electronic device 5-200 with a sound.

For another example, when the electronic device 5-200 receives an incoming call, in response to a voice instruction for answering the incoming call, the smartwatch 5-101 may control, based on the scenario shown in FIG. 10F, the electronic device 5-200 to answer the incoming call, and indicates the earphones 5-102 to play call audio on the electronic device 5-200 with a sound.

For another example, in response to a voice instruction for making an outgoing call through the electronic device 5-200, the smartwatch 5-101 may send an outgoing call-making instruction to the electronic device 5-200, to instruct the electronic device 5-200 to make the outgoing call to a contact included in the voice instruction of the outgoing call. In an outgoing call-making process of the electronic device 5-200, the earphones 5-102 may play call audio of the outgoing call of the electronic device 5-200.

For another example, in response to a voice instruction for opening a payment interface of the watch, the smartwatch 5-101 may open the payment interface. In other words, the user may quickly open the payment interface on the smartwatch 5-101 according to the voice instruction, to conveniently perform payment.

It should be noted that the wake-up word used to wake up the voice assistant and the voice instruction may be monitored by the smartwatch 5-101 through an audio collection apparatus (for example, a microphone), or may be monitored by the earphones 5-102 through an audio collection apparatus (for example, a microphone). An implementation of recognizing the wake-up word and the voice instruction is not limited in embodiments of this application.

It can be learned from the foregoing embodiments that the user may deliver a voice instruction to the smartwatch 5-101, to control, through the smartwatch 5-101, different devices to play music and control different devices to answer a call or make a call. According to the foregoing embodiments, operations of controlling music playing, answering a call, and making a call by the user through the smartwatch 5-101 can be simplified, and user experience of using a wearable device can be improved.

The following describes a near field communication function provided by the smartwatch 5-101.

In some embodiments, the smartwatch 5-101 may include a near field communication (Near Field Communication, NFC) module. Based on the NFC module, the smartwatch 5-101 may implement a transportation card payment function. When the smartwatch 5-101 is close to a transportation card reader, the smartwatch 5-101 may exchange data with the transportation card reader through the NFC module, to complete transportation card payment. Based on the NFC module, the smartwatch 5-101 may further implement a function of opening a door through an access card. When the smartwatch 5-101 is close to an access control apparatus on the door, the smartwatch 5-101 may exchange data with the access control apparatus through the NFC module, to complete a door opening action. Based on the NFC module, the smartwatch 5-101 may further implement a function of opening a vehicle door through a vehicle key. When the smartwatch 5-101 is close to a vehicle locking apparatus of the vehicle door, the smartwatch 5-101 may exchange data with the vehicle locking apparatus through the NFC module, to open the vehicle door.

In addition to the transportation card payment function, the function of opening the door through the access card, and the function of opening the vehicle door through the vehicle key, the smartwatch 5-101 may implement functions such as ticketing, anti-counterfeiting, and advertising based on the NFC module.

It can be learned from the foregoing embodiments that the smartwatch 5-101 may be equivalent to a transportation card, the access card, and the vehicle key. The user may quickly perform, through the smartwatch 5-101, operations implemented through the NFC module, such as the transportation card payment, opening the door through the access card, and opening the vehicle door through the vehicle key.

The following describes a message notification function provided by the smartwatch 5-101.

In some embodiments, the smartwatch 5-101 may provide a weather update message notification. The smartwatch 5-101 may display updated weather content on a screen. If the earphones 5-102 are in a worn state, the smartwatch 5-101 may indicate the earphones 5-102 to play a prompt tone of a weather update message notification with a sound, and verbally broadcast updated weather.

In some embodiments, the smartwatch 5-101 may provide a message notification of travel information. The smartwatch 5-101 may receive an operation of entering the travel information by the user, and store the travel information of the user. Alternatively, the smartwatch 5-101 may obtain the travel information of the user from the electronic device 5-200, and store the travel information of the user. The travel information may include but is not limited to travel time, a travel destination, and departure information of a travel tool such as a flight or a train. The smartwatch 5-101 may provide a travel notification for the user before the user travels based on the travel information. This can prevent the user from forgetting to travel, and help the user prepare for the travel. When the smartwatch 5-101 provides the travel notification, if the earphones 5-102 are in the worn state, the smartwatch 5-101 may indicate the earphones 5-102 to play a message prompt tone of the travel notification with a sound, and verbally broadcast content of the travel notification.

In some embodiments, a communication connection is established between the smartwatch 5-101 and the electronic device 5-200. The smartwatch 5-101 may provide an incoming call notification and a message notification of a communication application in the electronic device 5-200. The communication application may indicate an application used for information exchange and telephone communication with another user. For example, the communication application may include a Phone application, a Messaging application, a WeChat application, and the like. When the electronic device 5-200 receives an incoming call or a chat message, the electronic device 5-200 may send, to the smartwatch 5-101, information indicating the incoming call or the chat message. Then, the smartwatch 5-101 may give the user a prompt that the electronic device 5-200 receives the incoming call or the chat message. If the earphones 5-102 are in the worn state, the smartwatch 5-101 may indicate the earphones 5-102 to play an incoming call prompt tone or a chat message prompt tone with a sound. The earphones 5-102 may further play call audio on the electronic device 5-200 with a sound, or verbally broadcast content of the chat message received by the electronic device 5-200.

Optionally, a communication connection may be established between the earphones 5-102 and the electronic device 5-300. The smartwatch 5-101 may determine, through the earphones 5-102, that the electronic device 5-300 receives an incoming call or a chat message, and provide an incoming call notification and a message notification of a communication application in the electronic device 5-300.

In addition to the weather update message notification, the message notification of the travel information, the incoming call notification, and the message notification, the smartwatch 5-101 may further provide a corresponding notification for the user based on an obtained message of another type. The foregoing embodiments are implemented, so that the smartwatch 5-101 can provide an intelligent message notification for the user, to bring more convenience to life of the user.

The following describes a function that is provided in an exercise scenario and that is of managing the smartwatch 5-101 and the earphones 5-102.

In some embodiments, the smartwatch 5-101 may provide a plurality of sports modes, for example, an outdoor running mode, an indoor running mode, an outdoor walking mode, an indoor walking mode, an outdoor cycling mode, a swimming mode, a mountain climbing mode, and a hiking mode. The smartwatch 5-101 may enable an exercise mode in response to an operation of enabling the exercise mode, to monitor exercise data of the user. Optionally, the smartwatch 5-101 may further determine, based on data monitored by a sensor like an acceleration sensor or a gyroscope sensor, whether the user is performing sports corresponding to a sports mode, to enable the corresponding sports mode.

When any sports mode is enabled, if the earphones 5-102 are in the worn state, the smartwatch 5-101 may indicate the earphones 5-102 to broadcast a related sports guide with a sound. For example, when the outdoor running mode is enabled, the earphones 5-102 may broadcast, with a sound, a sports guide related to running of the user, for example, running duration, a running distance, a running speed, a heart rate of the user, and a running posture. Specific content of the sports guide is not limited in embodiments of this application.

Optionally, when any sports mode is enabled, in response to an operation of opening a watch cover of the smartwatch 5-101, the smartwatch 5-101 may pause the exercise mode, to pause recording of the exercise data of the user. Further, in response to an operation of closing the watch cover of the smartwatch 5-101, the smartwatch 5-101 may enable the sports mode, and continue to record the exercise data of the user.

Optionally, when any exercise mode is enabled, the smartwatch 5-101 may further indicate the earphones 5-102 to play music with a sound. In this way, the user can wear the earphones 5-102 to listen to the music when performing sports. The smartwatch 5-101 is worn on a wrist of the user. When a wrist flipping action is detected, the smartwatch 5-101 may switch music played with a sound by the earphones 5-102, for example, switch to a next track of music. In other words, in a scenario in which the user wears the smartwatch 5-101 and the earphones 5-102 to perform sports, the user may switch listened music by flipping the wrist. In addition to switching music, the wrist flipping action may be further used to perform another music control (for example, volume adjustment) in an exercise scenario.

Optionally, when any exercise mode is enabled, the smartwatch 5-101 may further indicate the earphones 5-102 to play music with a sound. When a preset gesture is detected, the smartwatch 5-101 may further indicate the earphones 5-102 to pause or resume the music. The preset gesture may be, for example, a gesture of covering the screen of the smartwatch 5-101 by a palm, or a gesture of photographing the screen. The preset gesture is not limited in embodiments of this application.

According to the foregoing embodiments, the user can more conveniently control, in an exercise scenario, a behavior of monitoring exercise data by the smartwatch 5-101, and can conveniently control listened music.

The following describes a foreign object detection function provided by the smartwatch 5-101.

It can be learned from the wearable device shown in FIG. 1 to FIG. 4 that an earphone slot (for example, the left earphone slot and the right earphone slot) is disposed in the watch body of the smartwatch 5-101. The earphone slot may be configured to accommodate the earphones 5-102. In a process of using the smartwatch 5-101, there may be a foreign object (for example, a liquid, a solid, or a semi-solid dirt) in the earphone slot of the smartwatch 5-101. The foreign object in the earphone slot may cause a smudge, corrosion, and rust on surfaces of the smartwatch 5-101 and the earphones 5-102, function exceptions (such as charging and communication exceptions), and the like.

The smartwatch 5-101 may provide a foreign object detection function, to detect whether there is a foreign object in the earphone slot.

In a possible implementation, a foreign object detection apparatus may be disposed in the earphone slot of the smartwatch 5-101. The foreign object detection apparatus may be disposed on a slot wall of the earphone slot in a form of a spring plate. An earphone charging apparatus may be further disposed in the earphone slot of the smartwatch 5-101. The earphone charging apparatus may be configured to charge the earphones 5-102 by the smartwatch 5-101 when the earphones 5-102 are placed in the earphone slot. A manner of disposing the foreign object detection apparatus and the earphone charging apparatus is not limited in embodiments of this application.

A principle of performing foreign object detection on the earphone slot by the smartwatch 5-101 may be specifically as follows:
when both the foreign object detection apparatus and the earphone charging apparatus are in contact with a foreign object, a waveform of a charging signal of the smartwatch 5-101 changes. The charging signal whose waveform changes may be referred to as an abnormal charging signal. If only the earphone charging apparatus or only the foreign object detection apparatus is in contact with the foreign object, the waveform of the charging signal of the smartwatch 5-101 does not change. The charging signal whose waveform remains unchanged may be referred to as a normal charging signal. The smartwatch 5-101 may detect, based on a type of the charging signal, whether there is a foreign object in the earphone slot. When determining that the charging signal is an abnormal charging signal, the smartwatch 5-101 may determine that there is a foreign object in the earphone slot. When determining that the charging signal is a normal charging signal, the smartwatch 5-101 may determine that there is no foreign object in the earphone slot.

The foregoing method is merely an example of the foreign object detection method provided in embodiments of this application. The smartwatch 5-101 may alternatively use another method to detect whether there is a foreign object in the earphone slot.

When detecting that there is a foreign object in the earphone slot, the smartwatch 5-101 may turn off a charging circuit. In this way, when the earphones 5-102 are placed in the earphone slot, the smartwatch 5-101 stops charging the earphones 5-102. There is no charging current between the smartwatch 5-101 and the earphones 5-102. In this way, when there is a foreign object in the earphone slot, a charging exception (for example, a short circuit) can be prevented when the smartwatch 5-101 charges the earphones 5-102, to improve safety of the smartwatch 5-101 charging the earphones 5-102.

It may be understood that, when it is detected that the foreign object in the earphone slot is removed (that is, the type of the charging signal changes from the abnormal charging signal to the normal charging signal), the smartwatch 5-101 may turn on the charging circuit again. In this way, after the foreign object is removed, the smartwatch 5-101 may charge the earphones 5-102 placed in the earphone slot.

Optionally, when it is detected that there is a foreign object in the earphone slot, the smartwatch 5-101 may further send an alert to the user. For example, the smartwatch 5-101 may display a prompt message on the screen, to give the user a prompt that there is a foreign object in the earphone slot and the foreign object needs to be removed as soon as possible. The smartwatch 5-101 may alternatively play a warning tone through a speaker, to give the user a prompt that there is a foreign object in the earphone slot. The smartwatch 5-101 may alternatively notify, through motor vibration, the user that there is a foreign object in the earphone slot. An implementation in which the smartwatch 5-101 gives the user a prompt that there is a foreign object in the earphone slot is not limited in embodiments of this application.

It can be learned from the foregoing embodiments that the smartwatch 5-101 may detect whether there is a foreign object in the earphone slot in the watch body, and after detecting the foreign object, disconnect the charging circuit, to give the user a prompt that the foreign object appears. This can improve safety of the smartwatch 5-101 charging the earphones 5-102, and bring better user experience.

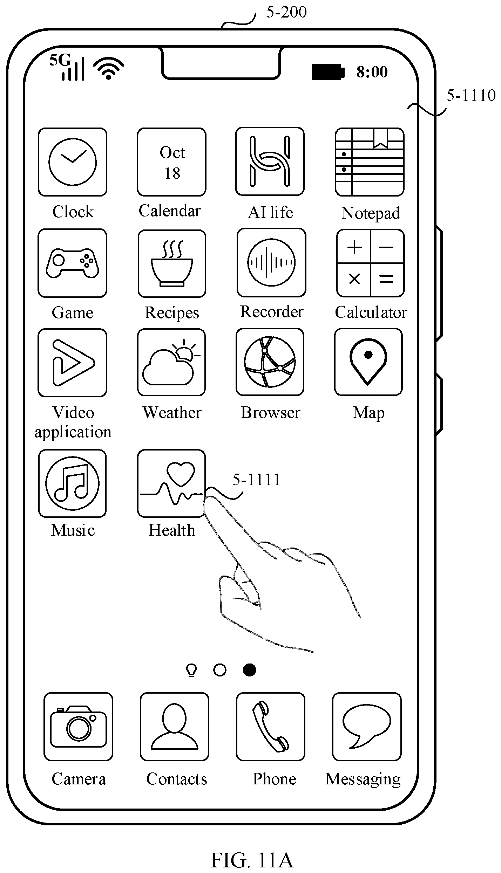

**FIG. 11A to FIG. 11K** **show an example of a scenario in which power management is performed on the smartwatch 5-101 and the earphones 5-102.**
**1. (****FIG. 11A to FIG. 11E****) Display of power of the smartwatch 5-101 and the earphones 5-102**

In some embodiments, the smartwatch 5-101 may display the power of the smartwatch 5-101 and the earphones 5-102. For a scenario in which the smartwatch 5-101 displays power of the smartwatch 5-101, refer to the scenario shown in FIG. 8B. For a scenario in which the smartwatch 5-101 displays power of the earphones 5-102, refer to the scenarios shown in FIG. 6D to FIG. 6F and FIG. 8B. Details are not described herein again.

In some embodiments, the smartwatch 5-101 is paired with the electronic device 5-200, and a communication connection is established between the smartwatch 5-101 and the electronic device 5-200. For a process in which the smartwatch 5-101 performs pairing with and establishes a communication connection to the electronic device 5-200, refer to the descriptions in the foregoing embodiments. The smartwatch 5-101 may send power information of the smartwatch 5-101 and the earphones 5-102 to the electronic device 5-200. The electronic device 5-200 may display the power of the smartwatch 5-101 and the earphones 5-102 based on the received power information. In this way, the user may further view the power of the smartwatch 5-101 and the earphones 5-102 on the electronic device 5-200.

It should be noted that an application for managing the smartwatch 5-101 and the earphones 5-102 may be installed in the smartwatch 5-101. The application for managing the smartwatch 5-101 and the earphones 5-102 may be, for example, a Health application. The smartwatch 5-101 may display, on a user interface of the Health application, the power of the smartwatch 5-101 and the earphones 5-102, and related controls for managing the smartwatch 5-101 and the earphones 5-102. The application for managing the smartwatch 5-101 and the earphones 5-102 is not limited in embodiments of this application. In subsequent embodiments, the Health application is specifically used as an example for description.

As shown in FIG. 11A, the electronic device 5-200 may display a user interface 5-1110. The user interface 5-1110 may include an application icon, for example, a Health application icon 5-1111. In response to an operation performed on the Health application icon 5-1111, the smartwatch 5-101 may start the Health application.

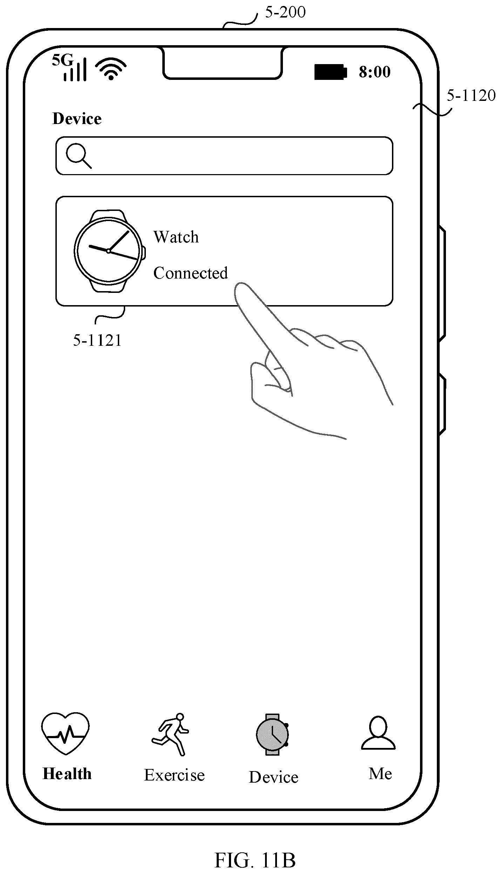

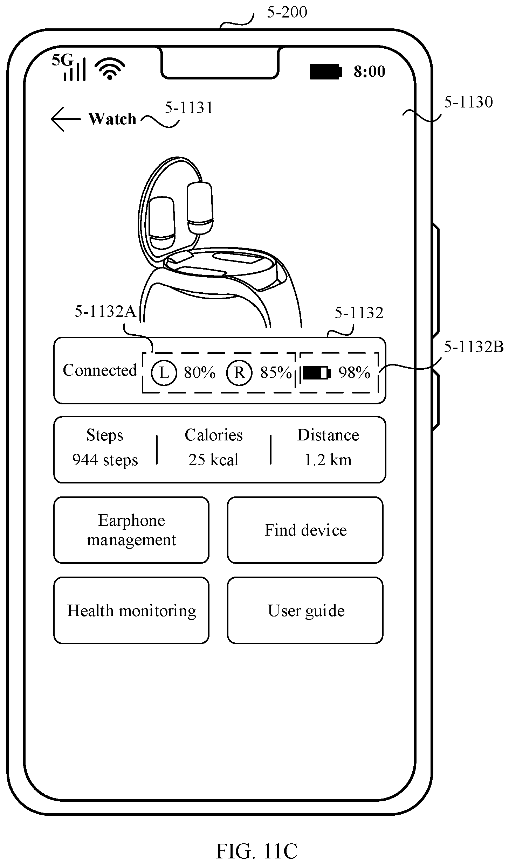

As shown in FIG. 11B, when the Health application is started, the smartwatch 5-101 may display a user interface 5-1120. The user interface 5-1120 may include a device option 5-1121. The device option 5-1121 may be a device option corresponding to the smartwatch 5-101. A device icon and a device name of the smartwatch 5-101 and a status of a connection between the smartwatch 5-101 and the electronic device 5-200 may be displayed on the device option 5-1121. Content displayed on the device option 5-1121 is not limited in embodiments of this application. In response to an operation performed on the device option 5-1121, the electronic device 5-200 may display a user interface 5-1130 shown in FIG. 11C. The user interface 5-1130 may be a user interface for managing the smartwatch 5-101 and the earphones 5-102 in the Health application.

As shown in FIG. 11C, the user interface 5-1130 may include a page title 5-1131 and a device information display box 5-1132.

The page title 5-1131 may indicate a device corresponding to the user interface 5-1131. For example, the page title 5-1131 may be a name "Watch" of the smartwatch 5-101.

The device information display box 5-1132 may include earphone power information 5-1132A, smartwatch power information 5-1132B, and the status of the connection between the smartwatch 5-101 and the electronic device 5-200. The earphone power information 5-1132A may indicate current power of two earphones in the earphones 5-102. For example, it can be learned from the earphone power information 5-1132A that, for the earphones 5-102, power of the left earphone is 80% of full power, and power of the right earphone is 85% of full power. The smartwatch power information 5-1132B may indicate current power of the smartwatch 5-101. For example, it can be learned from the smartwatch power information 5-1132B that the power of the smartwatch 5-101 is 98% of full power. That the status of the connection between the smartwatch 5-101 and the electronic device 5-200 is "Connected" may indicate that there is a communication connection between the smartwatch 5-101 and the electronic device 5-200 currently.

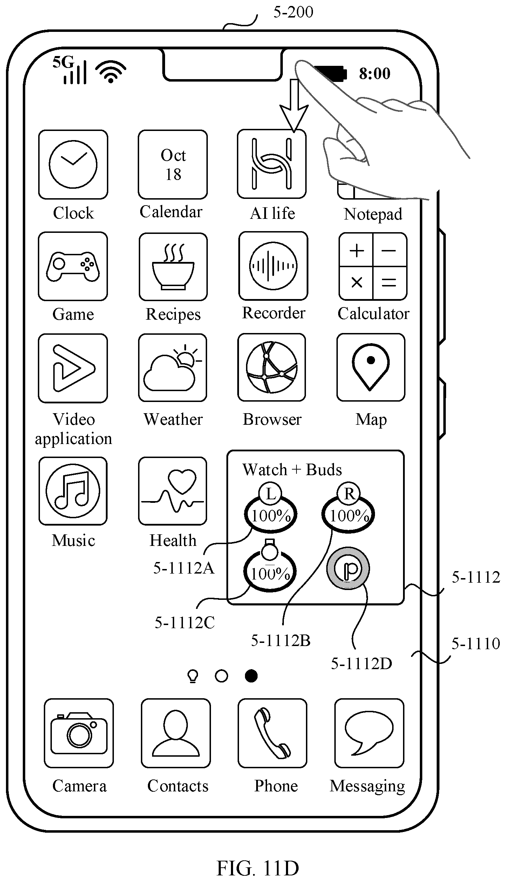

As shown in FIG. 11D, the electronic device 5-200 may further display a service widget 5-1112 on the user interface 5-1110. The service widget 5-1112 may include left earphone power information 5-1112A, right earphone power information 5-1112B, smartwatch power information 5-1112C, and a noise cancellation switching control 5-1112D. The left earphone power information 5-1112A may indicate current power of the left earphone in the earphones 5-102. The right earphone power information 5-1112B may indicate current power of the right earphone in the earphones 5-102. The smartwatch power information 5-1112C may indicate the current power of the smartwatch 5-101. For the noise cancellation switching control 5-1112D, refer to the descriptions of the noise cancellation switching control 5-826 shown in FIG. 8B. In other words, the user may add, to the user interface of the electronic device 5-200, a service widget related to the smartwatch 5-101 and the earphones 5-102, to conveniently view the power of the smartwatch 5-101 and the earphones 5-102 through the service widget.

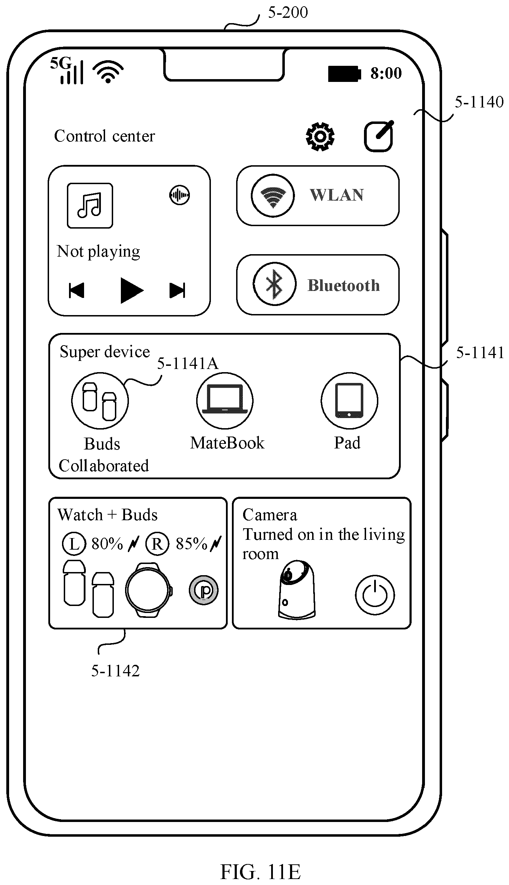

In response to a pull-down operation of sliding downward from a top right area of a screen of the electronic device 5-200 shown in FIG. 11D, the electronic device 5-200 may display a user interface 5-1140 shown in FIG. 11E. The user interface 5-1140 may be a pull-down control interface of the electronic device 5-200. A user operation for opening the pull-down control interface is not limited in embodiments of this application.

As shown in FIG. 11E, the user interface 5-200 may include a device list widget 5-1141 and a wearable device widget 5-1142.

Icons of one or more devices may be displayed in the device list widget 5-1141. The one or more devices may include a device currently connected to the electronic device 5-200, a device detected by the electronic device 5-200 but not connected to the electronic device 5-200, and the like. For example, the electronic device 5-200 is currently connected to the earphones 5-102, and plays music with a sound through the earphones 5-102. The electronic device 5-200 may display an earphone icon 5-1141A shown in FIG. 11E in the device list widget 5-1141.

The wearable device widget 5-1142 may be used to open a user interface (for example, the user interface 5-1130 shown in FIG. 11C) for managing the smartwatch 5-101 and the earphones 5-102. Power information of the earphones 5-102 may be displayed in the wearable device widget 5-1142. Optionally, power information of the smartwatch 5-101 may also be displayed in the wearable device widget 5-1142. In other words, the user may open the pull-down control interface by using the pull-down operation, and quickly view the power of the smartwatch 5-101 and the earphones 5-102 on the pull-down control interface.

In addition to the user interface, the service widget, and the pull-down control interface of the Health application, the electronic device 5-200 may further display the power information of the smartwatch 5-101 and the earphones 5-102 at another location. For example, the electronic device 5-200 may alternatively display the power information of the smartwatch 5-101 and the earphones 5-102 on a leftmost screen interface. A location at which the electronic device 5-200 displays the power information of the smartwatch 5-101 and the earphones 5-102 is not limited in embodiments of this application.

It can be learned from the scenario shown in FIG. 11A to FIG. 11E that the electronic device 5-200 may display the power information of the smartwatch 5-101 and the earphones 5-102 at a plurality of locations, and the user may quickly view the power of the smartwatch 5-101 and the earphones 5-102 by using a plurality of operations.

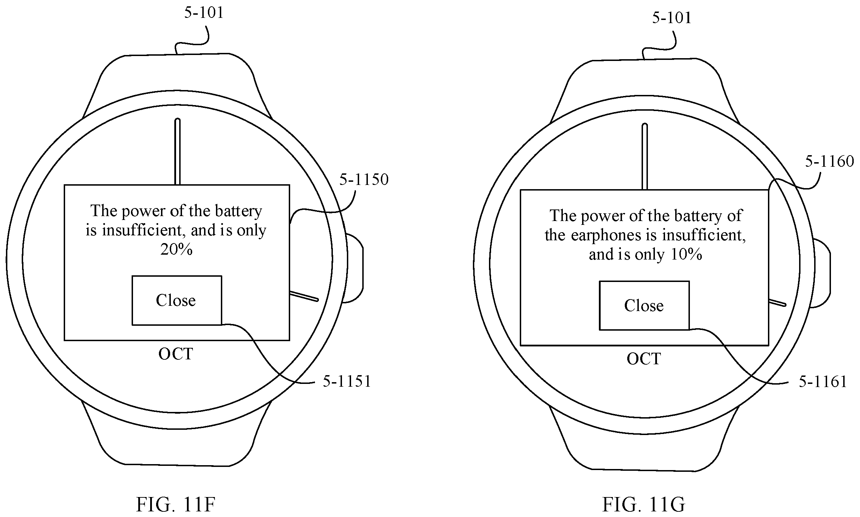

**2. (****FIG. 11F to FIG. 11H****) Low power notifications of the smartwatch 5-101 and the earphones 5-102**

In some embodiments, the smartwatch 5-101 may provide a low power notification when the power of the smartwatch 5-101 is low, to prompt the user to charge the smartwatch 5-101 in a timely manner.

For example, when it is detected that the power of the smartwatch 5-101 is 20% of the full power, the smartwatch 5-101 may display a prompt box 5-1150 shown in FIG. 11F. The prompt box 5-1150 may include prompt content "The power of the battery is insufficient, and is only 20%", to give the user a prompt that the power of the smartwatch 5-101 is low. The prompt box 5-1150 may further include a close control 5-1151. The close control 5-1151 may be used to close the prompt box 5-1150.

When it is detected that the power of the smartwatch 5-101 is 10% of the full power, the smartwatch 5-101 may give the user a prompt that the power of the smartwatch is only 10%. When it is detected that the power of the smartwatch 5-101 is 5% of the full power, the smartwatch 5-101 may give the user a prompt that the power of the smartwatch is only 5%. For low power notifications provided by the smartwatch 5-101 when the power is 10% and 5% of the full power, refer to the prompt box 5-1150 shown in FIG. 11F.

Not limited to the power of 20%, the power of 10%, and the power of 5%, the smartwatch 5-101 may further provide a low power notification when the power of the smartwatch 5-101 is another low power value.

In some embodiments, the smartwatch 5-101 may provide a low power notification when the power of the earphones 5-102 is low, to prompt the user to charge the earphones 5-102 in a timely manner.

The smartwatch 5-101 may obtain power information of the earphones 5-102. For example, when the earphones 5-102 are placed in an earphone slot in a watch body of the smartwatch 5-101, the smartwatch 5-101 may obtain the power information of the earphones 5-102 through a physical connection (for example, a charging electrode) between the smartwatch 5-101 and the earphones 5-102. For another example, when the earphones 5-102 are in an out state, the smartwatch 5-101 may obtain the power information of the earphones 5-102 through a Bluetooth communication connection between the smartwatch 5-101 and the earphones 5-102. A method in which the smartwatch 5-101 obtains the power information of the earphones 5-102 is not limited in embodiments of this application.

When it is detected that power of at least one earphone in the earphones 5-102 is 10% of full power, the smartwatch 5-101 may display a prompt box 5-1160 shown in FIG. 11G. The prompt box 5-1160 may include prompt content "The power of the battery of the earphones is insufficient, and is only 10%", to give the user a prompt that the power of the earphones 5-102 is low. The prompt box 5-1160 may further include a close control 5-1161. The close control 5-1161 may be used to close the prompt box 5-1160.

When it is detected that power of at least one earphone in the earphones 5-102 is 20% (or 5%) of the full power, the smartwatch 5-101 may give the user a prompt that the power of the earphones 5-102 is only 20% (or 5%). For a low power notification provided by the smartwatch 5-101 when the power of the earphones 5-102 is 20% (or 5%) of the full power, refer to the prompt box 5-1160 shown in FIG. 11G.

Not limited to the power of 20%, the power of 10%, and the power of 5%, the smartwatch 5-101 may further provide a low power notification when the power of the earphones 5-102 is another low power value.

In some embodiments, when the earphones 5-102 are in a worn state, if the power of the earphones 5-102 is low, the earphones 5-102 may prompt, through a low power prompt tone or a verbally broadcast low power notification, the user to charge the earphones 5-102 in a timely manner. An earphone 5-102A in the earphones 5-102 may detect whether power of the earphone 5-102A is low, and give a low power notification of the earphone 5-102A. An earphone 5-102B in the earphones 5-102 may detect whether power of the earphone 5-102B is low, and give a low power notification of the earphone 5-102B. The following uses 5-102A as an example to describe how to give a low power notification.

For example, when it is detected that the power of the earphone 5-102A is 20% (or 10%, or 5%) of full power, the earphone 5-102A may play a low power prompt tone with a sound or verbally broadcast a low power notification. Content of the verbally broadcast low power notification may include "The power of the battery is low, and is only 20% (or 10%, or 5%)". In this way, when wearing the earphone 5-102A, the user may learn, through a notification of the earphone 5-102A, that the power of the earphone 5-102A is low, to charge the earphone 5-102A in a timely manner.

It can be learned from the scenario shown in FIG. 11A to FIG. 11E that the electronic device 5-200 may also obtain the power information of the smartwatch 5-101 and the earphones 5-102.

In some embodiments, when it is detected that the power of the smartwatch 5-101 is low (for example, it is detected that the power of the smartwatch 5-101 reaches a preset power value), the electronic device 5-200 may provide a low power notification indicating that the power of the smartwatch 5-101 is insufficient. The preset power value may be, for example, power of 20%, power of 10%, or power of 5%. A value of the preset power value is not limited in embodiments of this application.

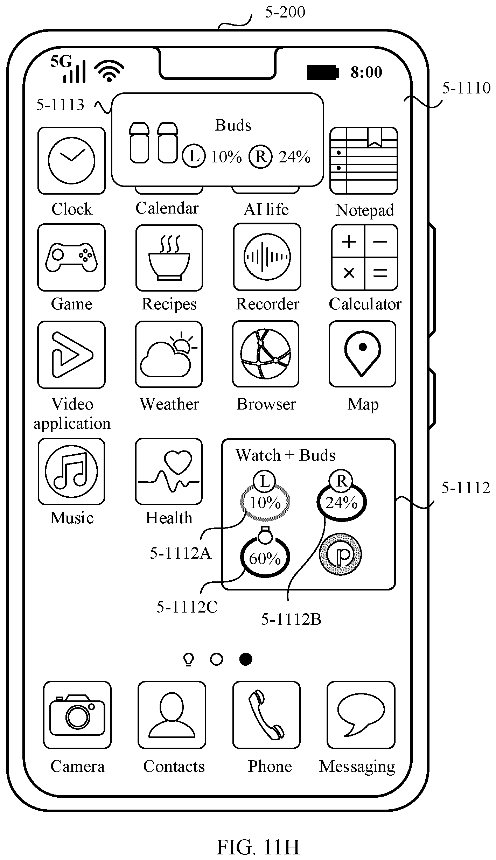

In some embodiments, when it is detected that power of at least one earphone in the earphones 5-102 is low (for example, it is detected that the power of the at least one earphone in the earphones 5-102 reaches a preset power value), the electronic device 5-200 may provide a low power notification indicating that the power of the earphones 5-102 is insufficient. For example, when it is detected that the power of the at least one earphone in the earphones 5-102 is low, the electronic device 5-200 may display a prompt box 5-1113 shown in FIG. 11H. The prompt box 5-1113 may include power information of the two earphones in the earphones 5-102. For example, it can be learned from the prompt box 5-1113 that the power of the left earphone in the earphones 5-102 is 10%. The power of the right earphone in the earphones 5-102 is 24%. The prompt box 5-1113 may give the user a prompt that the power of the earphones 5-102 is low and the earphones 5-102 need to be charged in a timely manner.

As shown in FIG. 11H, the user interface 5-1110 may further include a service widget 5-1112. For the service widget 5-1112, refer to the descriptions in the foregoing embodiments. Display styles of the left earphone power information 5-1112A, the right earphone power information 5-1112B, and the smartwatch power information 5-1112C included in the service widget 5-1112 may change with a change of corresponding device power. Herein, a change of a display style of the left earphone power information 5-1112A is used as an example for description. For changes of display styles of the right earphone power information 5-1112B and the smartwatch power information 5-1112C, refer to the change of the display style of the left earphone power information 5-1112A.

When the power of the left earphone in the earphones 5-102 reaches or is lower than the preset power value, for a display style of the left earphone power information 5-1112A, refer to the left-earphone power information 5-1112A shown in FIG. 11H. When the power of the left earphone in the earphones 5-102 is higher than the preset power value, for a display style of the left earphone power information 5-1112A, refer to the left earphone power information 5-1112A shown in FIG. 11D. It can be learned by comparing FIG. 11D and FIG. 11H that the left earphone power information 5-1112A may be presented in different display styles in different colors as the left earphone power information changes. The different display styles of the left earphone power information 5-1112A are not limited in embodiments of this application.

It can be learned from the scenario shown in FIG. 11F to FIG. 11H that both the smartwatch 5-101 and the electronic device 5-200 may provide the low power notifications of the smartwatch 5-101 and the earphones 5-102. The earphones 5-102 may also provide a low power notification of the earphones 5-102. The low power notifications may prompt the user to charge the smartwatch 5-101 and the earphones 5-102 in a timely manner, to reduce a case in which the smartwatch 5-101 and the earphones 5-102 are automatically powered off due to running out of power.

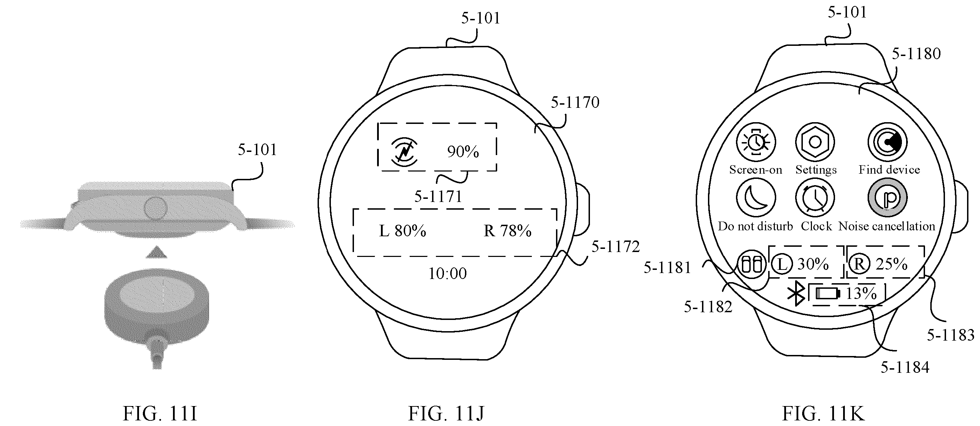

**3. (****FIG. 11I to FIG. 11K****) Charging statuses of the smartwatch 5-101 and the earphones 5-102**

In some embodiments, when the smartwatch 5-101 is not connected to a charging apparatus, the smartwatch 5-101 may charge, with a battery of the smartwatch 5-101, the earphones 5-102 placed in the earphone slot.

As shown in FIG. 11I, when the smartwatch 5-101 is connected to the charging apparatus, the smartwatch 5-101 may enter a charged state, and display a user interface 5-1170 shown in FIG. 11J. The charging apparatus may be, for example, a wireless charging cradle. The charging apparatus is not limited in embodiments of this application.

As shown in FIG. 11J, the user interface 5-1170 may include smartwatch charging information 5-1171 and earphone charging information 5-1172. The smartwatch charging information 5-1171 may indicate the current power of the smartwatch 5-101. The earphone charging information 5-1172 may indicate the current power of the earphones 5-102. It should be noted that, if there is an earphone placed in only one earphone slot in the watch body of the smartwatch 5-101, the earphone charging information 5-1172 on the user interface 5-1170 may include only power of the earphone placed in the earphone slot. If the two earphones in the earphones 5-102 are in the out state, the user interface 5-1170 may not include the earphone charging information.

In some embodiments, when the earphones 5-102 are in an in state, after the smartwatch 5-101 is connected to the charging apparatus, the charging apparatus may simultaneously charge the smartwatch 5-101 and the earphones 5-102. In other words, power for charging both the smartwatch 5-101 and the earphones 5-102 is from the charging apparatus. The smartwatch 5-101 may not need to charge, with the battery of the smartwatch 5-101, the earphones 5-102.

In some embodiments, when the earphones 5-102 are in the in state, after the smartwatch 5-101 is connected to the charging apparatus, the charging apparatus may charge the smartwatch 5-101 and the earphones 5-102 according to a preset watch and earphone charging time sequence. For example, the charging apparatus may first charge the earphones 5-102. After the power of the earphones 5-102 reaches preset power (for example, 50% or 60%), the charging apparatus may charge the watch 5-101. After the smartwatch 5-101 is fully charged, if the charging apparatus is still connected to the smartwatch 5-101, the charging apparatus may continue to charge the earphones 5-102 until the earphones 5-102 are fully charged. For another example, the charging apparatus may first charge the watch 5-101. After the watch 5-101 is fully charged, the charging apparatus may charge the earphones 5-102. This can improve charging efficiency. In a scenario in which time for which the smartwatch 5-101 is connected to the charging apparatus is short, the charging apparatus preferentially charges the smartwatch 5-101. Subsequently, after the smartwatch 5-101 is disconnected from the charging apparatus, the earphones 5-102 may be further charged by the smartwatch 5-101. The preset watch and earphone charging time sequence is not limited in embodiments of this application.

In some embodiments, when the power of the smartwatch 5-101 is lower than a power threshold, the smartwatch 5-101 may stop charging the earphones 5-102 in the earphone slot.

As shown in FIG. 11K, the smartwatch 5-101 may display a user interface 5-1180. For the user interface 5-1180, refer to the user interface 5-820 shown in FIG. 8B. The user interface 5-1190 may include earphone in-compartment information 5-1181, left earphone information 5-1182, right earphone information 5-1183, and a power identifier 5-1184.

The earphone in-compartment information 5-1181 may indicate that the two earphones in the earphones 5-102 are both in the in state.

The left earphone information 5-1182 and the right earphone information 5-1183 may respectively indicate related information (for example, power and whether the left earphone and the right earphone are in a charged state) of the left earphone and the right earphone in the earphones 5-102. If the left earphone and the right earphone are in the charged state, the left earphone information 5-1182 and the right earphone information 5-1183 may include charging icons in the left earphone information 5-828 and the right earphone information 5-829 shown in FIG. 8B. That the left earphone information 5-1182 and the right earphone information 5-1183 do not include the charging icons may indicate that the left earphone and the right earphone are not in the charged state.

The power identifier 5-1184 may indicate the current power of the smartwatch 5-101. For example, the power identifier 5-1184 includes " 13%". "13%" may indicate that the current power of the smartwatch 5-101 is 13% of the full power.

If the power threshold is 20%, the smartwatch 5-101 may detect that the current power of the smartwatch 5-101 is lower than the power threshold. Therefore, when the earphones 5-102 are placed in the earphone slot, the smartwatch 5-101 may not charge the earphones 5-102. Content of the left earphone information 5-1182 and the right earphone information 5-1183 may be content shown in FIG. 11K but does not include the charging icons. A value of the power threshold is not limited in embodiments of this application.

According to the foregoing embodiments, when the power of the smartwatch 5-101 is excessively low, it can be ensured as much as possible that the smartwatch 5-101 has power, to reduce a case in which the smartwatch 5-101 is automatically powered off because the smartwatch 5-101 runs out of power.

In some embodiments, when the smartwatch 5-101 charges, with the battery of the smartwatch 5-101, the earphones 5-102 placed in a compartment, the smartwatch 5-101 may charge the earphones 5-102 to a preset power value. When the power of the earphones 5-102 is the preset power value, the smartwatch 5-101 may stop charging the earphones 5-102. The preset power value may be preset before delivery of the smartwatch 5-101. Optionally, the preset power value may be determined by the smartwatch 5-101 based on a use habit of the user. Optionally, the preset power value may be set by the user. For example, the preset power value may be a value like 50% or 60%. A method for determining the preset power value and a value of the preset power value are not limited in embodiments of this application.

According to the foregoing embodiments, when the smartwatch 5-101 charges the earphones 5-102 when the smartwatch 5-101 is not connected to the charging apparatus, the earphones 5-102 are only charged to the preset power value but not fully charged, so that the power of the smartwatch 5-101 and the earphones 5-102 can be properly allocated, and standby time of the smartwatch 5-101 and the earphones 5-102 is prolonged.

**4. Low power consumption modes of the smartwatch 5-101 and the earphones 5-102**

In some embodiments, the smartwatch 5-101 may have a low power consumption mode. When the smartwatch 5-101 enters the low power consumption mode, one or more functions of the smartwatch may be disabled. The one or more functions may include heart rate monitoring, blood pressure monitoring, a wrist-raise-to-wake function, a message push function, and the like. The function disabled when the smartwatch 5-101 is in the low power consumption mode is not limited in embodiments of this application. The smartwatch 5-101 may provide a low power consumption switch. In response to an operation performed on the low power consumption switch to enable the low power consumption mode, the smartwatch 5-101 may enter the low power consumption mode. In other words, the user may enable or disable, with one click, the low power consumption mode of the smartwatch 5-101 through the low power consumption switch.

In some embodiments, the smartwatch 5-101 may provide a switch corresponding to each function, for example, a heart rate monitoring switch, a blood pressure monitoring switch, a wrist-raise-to-wake switch, and a message push switch. A switch corresponding to a function may be used to enable or disable the function. In this way, the user may enable or disable a corresponding function in the smartwatch 5-101 based on a requirement of the user.

In some embodiments, the earphones 5-102 may have a low power consumption mode. When the earphones 5-102 enter the low power consumption mode, the earphones may keep a wearing detection function enabled, and disable other functions. The earphones 5-102 may detect, through the wearing detection function, whether the earphones 5-102 are in the worn state. When it is detected that the earphones 5-102 are in the worn state, the earphones 5-102 may disable the low power consumption mode. When it is detected that the earphones 5-102 are in a not-worn state, the earphones 5-102 may enable the low power consumption mode, to save power of the earphones 5-102.

In some embodiments, the smartwatch 5-101 may provide a switch corresponding to each function that can be implemented by the earphones 5-102, for example, a call switch, a recording switch, a music switch, or a voice wakeup switch. A switch corresponding to a function may be used to enable or disable the function. In this way, the user may enable or disable a corresponding function in the earphones 5-102 based on a requirement of the user.

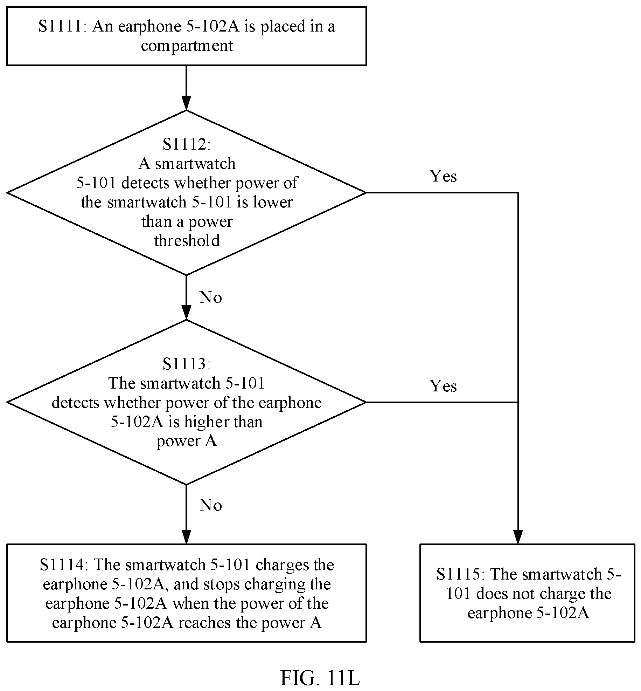

**FIG. 11L** **is an example of a flowchart of a power management method for a wearable device.**

As shown in FIG. 11L, the power management method may include step S1111 to step S1115. The smartwatch 5-101 is not connected to the charging apparatus. The smartwatch 5-101 may charge, with the battery of the smartwatch 5-101, the earphones placed in the compartment.

S1111: The earphone 5-102A is placed in the compartment.

After any one earphone in the earphones 5-102 is placed in a compartment, the smartwatch 5-101 may charge the earphone in the in state. Here, the earphone 5-102A is specifically used as an example for description. For a method in which the smartwatch 5-101 charges the other earphone (namely, the earphone 5-102B) in the earphones 5-102, refer to the method in which the smartwatch 5-101 charges the earphone 5-102A shown in FIG. 11L. Details are not described herein again.

S1112: The smartwatch 5-101 detects whether the power of the smartwatch 5-101 is lower than the power threshold.

When it is detected that the earphone 5-102A is placed in the compartment, the smartwatch 5-101 may detect whether the power of the smartwatch 5-101 is lower than the power threshold. The power threshold may be, for example, a value like 30% of the full power of the smartwatch 5-101 or 20% of the full power of the smartwatch 5-101. A value of the power threshold is not limited in embodiments of this application.

When the power of the smartwatch 5-101 is not lower than the power threshold, the smartwatch 5-101 may perform the following step S1113.

When the power of the smartwatch 5-101 is lower than the power threshold, the smartwatch 5-101 may perform the following step S1115.

S1113: The smartwatch 5-101 detects whether the power of the earphone 5-102A is higher than power A.

The smartwatch 5-101 may obtain power information of the earphone 5-102A, and detect whether the power of the earphone 5-102A is higher than the power A. The power A may be preset before delivery of the smartwatch 5-101. Optionally, the power A may be determined by the smartwatch 5-101 based on a use habit of the user. Optionally, the power A may be set by the user. For example, the power A may be a value like 50% of the full power of the earphone or 60% of the full power of the earphone. A method for determining the power A and a value of the power A are not limited in embodiments of this application.

When the power of the earphone 5-102A is not higher than the power A, the smartwatch 5-101 may perform the following step S1114.

When the power of the earphone 5-102A is higher than the power A, the smartwatch 5-101 may perform the following step S1115.

S1114: The smartwatch 5-101 charges the earphone 5-102A, and stops charging the earphone 5-102A when the power of the earphone 5-102A reaches the power A.

When the power of the smartwatch 5-101 is not lower than the power threshold, and the power of the earphone 5-102A is not higher than the power A, the smartwatch 5-101 may charge the earphone 5-102A. When the power of the earphone 5-102A reaches the power A, the smartwatch 5-101 may stop charging the earphone 5-102A.

In a process in which the smartwatch 5-101 charges the earphone 5-102A, if the power of the earphone 5-102A does not reach the power A, but the power of the smartwatch 5-101 is lower than the power threshold, the smartwatch 5-101 may also stop charging the earphone 5-102A.

S1115: The smartwatch 5-101 does not charge the earphone 5-102A.

It may be understood that, when the power of the smartwatch 5-101 is lower than the power threshold, the smartwatch 5-101 may enter a mode of power only for the watch. The mode of power only for the watch may also be referred to as a name like "watch only mode". When in the mode of power only for the watch, the smartwatch 5-101 may not charge the earphones 5-102 in the in case. In this way, a case in which the smartwatch 5-101 runs out of power because the smartwatch 5-101 charges the earphones 5-102 when the power of the smartwatch is low can be avoided.

It should be noted that an execution sequence of step S1112 and step S1113 is not limited in embodiments of this application. In a possible implementation, the smartwatch 5-101 may simultaneously perform step S1112 and step S1113. Optionally, the smartwatch 5-101 may alternatively first perform step S1113, and then perform step S1112.

It can be learned from the method shown in FIG. 11L that, when the smartwatch 5-101 charges the earphones 5-102 when the smartwatch 5-101 is not connected to the charging apparatus, the earphones 5-102 are only charged to the preset power value but not fully charged, so that the power of the smartwatch 5-101 and the earphones 5-102 can be properly allocated, and standby time of the smartwatch 5-101 and the earphones 5-102 is prolonged.

In a possible implementation, the smartwatch 5-101 may not perform step S1112 and step S1113. In other words, both step S1112 and step S1113 are optional. Regardless of the power of the smartwatch 5-101 and the earphone 5-102A, the smartwatch 5-101 can charge the earphone 5-102A after the earphone 5-102A is placed in the compartment.

In a possible implementation, the smartwatch 5-101 may not perform step S1112. Specifically, after the earphone 5-102A is placed in the compartment, the smartwatch 5-101 may detect whether the power of the earphone 5-102A is higher than the power A (namely, step S1113). Then, the smartwatch 5-101 may determine, according to step S1114 and step S1115, whether to charge the earphone 5-102A.

In a possible implementation, the smartwatch 5-101 may not perform step S1113. Specifically, after the earphone 5-102A is placed in the compartment, the smartwatch 5-101 may detect whether the power of the smartwatch 5-101 is lower than the power threshold (namely, step S1112). When the power of the smartwatch 5-101 is lower than the power threshold, the smartwatch 5-101 may not charge the earphone 5-102A. When the power of the smartwatch 5-101 is not lower than the power threshold, the smartwatch 5-101 may charge the earphone 5-102A until the earphone 5-102A is fully charged.

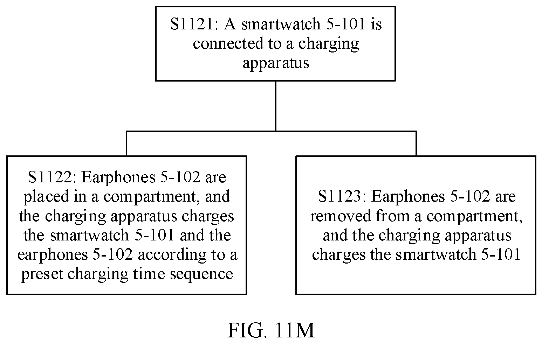

**FIG. 11M** **is an example of a flowchart of another power management method for a wearable device.**

As shown in FIG. 11M, the power management method may include step S1121 to step S1123.

S1121: The smartwatch 5-101 is connected to the charging apparatus.

S1122: The earphones 5-102 are placed in the compartment, and the charging apparatus charges the smartwatch 5-101 and the earphones 5-102 according to a preset charging time sequence.

The charging apparatus may be configured to charge the smartwatch 5-101 and/or the earphones 5-102.

When one earphone or two earphones in the earphones 5-102 are placed in a compartment (compartments), the charging apparatus may charge, according to the preset charging time sequence, the smartwatch 5-101 and the earphone that is in the earphones 5-102 and that is in the in state.

In a possible implementation, the preset charging time sequence may be simultaneously charging the smartwatch 5-101 and the earphones 5-102. That is, after the smartwatch 5-101 is connected to the charging apparatus, the charging apparatus may simultaneously charge the smartwatch 5-101 and the earphone that is in the earphones 5-102 and that is in the in state.

In another possible implementation, the preset charging time sequence may be charging the earphones 5-102 first, and then charging the smartwatch 5-101 after the power of the earphones 5-102 reaches the preset power (for example, 50% or 60%). After the power of the smartwatch 5-101 is fully charged, the earphones 5-102 are fully charged. That is, after the smartwatch 5-101 is connected to the charging apparatus, the charging apparatus may first charge the earphones 5-102 to the preset power, and then charge the smartwatch 5-101. After the charging apparatus fully charges the smartwatch 5-101, the charging apparatus may continue to charge the earphones 5-102. If the power of the earphones 5-102 in a case in which the earphones 5-102 are placed in the compartment is higher than the preset power, the charging apparatus may directly charge the smartwatch 5-101.

In another possible implementation, the preset charging time sequence may be charging the smartwatch 5-101 first, and then charging the earphones 5-102 after the smartwatch 5-101 is fully charged.

The preset charging time sequence is not limited in embodiments of this application. The preset charging time sequence may be preset before delivery of the smartwatch 5-101 and the earphones 5-102. Alternatively, the preset charging time sequence may be determined by the smartwatch 5-101 based on a use habit of the user. Alternatively, the preset charging time sequence may be set by the user.

S1123: The earphones 5-102 are removed from the compartment, and the charging apparatus charges the smartwatch 5-101.

When the two earphones in the earphones 5-102 are both in the out state, the charging apparatus may charge only the smartwatch 5-101.

In a possible implementation, when the smartwatch 5-101 is fully charged, the charging apparatus may be powered off to ensure charging safety.

In a possible implementation, in a process in which the charging apparatus charges the smartwatch 5-101, if the earphones 5-102 are placed in the compartment, the charging apparatus may charge the smartwatch 5-101 and the earphones 5-102 according to the preset charging time sequence in step S1122.

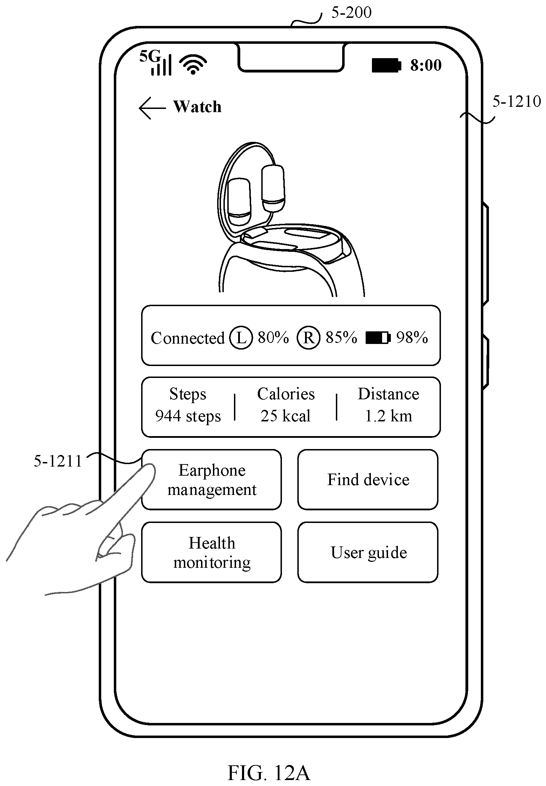

**FIG. 12A to FIG. 12I** **show an example of a scenario of managing a wearable device through the electronic device 5-200.**

In some embodiments, the smartwatch 5-101 is paired with the electronic device 5-200, and a communication connection is established between the smartwatch 5-101 and the electronic device 5-200. The electronic device 5-200 may manage the smartwatch 5-101, and manage the earphones 5-102 through the smartwatch 5-101. When the electronic device 5-200 establishes a communication connection to the earphones 5-102, the electronic device 5-200 may alternatively directly manage the earphones 5-102.

As shown in FIG. 12A, the electronic device 5-200 may display a user interface 5-1210. For the user interface 5-1210, refer to the user interface 5-1130 shown in FIG. 11C. The user interface 5-1210 may include an earphone management control 5-1211. The earphone management control 5-1211 may be used to open a user interface for managing the earphones 5-102. The user interface 5-1210 may further include more controls for managing the smartwatch 5-101. This is not limited in embodiments of this application.

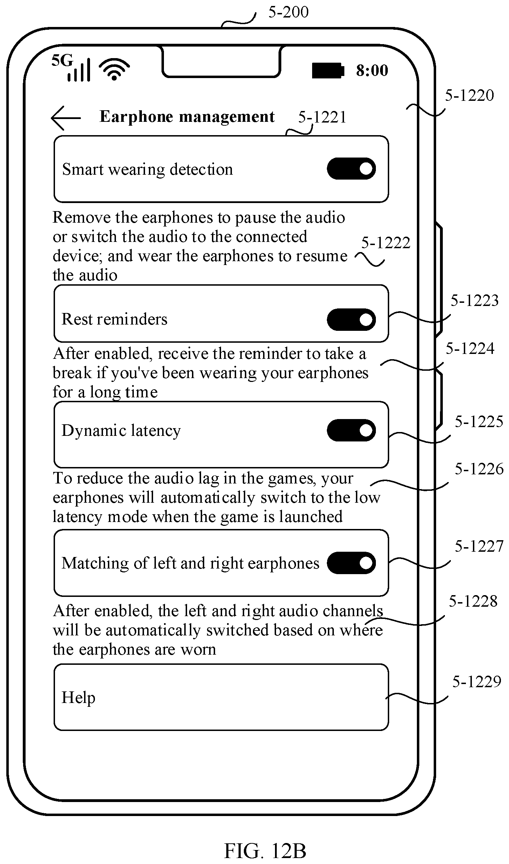

In response to an operation performed on the earphone management control 5-1211, the electronic device 5-200 may display a user interface 5-1220 shown in FIG. 12B.

As shown in FIG. 12B, the user interface 5-1220 may include a wearing detection option 5-1221, a wearing detection introduction 5-1222, a healthy earphone use option 5-1223, a healthy earphone use introduction 5-1224, a game low-latency option 5-1225, a game low-latency introduction 5-1226, a left and right ear recognition option 5-1227, a left and right ear recognition introduction 5-1228, and a help option 5-1229.

The wearing detection option 5-1221 may include a switch used to enable or disable a wearing detection function. The wearing detection function may be a function of detecting whether the earphones 5-102 are in a worn state. For example, in response to an operation of enabling the wearing detection function through the wearing detection option 5-1221, the electronic device 5-200 may send, to the earphones 5-102 through the smartwatch 5-101 or directly, an instruction for enabling the wearing detection function. The earphones 5-102 may enable the wearing detection function according to the instruction for enabling the wearing detection function.

The wearing detection introduction 5-1222 may be used to describe a function of the wearing detection function. Content of the wearing detection introduction 5-1222 is not limited in embodiments of this application.

The healthy earphone use option 5-1223 may include a switch used to enable or disable a healthy earphone use prompt function. The healthy earphone use prompt function may be a function of prompting the user with healthy use of the earphones after the earphones 5-102 are worn for more than preset duration. For example, in response to an operation of enabling the healthy earphone use prompt function through the healthy earphone use option 5-1223, the electronic device 5-200 may send, to the earphones 5-102 through the smartwatch 5-101 or directly, an instruction for enabling the healthy earphone use prompt function. The earphones 5-102 may enable the healthy earphone use prompt function according to the instruction for enabling the healthy earphone use prompt function. The earphones 5-102 may detect duration in which the earphones 5-102 are in the worn state. When the duration in which the earphones 5-102 are in the worn state exceeds the preset duration, the earphones 5-102 may prompt, with a sound, the user to take off the earphones, to protect hearing health.

The healthy earphone use introduction 5-1224 may be used to describe a function of the healthy earphone use prompt function. Content of the healthy earphone use introduction 5-1224 is not limited in embodiments of this application.

The game low-latency option 5-1225 may include a switch used to enable or disable a game low-latency function. The game low-latency function may be a function of reducing a latency of playing a game sound with a sound by the earphones 5-102.

The game low-latency introduction 5-1226 may be used to describe a function of the game low-latency function.

The left and right ear recognition option 5-1227 may include a switch used to enable or disable a left and right ear recognition function. The left and right ear recognition function may be a function in which the earphones 5-102 recognize a wearing location and automatically switches between a left audio channel and a right audio channel, so that the left audio channel and the right audio channel correspond to a left ear and a right ear.

The left and right ear recognition introduction 5-1228 may be used to describe a function of the left and right ear recognition function.

The help option 5-1229 may be used to view more instructions for using the earphones 5-102.

**The following describes the left and right ear recognition function of the earphones 5-102.**

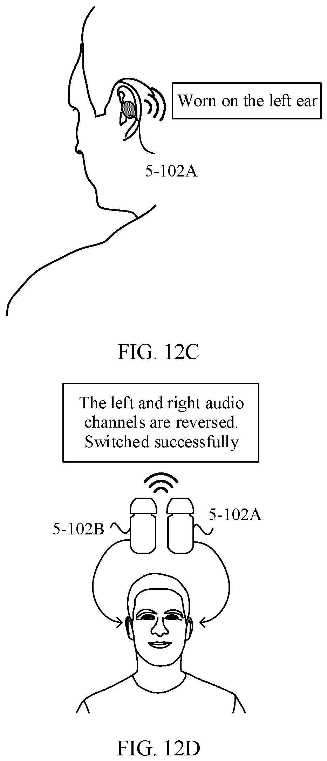

As shown in FIG. 12C, when the left and right ear recognition function is enabled, after the earphone 5-102A is worn on the left ear, the earphone 5-102A may recognize that the earphone 5-102A is worn on the left ear. The earphone 5-102A may be used as a left earphone to play audio of the left audio channel with a sound. After the user wears the earphone 5-102A on the left ear, the earphone 5-102A may verbally broadcast "Worn on the left ear" with a sound, to give the user a prompt that the earphone 5-102A is currently worn on the left ear. Similarly, the earphone 5-102B may also perform left and right ear recognition in a worn state, to determine whether to play audio of the left audio channel or the right audio channel.

As shown in FIG. 12D, in some embodiments, when the earphone 5-102A is worn on the left ear and the earphone 5-102B is worn on the right ear, if the user exchanges locations of the earphone 5-102A and the earphone 5-102B to wear the earphone 5-102A on the right earphone and the earphone 5-102B on the left earphone, the earphone 5-102A and the earphone 5-102B can re-recognize wearing locations. When it is recognized that the earphone 5-102A is adjusted from being worn on the left ear to being worn on the right ear, and the earphone 5-102B is adjusted from being worn on the right ear to being worn on the left ear, the earphone 5-102A and the earphone 5-102B may verbally broadcast "The left and right audio channels are reversed. Switched successfully" with a sound. After the wearing location exchange is recognized, the earphone 5-102A may be adjusted from playing the audio of the left audio channel with a sound as a left earphone to playing the audio of the right audio channel with a sound as a right earphone, and the earphone 5-102B may be adjusted from playing the audio of the right audio channel with a sound as a right earphone to playing the audio of the left audio channel with a sound as a left earphone.

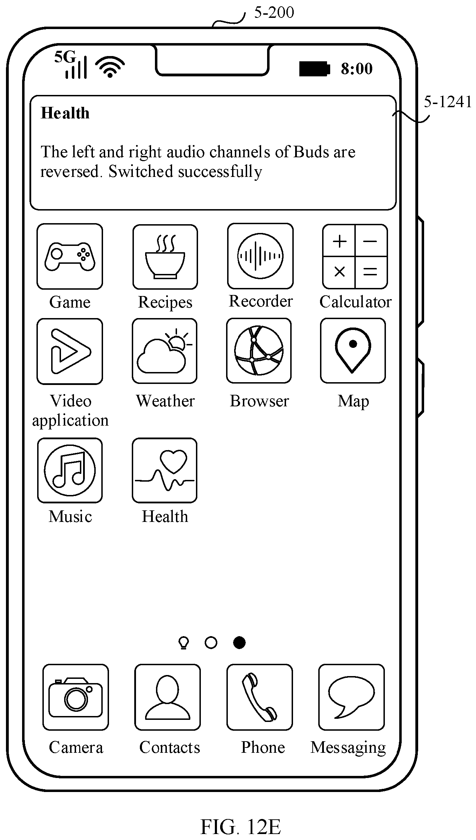

Optionally, when the earphone 5-102A and the earphone 5-102B switch the left audio channel and the right audio channel, the earphone 5-102A and/or the earphone 5-102B may send, through the smartwatch 5-101 or directly, an audio channel switching message to the electronic device 5-200. Based on the foregoing audio channel switching message, the electronic device 5-200 may display a message prompt 5-1241 shown in FIG. 12E. The message prompt 5-1421 may be used to give a prompt that the left audio channel and the right audio channel of the earphone 5-102A and the earphone 5-102B is already switched. Content of the message prompt 5-1241 is not limited in embodiments of this application.

Based on the foregoing left and right ear recognition function, the earphones 5-102 may always ensure that an earphone worn on the left ear plays the audio of the left audio channel with a sound, and an earphone worn on the right ear plays the audio of the right audio channel with a sound. The user may randomly wear the two earphones in the earphones 5-102 on the left ear and the right ear without distinguishing between the left earphone and the right earphone. According to the foregoing embodiments, user experience of using the earphones 5-102 can be improved.

**The following describes a wide-area touch-control function of the earphones 5-102.**

The wide-area touch-control function may be a function in which the earphones 5-102 detect a preset operation in a preset area and executes an instruction corresponding to the preset operation when the earphones 5-102 are in the worn state. The preset area may be an area distributed on an ear of the user and around the ear. The preset operation may include but is not limited to a slightly double-tap operation and a slightly triple-tap operation. The slightly double-tap operation may be an operation of quickly tapping twice consecutively. The slightly triple-tap operation may be an operation of quickly tapping three times consecutively. The instruction corresponding to the preset operation may include but is not limited to: a play instruction, a playing pause instruction, an answering instruction, a declining/hang-up instruction, an instruction for switching to a previous track, an instruction for switching to a next track, an instruction for waking up a voice assistant, a volume adjustment instruction, a noise control instruction, a quick play instruction, and a song identification instruction.

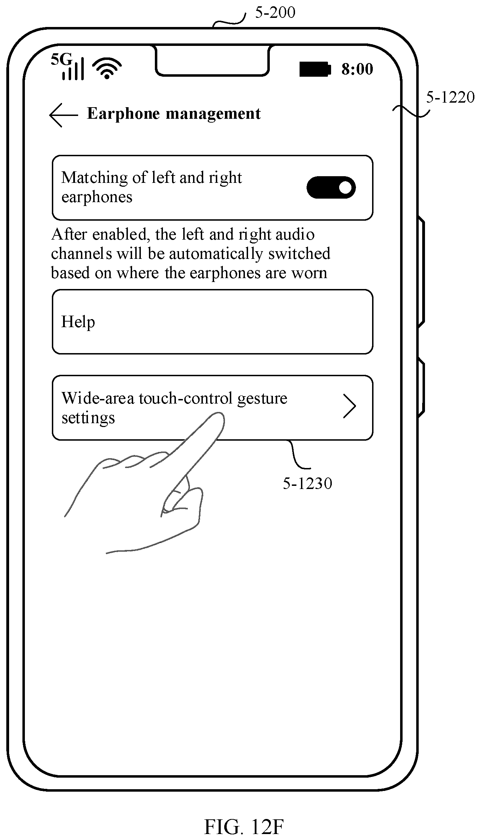

As shown in FIG. 12F, the electronic device 5-200 may display a user interface 5-1220. The user interface 5-1220 shown in FIG. 12F may be displayed by the electronic device 5-200 in response to a slide-up operation performed on the user interface shown in FIG. 12B. The user interface 5-1220 may include a wide-area touch-control option 5-1230. In response to an operation performed on the wide-area touch-control option 5-1230, the electronic device 5-200 may display a user interface 5-1250 shown in FIG. 12G.

As shown in FIG. 12G, the user interface 1250 may include a slightly double-tap option 5-1251, a slightly triple-tap option 5-1252, touch-control area information 5-1257, a left touch-control area option 5-1254, a right touch-control area option 5-1255, and a gesture learning control 5-1256.

The slightly double-tap option 5-1251 may be used to trigger the electronic device 5-200 to display a user interface used to set an instruction corresponding to the operation " Slightly double-tap".

The slightly triple-tap option 5-1252 may be used to trigger the electronic device 5-200 to display a user interface used to set an instruction corresponding to the operation "Slightly triple-tap".

The slightly double-tap option 5-1251 and the slightly triple-tap option 5-1252 may help the user switch between setting interfaces of different operations. When the slightly triple-tap option 5-1252 is in a selected state, the electronic device 5-200 may display the user interface 5-1250 shown in FIG. 12G. In other words, the user interface 5-1250 is a user interface used to set an instruction corresponding to the operation "Slightly triple-tap". For the user interface used to set the instruction corresponding to the operation "Slightly double-tap", refer to the user interface 5-1250. Details are not described in this application again one by one.

The touch-control area information 5-1257 may indicate an area in which the wide-area touch-control function can be implemented, namely, an area in which the foregoing preset operation (for example, the slightly double-tap operation or the slightly triple-tap operation) is performed.

For example, the touch-control area information 5-1257 includes an illustration of an ear, and a touch-control area 5-1257A and a touch-control area 5-1257B are marked on the illustration of the ear. The touch-control area 5-1257A may be an area that is of a cheek and that is close to a tragus. The touch-control area 5-1257A may also be referred to as a left touch-control area. The touch-control area 5-1257B may be an area where a triangular fossa is located on an auricle. The touch-control area 5-1257B may also be referred to as a right touch-control area. The user may perform the preset operation on the touch-control area 5-1257A and the touch-control area 5-1257B, to trigger the earphones 5-102 to execute the instruction corresponding to the preset operation.

The touch-control area 5-1257A and the touch-control area 5-1257B are merely examples for description of this application, and should not constitute a limitation on this application. The foregoing touch-control function may further be supported on more touch-control areas.

The left touch-control area option 5-1254 may be used to set a corresponding instruction when the operation "Slightly triple-tap" is performed on the touch-control area 5-1257A. For example, "Noise control" may be displayed in the left touch-control area option 5-1254, which may indicate that the corresponding instruction when the operation "Slightly triple-tap" is performed on the touch-control area 5-1257A is a noise control instruction. The noise control instruction may instruct the earphones 5-102 to switch a noise control mode.

The right touch-control area option 5-1255 may be used to set a corresponding instruction when the operation "Slightly triple-tap" is performed on the touch-control area 5-1257B. For example, "Noise control" may be displayed in the right touch-control area option 5-1255, which may indicate that the corresponding instruction when the operation " Slightly triple-tap" is performed on the touch-control area 5-1257B is a noise control instruction.

The gesture learning control 5-1256 may be used to view more usage descriptions of gestures supported by the wide-area touch-control function.

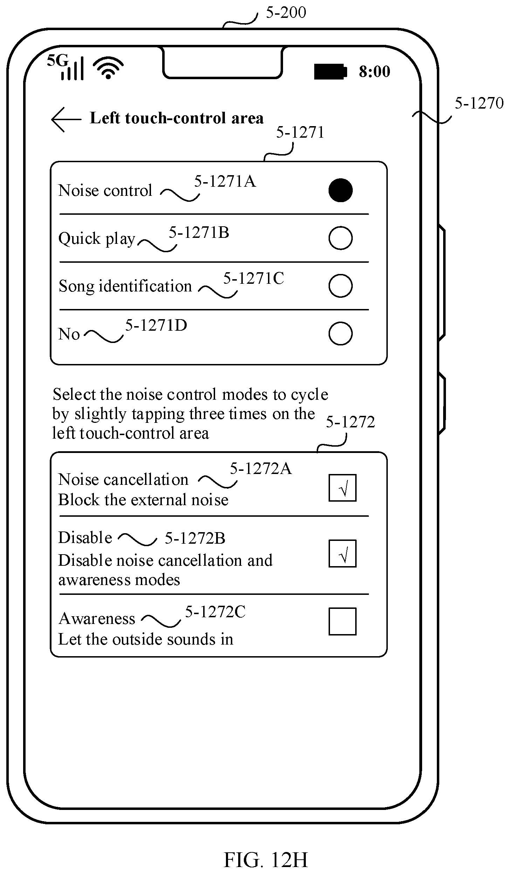

In response to an operation performed on the left touch-control area option 5-1254 shown in FIG. 12G, the electronic device 5-200 may display a user interface 5-1270 shown in FIG. 12H.

As shown in FIG. 12H, the user interface 5-1260 may include an instruction selection box 5-1271 and a noise control mode option box 5-1272.

The instruction selection box 5-1271 may include a plurality of instruction options. For example, a noise control instruction option 5-1271A, a quick play instruction option 5-1271B, a song identification instruction option 5-1271C, and a no instruction option 5-1271D. The plurality of instruction options may help the user select an instruction indicated by an instruction option from the plurality of instruction options as the corresponding instruction when the operation "Slightly triple-tap" is performed on the touch-control area 5-1257A. The no instruction option 5-1271D may indicate that no instruction is set.

When the noise control instruction option 5-1271Ais in the selected state, the electronic device 5-200 may display the noise control mode option box 5-1272. When the noise control instruction option 5-1271A is in an unselected state, the user interface 5-1270 may not include the noise control mode option box 5-1272.

The noise control mode option box 5-1272 may include an option corresponding to each noise control mode. For example, a noise cancellation option 5-1272A corresponding to a noise cancellation mode, a disable option 5-1272B corresponding to a noise cancellation and awareness disabled mode, and an awareness option 5-1272C corresponding to an awareness mode. The options corresponding to the noise control modes may help the user select one or more options from the options to implement noise control mode switching.

For example, when the noise cancellation option 5-1272A and the disable option 5-1272B are in the selected state, and the awareness option 5-1272C is in the unselected state, the earphones 5-102 may switch the noise control mode between the noise cancellation mode and the noise cancellation and awareness disabled mode based on a slightly triple-tap operation detected on the touch-control area 5-1257A. For another example, when the noise cancellation option 5-1272A, the disable option 5-1272B, and the awareness option 5-1272C are all in the selected state, the earphones 5-102 may switch the noise control mode among the noise cancellation mode, the awareness mode, and the noise cancellation and awareness disabled mode based on a slightly triple-tap operation detected on the touch-control area 5-1257A.

In some embodiments, in different use scenarios, same operations performed on a same touch-control area may trigger different instructions to be executed by the earphones 5-102. For example, in a music playing scenario, a slightly double-tap operation performed on the touch-control area 5-1257A may be used to trigger the earphones 5-102 to play music or pause playing of music. In a scenario of receiving an incoming call, a slightly double-tap operation performed on the touch-control area 5-1257A may be used to trigger the earphones 5-102 to answer the incoming call. In a scenario in which a call is in progress, a slightly double-tap operation performed on the touch-control area 5-1257A may be used to trigger the earphones 5-102 to hang up the call.

In some embodiments, same operations performed on different touch-control areas may trigger different instructions to be executed by the earphones 5-102. For example, a slightly double-tap operation performed on the touch-control area 5-1257A may be used to trigger the earphones 5-102 to play music or pause playing of the music. A slightly double-tap operation performed on the touch-control area 5-1257B may be used to trigger the earphones 5-102 to switch to a previous track of music. For another example, a slightly three-tap operation performed on the touch-control area 5-1257A may be used to trigger the earphones 5-102 to switch the noise control mode. A slightly three-tap operation performed on the touch-control area 5-1257B may be used to trigger the earphones 5-102 to implement a song identification function.

In some embodiments, same operations performed on same touch-control areas of the left ear and the right ear may trigger the earphones 5-102 to execute a same instruction. For example, both a slightly double-tap operation performed on the touch-control area 5-1257A of the left ear and a slightly double-tap operation performed on the touch-control area 5-1257A of the right ear may be used to trigger the earphones 5-102 to play music or pause playing of the music. Alternatively, same operations performed on same touch-control areas of the left ear and the right ear may trigger different instructions to be executed by the earphones 5-102.

In some embodiments, the electronic device 5-200 may further provide a switch used to enable or disable a wide-area touch-control function, so that the user can enable or disable the wide-area touch-control function of the earphones 5-102.

It can be learned that the user may set, on the electronic device 5-200, functions that can be implemented by triggering the earphones 5-102 through various operations performed on the touch-control area. In this way, when wearing the earphones 5-102, in addition to performing an operation on the earphones 5-102 (for example, tapping a preset area on the earphones 5-102, or sliding on a preset area on the earphones 5-102) to trigger the earphones 5-102 to implement a function corresponding to the operation, the user may perform an operation on a preset area on the human body (for example, the touch-control area 5-1257A and the touch-control area 5-1257B shown in FIG. 12G), to trigger the earphones 5-102 to implement a function corresponding to the operation. The wide-area touch-control function can improve user experience of using the earphones 5-102.

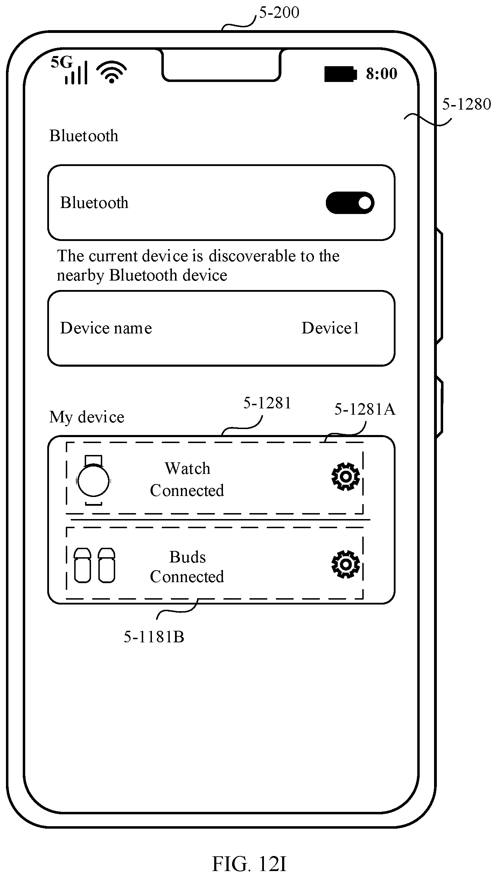

As shown in FIG. 12I, in some embodiments, the electronic device 5-200 may further display a user interface 5-1280. The user interface 5-1280 may be a Bluetooth setting interface of a Settings application in the electronic device 5-200. Both a manner of a communication connection between the electronic device 5-200 and the smartwatch 5-101 and a manner of a communication connection between the electronic device 5-200 and the earphones 5-102 may be a Bluetooth communication connection. The user interface 5-1280 may include a device option box 5-1281. The device option box 5-1281 may include device options corresponding to one or more devices. The one or more devices may be devices that are currently connected to or have been connected to the electronic device 5-200. For example, the device option box 5-1281 may include a device option 5-1281A and a device option 5-1281B.

The device option 5-1281A may indicate a status of the connection between the smartwatch 5-101 and the electronic device 5-200. For example, the device option 5-1281A may include a text prompt "Connected". This may indicate that a communication connection is currently established between the smartwatch 5-101 and the electronic device 5-200. In response to an operation performed on the device option 5-1281A, the electronic device 5-200 may open a user interface used to manage the smartwatch 5-101, so that the user can manage the smartwatch 5-101 on the electronic device 5-200, for example, disconnect the communication connection between the smartwatch 5-101 and the electronic device 5-200, and enable or disable a function of the smartwatch 5-101.

The device option 5-1281B may indicate a status of the connection between the earphones 5-102 and the electronic device 5-200. For example, the device option 5-1281B may include a text prompt "Connected". This may indicate that a communication connection is currently established between the earphones 5-102 and the electronic device 5-200. In response to an operation performed on the device option 5-1281B, the electronic device 5-200 may open a user interface used to manage the earphones 5-102, so that the user can manage the earphones 5-102 on the electronic device 5-200, for example, disconnect the communication connection between the earphones 5-102 and the electronic device 5-200, adjust the noise control mode of the earphones 5-102, and enable or disable a function of the earphones 5-102.

It can be learned from the scenario shown in FIG. 12A to FIG. 12I that, when the electronic device 5-200 establishes communication connections to the smartwatch 5-101 and the earphones 5-102, the user may view related setting information of the smartwatch 5-101 and the earphones 5-102 through the electronic device 5-200, and manage the smartwatch 5-101 and the earphones 5-102. The electronic device 5-200 may provide an entry (for example, a Health application) for centrally managing the smartwatch 5-101 and the earphones 5-102, so that the user can quickly find operation controls for performing various types of management on the smartwatch 5-101 and the earphones 5-102. According to the foregoing embodiments, user experience of managing the smartwatch 5-101 and the earphones 5-102 can be improved. In this way, the user can use the smartwatch 5-101 and the earphones 5-102 more conveniently.

**The following describes a method for implementing a wide-area touch-control function provided in an embodiment of this application.**

In some embodiments, two earphones in the earphones 5-102 each may store a trained gesture recognition model. The gesture recognition model may be used to recognize a wide-area touch-control operation. The wide-area touch-control operation may include various types of operations performed on touch-control areas. For example, the wide-area touch-control operation may include a double-tap operation (namely, the slightly double-tap operation) performed on the touch-control area 5-1257A, a triple-tap operation (namely, the slightly triple-tap operation) performed on the touch-control area 5-1257A, a double-tap operation performed on the touch-control area 5-1257B, and a triple-tap operation performed on the touch-control area 5-1257B. In this way, the earphones 5-102 may execute, based on the wide-area touch-control operation recognized by the gesture recognition model, an instruction corresponding to the wide-area touch-control operation, to implement a corresponding function.

**An implementation method for training the gesture recognition model is first described herein.**

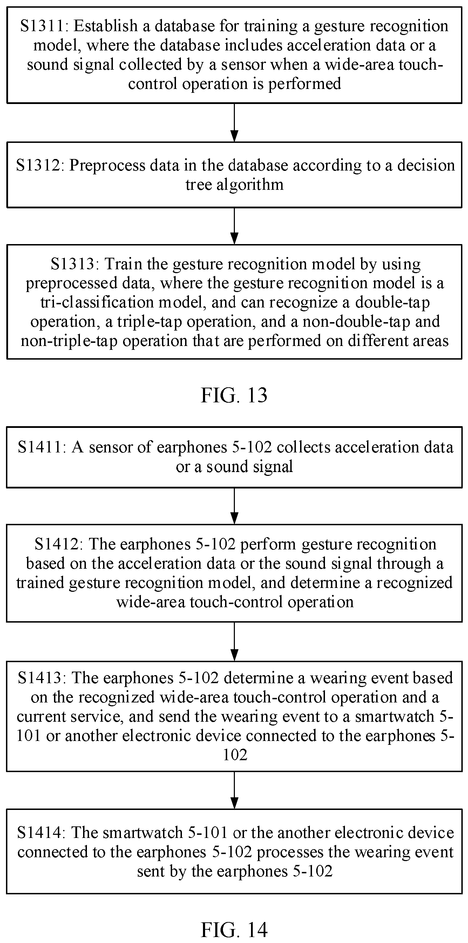

FIG. 13 is an example of a flowchart of a gesture recognition model training method.

As shown in FIG. 13, the method may include step S1311 and step S1312. Step S1311 and step S1312 may be performed by a model training device. The model training device may be a cloud server. A type of the model training device is not limited embodiments of this application.

S1311: Establish a database for training the gesture recognition model, where the database includes acceleration data or a sound signal collected by a sensor when a wide-area touch-control operation is performed.

When performing the wide-area touch-control operation, a user needs to tap an ear or an area around the ear. In this case, the wide-area touch-control operation may cause vibration of an auricle, and may make a tapping sound. If a bone conduction sensor or an inertial measurement unit (inertial measurement unit, IMU) is disposed in the earphones, the bone conduction sensor or the IMU may collect the acceleration data. The acceleration data may reflect vibration of the auricle caused by the wide-area touch-control operation. If a sound pickup sensor (for example, a microphone) is disposed in the earphones, the sound pickup sensor may collect a sound signal. The sound signal may reflect a sound made by the wide-area touch-control operation. Therefore, the acceleration data or the sound signal may be used to train the gesture recognition model.

In some embodiments, the database may further include acceleration data or a sound signal collected by the sensor when a non-wide-area touch-control operation is performed. The non-wide-area touch-control operation may include an operation that easily causes a wide-area touch-control operation recognition error. For example, the non-wide-area touch-control operation may include a single-tap operation performed on a touch-control area. The gesture recognition model is trained based on the acceleration data or the sound signal collected by the sensor when the non-wide-area touch-control operation is performed, so that recognition accuracy of the gesture recognition model can be improved.

The model training device may receive and store the database.

S1312: Preprocess data in the database according to a decision tree algorithm.

The model training device may preprocess the data in the database according to the decision tree algorithm, to obtain a plurality of groups of training samples. The decision tree algorithm may be used to recognize a signal waveform generated by a double-tap operation (for example, a signal waveform of acceleration data or a waveform of a sound signal) and a signal waveform generated by a triple-tap operation. In the foregoing preprocessing process, a tap force and a time interval between two taps may be intercepted, to reduce decision items used in the decision tree algorithm, to improve decision accuracy of the decision tree algorithm.

In some embodiments, the plurality of groups of training samples obtained by the model training device through preprocessing may include: a training sample corresponding to a double-tap operation performed on the touch-control area 5-1257A, a training sample corresponding to a double-tap operation performed on the touch-control area 5-1257B, a training sample corresponding to a triple-tap operation performed on the touch-control area 5-1257A, a training sample corresponding to a triple-tap operation performed on the touch-control area 5-1257B, and a training sample corresponding to a non-double-tap and non-triple-tap operation.

A group of training samples corresponding to the double-tap operation performed on the touch-control area 5-1257A may include acceleration data or a sound signal collected by the sensor when the double-tap operation is performed once on the touch-control area 5-1257A.

A group of training samples corresponding to the double-tap operation performed on the touch-control area 5-1257B may include acceleration data or a sound signal collected by the sensor when the double-tap operation is performed once on the touch-control area 5-1257B.

A group of training samples corresponding to the triple-tap operation performed on the touch-control area 5-1257A may include acceleration data or a sound signal collected by the sensor when the triple-tap operation is performed once on the touch-control area 5-1257A.

A group of training samples corresponding to the triple-tap operation performed on the touch-control area 5-1257B may include acceleration data or a sound signal collected by the sensor when the triple-tap operation is performed once on the touch-control area 5-1257B.

A group of training samples corresponding to the non-double-tap and non-triple-tap operation may include acceleration data or a sound signal collected by the sensor when the non-double-tap and non-triple-tap operation is performed once.

S1313: Train the gesture recognition model by using preprocessed data, where the gesture recognition model is a tri-classification model, and can recognize a double-tap operation, a triple-tap operation, and a non-double-tap and non-triple-tap operation that are performed on different areas.

The model training device may train the gesture recognition model by using the plurality of groups of training samples obtained through preprocessing. The gesture recognition model may be a neural network model, for example, a convolutional neural network model. A type of the gesture recognition model is not limited in embodiments of this application.

Specifically, the gesture recognition model may be a tri-classification model, and may recognize three types of operations: a double-tap operation, a triple-tap operation, and a non-double-tap and non-triple-tap operation. The foregoing process of training the gesture recognition model by using the plurality of groups of training samples is a process of enabling the gesture recognition model to recognize a wide-area touch-control operation and reducing a probability of incorrectly recognizing a single-tap operation, an operation generated when a posture of the earphones is adjusted, and an operation generated when the earphones are worn or removed and a probability of confusing a double-tap operation and a triple-tap operation. A specific process of training the gesture recognition model by using the training samples is not limited in embodiments of this application.

The trained gesture recognition model may receive input data. The input data may be the acceleration data or the sound signal. The trained gesture recognition model may output a recognition result based on the received input data. The recognition result may indicate a wide-area touch-control operation corresponding to the input data.

FIG. 13 is merely an example of a gesture recognition model training method according to this application, and should not constitute a limitation on this application. The model training device may alternatively obtain the gesture recognition model through training by using another method.

In some embodiments, the foregoing trained gesture recognition model may be preset for the two earphones (namely, the earphone 5-102A and the earphone 5-102B) in the earphones 5-102 before delivery. The earphones 5-102 may recognize a wide-area touch-control operation based on the gesture recognition model, to provide a wide-area touch-control function.

**Here, an implementation method for providing the wide-area touch-control function by the earphones 5-102 is described.**

FIG. 14 is an example of a flowchart of a method for providing the wide-area touch-control function by the earphones 5-102.

As shown in FIG. 14, the method may include step S1411 to step S1414. The earphone 5-102A and the earphone 5-102B may separately perform step S1411 to step S1414. Here, the earphones 5-102 are used as an execution body for description, to indicate that any earphone in the earphones 5-102 may be used as an execution body of the method shown in FIG. 14.

S1411: A sensor of the earphones 5-102 collects acceleration data or a sound signal.

A bone conduction sensor, an IMU sensor, and/or a sound pickup sensor may be disposed in the earphones 5-102. The earphones 5-102 may collect the acceleration data through the bone conduction sensor or the IMU sensor. The earphones 5-102 may collect the sound signal through the sound pickup sensor.

S1412: Based on the acceleration data or the sound signal, the earphones 5-102 perform gesture recognition by using the trained gesture recognition model, and determine a recognized wide-area touch-control operation.

When the wide-area touch-control function is enabled, the earphones 5-102 may continuously collect acceleration data through the bone conduction sensor or the IMU sensor, or continuously collect a sound signal through the sound pickup sensor. Then, the earphones 5-102 may recognize the continuously collected acceleration data or the continuously collected sound signal by using the trained gesture recognition model, to determine whether a wide-area touch-control operation exists.

S1413: The earphones 5-102 determine a wearing event based on the recognized wide-area touch-control operation and a current service, and send the wearing event to the smartwatch 5-101 or another electronic device connected to the earphones 5-102.

The service performed by the earphones 5-102 may include audio-related services such as a call service and a music service. It can be learned from the foregoing embodiments that a same wide-area touch-control operation may indicate different wearing events in different services, and may be used to trigger the earphones 5-102 to execute different instructions.

For example, when the earphones 5-102 perform the music service, a wearing event indicated by a double-tap operation performed on the touch-control area 5-1257A may be an event of playing/pausing music, and may be used to trigger the earphones 5-102 to play music or pause playing of music. When the earphones 5-102 perform the call service, and the call service is receiving an incoming call, a wearing event indicated by a double-tap operation performed on the touch-control area 5-1257A may be an event of answering the incoming call, and may be used to trigger the earphones 5-102 to answer the incoming call. When the earphones 5-102 perform the call service, and the call service is an ongoing call, a wearing event indicated by a double-tap operation performed on the touch-control area 5-1257A may be an event of hanging up the call, and may be used to trigger the earphones 5-102 to hang up the call.

The wearing event may include but is not limited to: an event of playing/pausing music, an event of switching to a previous track of music, an event of switching to a next track of music, an event of answering an incoming call, an event of hanging up a call, an event of waking up a voice assistant, an event of switching a noise control mode, and the like.

The another electronic device connected to the earphones 5-102 may be, for example, the electronic device 5-200 or the electronic device 5-300.

S1414: The smartwatch 5-101 or the another electronic device connected to the earphones 5-102 processes the wearing event sent by the earphones 5-102.

In a possible implementation, the earphones 5-102 may send the wearing event to the smartwatch 5-101.

If the service performed by the earphones 5-102 is a service belonging to the smartwatch 5-101, the smartwatch 5-101 may process the wearing event. For example, when playing music on the smartwatch 5-101, the earphones 5-102 detect a wide-area touch-control operation, and the wide-area touch-control operation is a double-tap operation performed on the touch-control area 5-1267A. The earphones 5-102 may determine, based on the wide-area touch-control operation and the current service, that the wearing event is the event of playing/pausing music. The smartwatch 5-101 may send, to the earphones 5-102, an instruction for playing music or pausing playing of the music, to instruct the earphones 5-102 to play the music or pause playing of the music.

If the service performed by the earphones 5-102 is not a service belonging to the smartwatch 5-101, for example, is a service belonging to the electronic device 5-200, the smartwatch 5-101 may send the wearing event to the electronic device 5-200. Then, the electronic device 5-200 may process the wearing event. For example, when playing music on the electronic device 5-200, the earphones 5-102 determine an event of playing/pausing the music. The earphones 5-102 may send the event of playing/pausing music to the smartwatch 5-101. The smartwatch 5-101 may send the event of playing/pausing music to the electronic device 5-200. The electronic device 5-200 may indicate the earphones 5-102 to play the music or pause playing of the music.

In a possible implementation, the earphones 5-102 may determine a device to which the current service belongs, and send the wearing event to the device to which the current service belongs. Then, the device to which the current service belongs may process the wearing event.

For example, when playing music on the electronic device 5-300, the earphones 5-102 determine an event of playing/pausing the music. The earphones 5-102 may determine that a device to which the current service belongs is the electronic device 5-300. The earphones 5-102 may send the event of playing/pausing the music to the electronic device 5-300. The electronic device 5-300 may indicate the earphones 5-102 to play music or pause playing of the music.

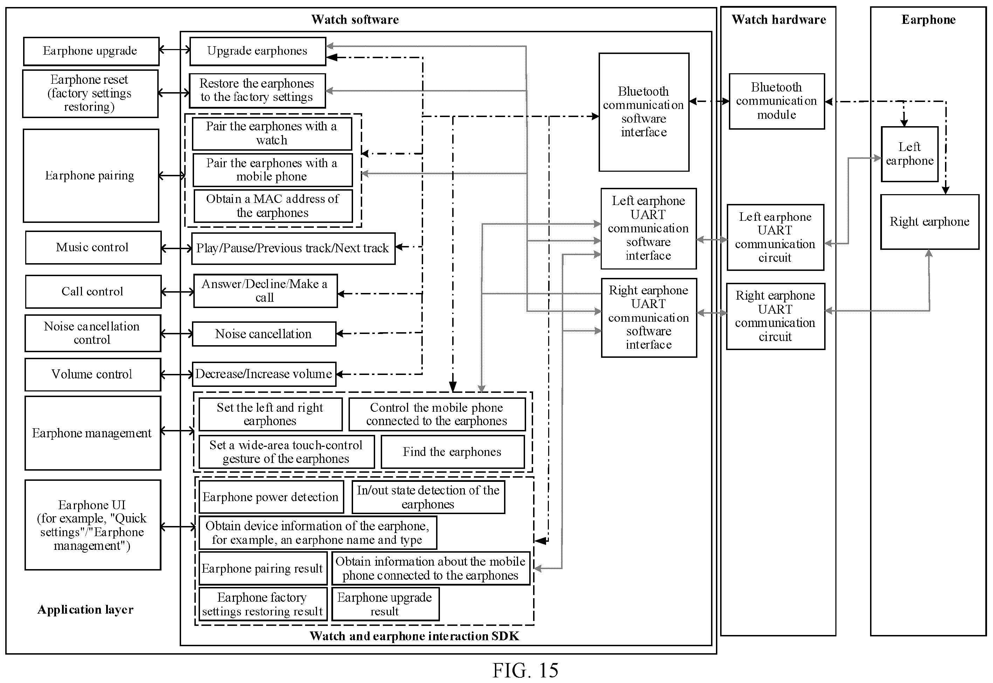

FIG. 15 shows an example of the software architecture of the watch and the earphones. In the software architecture, various control functions of the watch for the earphones may be implemented based on a watch and earphone interaction SDK. The watch and earphone interaction SDK may include a group of application interfaces (application interfaces, APIs) provided by an earphone developer, and a Bluetooth communication manner and an intra-compartment universal asynchronous receiver/transmitter (universal asynchronous receiver/transmitter, UART) communication manner on which these APIs are based. The watch may perform a plurality of types of control on the earphones by invoking the group of APIs, for example, upgrading the earphones, canceling noise, and increasing/decreasing volume, without requiring a watch developer to implement specific functions encapsulated or represented by these APIs. In this way, development burden on the watch side can be reduced, and development work of the watch and the earphones is decoupled. In addition, an update of the watch and earphone interaction SDK does not require that an earphone control function be adaptively changed on the watch side, so that the earphones are more flexibly updated.

The Bluetooth communication manner may be implemented based on a Bluetooth communication module in the watch and Bluetooth communication modules in left and right earphones. The intra-compartment UART communication manner may be implemented based on left-earphone and right-earphone UART communication circuits in the watch and UART communication circuits of the left and right earphones. In actual application, the Bluetooth communication manner may be replaced with another wireless communication manner, and the UART communication manner may be replaced with another bus communication manner.

As shown in FIG. 15, a software architecture of the watch may mainly include an application layer and the watch and earphone interaction SDK.

The application layer may include various earphone control functions (or applications or services). With reference to the foregoing methods, the various earphone control functions may include, for example, earphone upgrade, earphone reset (factory settings restoring), earphone pairing, music control, call control, noise cancellation control, volume control, earphone management, and an earphone UI (for example, "Quick settings" and "Earphone management"). This is not limited thereto. In actual application, the watch software application layer may include more or fewer earphone control functions than the foregoing functions.

The watch and earphone interaction SDK may include various earphone control APIs that are directly invoked by the application layer, and a Bluetooth communication software interface, a left-earphone UART communication software interface, and a right-earphone UART communication software interface that are based on the APIs. The Bluetooth communication software interface may be used by the watch to communicate with the earphones in the Bluetooth communication manner, for example, transmit an earphone upgrade package to the earphones and receive earphone power information from the earphones. The left-earphone and right-earphone UART communication software interfaces may be used by the watch to communicate with the earphones in the UART communication manner, for example, send a reset command to the earphones and obtain a MAC address of the earphones sent by the earphones.

The following describes an implementation of each earphone control function at the application layer based on the watch and earphone interaction SDK.

Earphone upgrade: This function may invoke an API for upgrading the earphones in the watch and earphone interaction SDK. The API for upgrading the earphones may specifically include an API for obtaining an earphone upgrade package and an API for updating an earphone capability. An example of the former API is "getPackage()", and the API may further invoke the Bluetooth communication software interface to send the earphone upgrade package to the earphones in the Bluetooth communication manner. An example of the latter API may be, "update (package)", and the API may further invoke the Bluetooth communication software interface to control, in the Bluetooth communication manner, the earphones to perform upgrade based on the upgrade package (package). Not limited to the Bluetooth communication manner, the upgrade package and an upgrade instruction may alternatively be sent to an in-position earphone in the UART communication manner.

Earphone reset (factory settings restoring): This function may invoke an API for restoring the earphones to factory settings in the watch and earphone interaction SDK. The API for restoring the earphones to factory settings may specifically include an API for deleting pairing information, for example, "deletePairInfo()". Here, deletePairInfo() may further invoke the left-earphone and right-earphone UART communication software interfaces to send, in the UART communication manner, a control instruction for deleting the pairing information to the in-position earphone. Here, deleting the pairing information may be deleting pairing information of the watch, the mobile phone, or the like from the earphone. The API for restoring the earphones to factory settings may further include another specific API, to implement another procedure further related to restoring the earphones to the factory settings.

Earphone pairing: This function may invoke an API for pairing the earphones with the watch (for example, "budsPairWatch()"), an API for pairing the earphones with the mobile phone (for example, "budsPairPhone()"), and an API for obtaining the MAC address of the earphones (for example, "getMacO") that are in the watch and earphone interaction SDK. Here, getMac() may further invoke the left-earphone and right-earphone UART communication software interfaces to obtain the MAC address of the earphones from the earphones in the UART communication manner. Here, budsPairWatch() may further invoke the left-earphone and right-earphone UART communication software interfaces to control, in the UART communication manner, the earphones to perform page scan (page scan), to scan paging of the watch and implement pairing between the watch and the earphones. Here, budsPairPhone() may further invoke the Bluetooth communication software interface to control, in the Bluetooth communication manner, the earphones to perform page scan, to scan paging of the mobile phone and implement pairing between the earphones and the mobile phone.

Music control: This function may invoke a playing API (for example, "play()"), a pause API (for example, "pause()"), a previous track API (for example, "previous()"), and a next track API (for example, "next()") that are in the watch and earphone interaction SDK. Here, play() may further invoke the Bluetooth communication software interface to send a music playing instruction to the earphones in the Bluetooth communication manner, to control the earphones to start/continue to render currently buffered music. Here, pause() may further invoke the Bluetooth communication software interface to send a pause instruction to the earphones in the Bluetooth communication manner, to control the earphones to pause rendering of currently buffered music. Here, previous() may further invoke the Bluetooth communication software interface to send, to the earphones in the Bluetooth communication manner, an instruction for playing a previous track of music, to control the earphones to start to render the previous track of music. The earphones may simultaneously receive or have received the previous track of music from an audio source device (such as the mobile phone or the watch). Here, next() may further invoke the Bluetooth communication software interface to send, to the earphones in the Bluetooth communication manner, an instruction for playing a next track of music, to control the earphones to start to render the next track of music. The earphones may simultaneously receive or have received the previous track of music from the audio source device.

In addition, in a "U-shaped connection", the earphones may further forward, to the mobile phone connected to the earphones, a play/pause/previous track/next track instruction generated on the earphones, to trigger the mobile phone to start/pause transmitting an audio stream to the earphones, or change an audio stream transmitted to the earphones. In this way, in the "U-shaped connection", play()/pause()/previous()/next() may be further used to notify, in the Bluetooth manner, the earphones to forward a corresponding control instruction.

Call control: In a "U-shaped connection", this function may invoke an answer API (for example, accept()), a decline API (for example, decline()), and a call API (for example, call (number)) that are in the watch and earphone interaction SDK. Here, accept() may further invoke the Bluetooth communication software interface to notify, in the Bluetooth communication manner, the earphones to forward an answering instruction. Here, decline() may further invoke the Bluetooth communication software interface to notify, in the Bluetooth communication manner, the earphones to forward a declining instruction. Here, call (number) may further invoke the Bluetooth communication software interface to notify, in the Bluetooth communication manner, the earphones to forward a call instruction and a phone number (number).

Noise cancellation control: This function may invoke a noise cancellation API (for example, "noiseCancel() ") in the watch and earphone interaction SDK, and noiseCancel() may further invoke the Bluetooth communication software interface to send a noise cancellation instruction to the earphones in the Bluetooth communication manner.

Volume control: This function may invoke a volume increase API (for example, "volumeIncrease()") and a volume decrease API (for example, "volumeDecrease()") in the watch and earphone interaction SDK, and volumeIncrease() and volumeDecrease() may further separately invoke the Bluetooth communication software interface to send a volume increase instruction and a volume decrease instruction to the earphones in the Bluetooth communication manner.

Earphone management: This function may invoke an API for setting left and right earphones (for example, "setLR()"), an API for controlling the mobile phone connected to the earphones (for example, "connectPhone (targetPhone) "), an API for setting a wide-area touch-control gesture of the earphones (for example, "setGesture (targetGesture) "), and an API for finding the earphones (for example, "findBuds()") that are in the watch and earphone interaction SDK. Here, setLR() may further invoke the left and right earphone UART communication software interfaces to send, to in-position earphones in the UART communication manner, a control instruction for setting the left earphone and the right earphone, to control the left earphone and the right earphone to be set as the left earphone/right earphone, when stereo music is subsequently played, audio data of a corresponding audio channel is correspondingly selected and rendered based on whether an earphone is a left earphone or a right earphone. Here, connectPhone (targetPhone) may further invoke the Bluetooth communication software interface to send, to the earphones in the Bluetooth communication manner, an instruction for connecting to a target mobile phone targetPhone. The target mobile phone may be selected by the user. For example, in a "U-shaped connection", the user may choose, on the watch, to connect the earphones to the mobile phone connected to the watch. The target mobile phone may be selected by the watch based on an application scenario. For example, the watch may connect the earphones to a mobile phone closer to the watch, especially when the watch is in a worn state. Here, setGesture (targetGesture) may further invoke the Bluetooth communication software interface to send, to the earphones in the Bluetooth communication manner, an instruction for setting the wide-area touch-control gesture as a target gesture targetGesture, and control the earphones to update the wide-area touch-control gesture. Here, findBuds() may further invoke the Bluetooth communication software interface to send an instruction like a sound making/vibration instruction to the earphones in the Bluetooth communication manner, to control sound making/vibration of the earphones, so that the user can find the earphones.

Earphone UI (for example, "Quick settings" and "Earphone management"): This function may invoke a series of APIs related to earphone display in the watch and earphone interaction SDK, for example, including an earphone power detection API (for example, "getRemainCap()"), an API for detecting an in or out state of earphones (for example, "getInOutStatus()"), an API for obtaining earphone device information (for example, "getDevInfo()"), an API for obtaining an earphone pairing result (for example, "getPairRslt()"), an API for obtaining information about a connected mobile phone (for example, "getConnectPhoneInfo()"), an API for obtaining an earphone factory settings restoring result (for example, "getRecoverRslt()"), and an API for obtaining an earphone upgrade result (for example, "getUpdateRslt()"). Here, getRemainCap() may further invoke the Bluetooth communication software interface to send, to the earphones in the Bluetooth communication manner, an instruction for obtaining remaining power, to control the earphones to feed back remaining power information of the earphones to the watch, so that the watch refreshes and displays the remaining power of the earphones. Here, getInOutStatus() may further invoke the left and right earphone UART communication software interfaces to send an in-position detection instruction to in-position earphones in the UART communication manner, to obtain in/out states of the earphones (that is, whether the earphones are in position), so that the watch refreshes and displays in-position statuses of the earphones. Here, getDevInfo() may further invoke the Bluetooth communication software interface to send, to the earphones in the Bluetooth communication manner, an instruction for obtaining device information such as an earphone name and an earphone type, to control the earphones to feed back the device information of the earphones to the watch, so that the watch displays the device information of the earphones. Here, getPairRslt() may further invoke a UART communication software interface to send a pairing result query instruction to an in-position earphone in the UART communication manner, to obtain a result of pairing between the in-position earphone in the watch and the watch or the mobile phone, so that the watch displays the pairing result. Here, getConnectPhoneInfo() may further invoke the Bluetooth communication software interface to send, to the earphone in the Bluetooth communication manner, an instruction for querying a connected mobile phone, to control the earphone to feed back, to the watch, information about the mobile phone connected to the earphone, so that the watch refreshes and displays the information about the mobile phone connected to the earphone. Here, getRecoverRslt() and getUpdateRslt() may further invoke a UART communication software interface to send factory settings restoring and upgrade query instructions to an in-position earphone in the UART communication manner, to obtain factory settings restoring and upgrade results of the in-position earphone in the watch, so that the watch displays the results.

The earphone UI may appear on a plurality of functions or user interfaces of the watch. For example, the in-position status and the power information of the earphones may be displayed on a home (home) screen of the watch, the information about the mobile phone connected to the earphones may be displayed on a "Quick settings" user interface, the factory settings restoring and upgrade results may be respectively displayed on user interfaces of factory settings restoring and upgrade functions, and the pairing result may be displayed on a function related to earphone pairing (for example, "Watch and earphone management"). In other words, a plurality of functions at the application layer of the watch invoke API interfaces related to the earphone UI to implement display of the earphones, so that the user can learn of a status or a working status of the earphones when using these functions.

Whether an API in the watch and earphone interaction SDK invokes a Bluetooth software communication interface or a UART software communication interface may be determined based on a service scenario. For example, in a scenario in which the earphones are paired with the watch, an invoked API may invoke the Bluetooth software communication interface to control the earphones in the Bluetooth communication manner. For another example, in a scenario in which the earphones are in position, an invoked API may invoke the UART software communication interface to control the earphones in the UART communication manner.

**The following uses the electronic device 5-200 as an example to describe a structure of an electronic device in this application.**

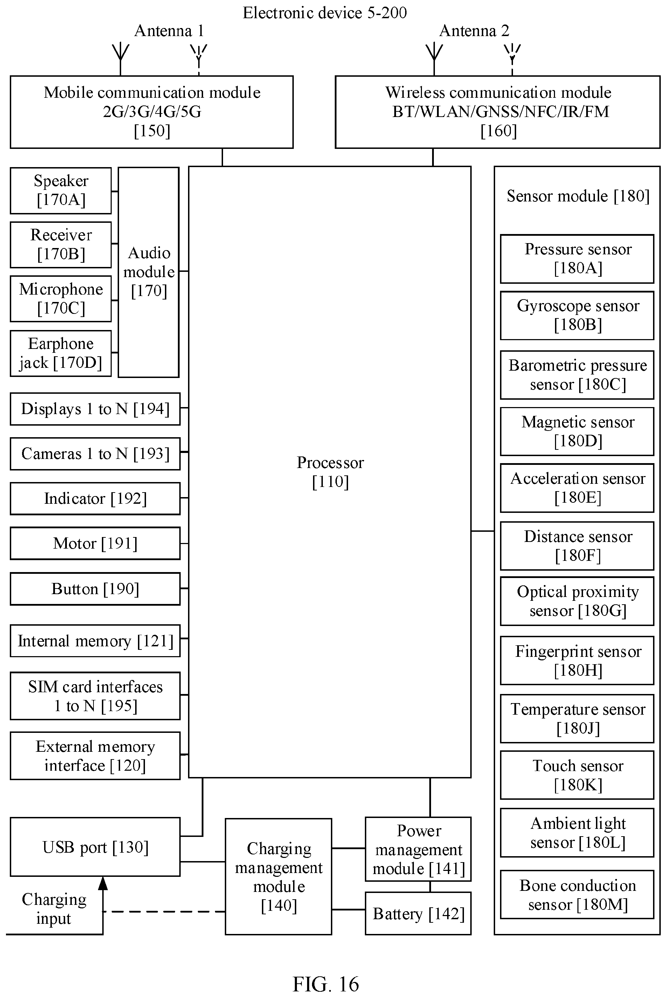

FIG. 16 is an example of a diagram of a structure of the electronic device 5-200 according to an embodiment of this application. In addition to the mobile phone, the electronic device 5-200 may alternatively be a tablet computer, a notebook computer, a smart large-screen device, or the like. The smart large-screen device may be, for example, a smart television.

As shown in FIG. 16. The electronic device 5-200 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, an earphone jack 170D, a sensor module 180, a button 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 5-200. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 5-200.

The I2S interface may be used to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through Bluetooth earphones.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through Bluetooth earphones. Both the I2S interface and the PCM interface may be used for audio communication.

The UART interface is a universal serial data bus, and is used to perform asynchronous communication. The bus may be a two-way communication bus. The bus converts to-be-transmitted data between serial communication and parallel communication. In some embodiments, the UART interface is usually used to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through Bluetooth earphones.

The MIPI interface may be used to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the electronic device 5-200. The processor 110 communicates with the display 194 through the DSI interface, to implement a display function of the electronic device 5-200.

The GPIO interface may be configured by software. The GPIO interface may be configured as a control signal or a data signal. In some embodiments, the GPIO interface may be used to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB type-C port, or the like. The USB port 130 may be used to connect to the charger to charge the electronic device 5-200, or may be used to transmit data between the electronic device 5-200 and a peripheral device, or may be used to connect to earphones for playing audio through the earphones. The interface may be further configured to connect to another electronic device like an AR device.

In embodiments of this application, only an interface connection relationship between the modules is used as an example, and does not constitute a limitation on an internal structure of the electronic device 5-200. In some other embodiments of this application, the electronic device 5-200 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 5-200. The charging management module 140 supplies power to an electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like.

A wireless communication function of the electronic device 5-200 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 5-200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 5-200. In some embodiments, at least some function modules in the mobile communication module 150 may be disposed in the processor 110. In some embodiments, at least some function modules of the mobile communication module 150 may be disposed in a same device as at least some modules of the processor 110.

The wireless communication module 160 may provide a wireless communication solution that is applied to the electronic device 5-200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 5-200 are coupled, and the antenna 2 and the wireless communication module 160 in the electronic device 5-200 are coupled, so that the electronic device 5-200 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 5-200 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The external memory interface 120 may be used to connect to an external storage card, for example, a micro SD card, to extend a storage capability of the electronic device 5-200. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 5-200 and data processing.

The electronic device 5-200 may implement an audio function, for example, music playing and recording, through the audio module 170, the speaker 170A, the receiver 170B, the microphone 170C, the earphone jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an electrical audio signal into a sound signal. The electronic device 5-200 may be used to listen to music or answer a call in a hands-free mode over the speaker 170A.

The receiver 170B, also referred to as an "earpiece", is configured to convert an electrical audio signal into a sound signal. When a call is answered or a voice message is received through the electronic device 5-200, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 5-200. In some other embodiments, two microphones 170C may be disposed in the electronic device 5-200, to collect a sound signal and implement a noise cancellation function. In some other embodiments, three, four, or more microphones 170C may alternatively be disposed in the electronic device 5-200, to collect a sound signal, implement noise cancellation, and identify a sound source, so as to implement a directional recording function and the like.

The earphone jack 170D is configured to connect to wired earphones. The earphone jack 170D may be the USB port 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The sensor module 180 may include a pressure sensor 180A, a gyroscope sensor 180B, a barometric pressure sensor 180C, a magnetic sensor 180D, an acceleration sensor 180E, an optical proximity sensor 180G, a fingerprint sensor 180H, a temperature sensor 180J, a touch sensor 180K, an ambient light sensor 180L, a bone conduction sensor 180M, and the like.

The button 190 includes a power button, a volume button, and the like. The button 190 may be a mechanical button, or may be a touch button. The electronic device 5-200 may receive a button input, and generate a button signal input related to a user setting and function control of the electronic device 5-200.

The motor 191 may generate a vibration prompt. The motor 191 may be configured to provide an incoming call vibration prompt and a touch vibration feedback. For example, touch operations performed on different applications (for example, image shooting and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further user-defined.

The indicator 192 may be an indicator light, and may be configured to indicate a charging status and a power change, or may be configured to indicate a message, a missed call, a notification, and the like.

The SIM card interface 195 is used to connect to a SIM card. The SIM card may be inserted into the SIM card interface 195 or removed from the SIM card interface 195, to implement contact with or separation from the electronic device 5-200. The electronic device 5-200 may support one or N SIM card interfaces, where N is a positive integer greater than 1.

The structure shown in FIG. 16 does not constitute a specific limitation on the electronic device 5-200. In some other embodiments of this application, the electronic device 5-200 may include more or fewer components than those shown in the figure, or some components may be combined, or some components may be split, or different component arrangements may be used. The components shown in the figure may be implemented by hardware, software, or a combination of software and hardware.

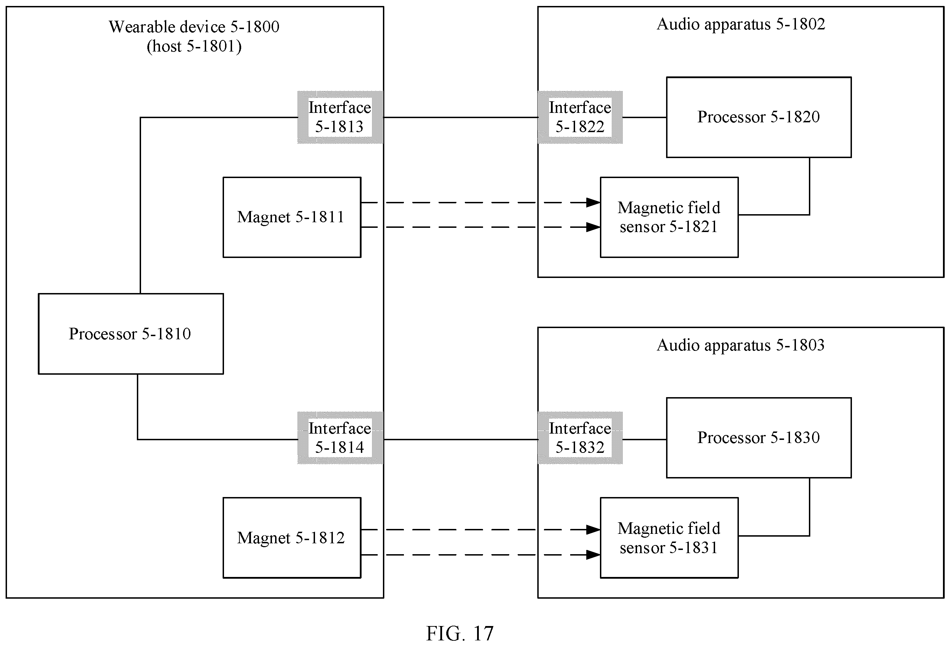

**FIG. 17** **is an example of a diagram of a structure of a wearable device accommodating an audio apparatus according to an embodiment of this application.**

A host 5-1801 and an audio apparatus 5-1802 are shown in FIG. 17. Electronic composition of a wearable device 5-1800 mainly focuses on the host 5-1801. The wearable device 5-1800 may be the wearable device 1 shown in FIG. 1 to FIG. 4. The host 5-1801 may be the host 2 shown in FIG. 1 to FIG. 4.

As shown in FIG. 17, the host 5-1801 may include a processor 5-1810, a magnet 5-1811, a magnet 5-1812, an interface 5-1813, and an interface 5-1814. To better describe the host 5-1801, FIG. 17 further shows an audio apparatus that matches the host 5-1801.

As shown in FIG. 17, an audio apparatus 5-1802 and an audio apparatus 5-1803 may be accommodated in the wearable device 5-1800. The audio apparatus 5-1802 may be the first earphone 31 shown in FIG. 4. The audio apparatus 5-1803 may be the second earphone 32 shown in FIG. 4. The audio apparatus 5-1802 may include a processor 5-1820, a magnetic field sensor 5-1821, and an interface 5-1822. The audio apparatus 5-1803 may include a processor 5-1830, a magnetic field sensor 5-1831, and an interface 5-1832.

When the audio apparatus 5-1802 is placed in an audio apparatus slot (for example, an earphone slot) of the host 5-1801, the interface 5-1813 in the host 5-1801 may be connected to the interface 5-1822 in the audio apparatus 5-1802. The interface 5-1813 may be an electrical connector in the host 5-1801, for example, a communication electrode or a charging electrode in an audio apparatus compartment. A structure of the interface 5-1813 may cooperate with or be in contact with the interface 5-1822 in the audio apparatus, to implement an electrical connection (or a physical connection) between the host 5-1801 and the audio apparatus 5-102. The interface 5-1822 may be an audio apparatus electrical connector, for example, a communication electrode or a charging electrode at an end of an ear handle of the audio apparatus. The interface 5-1822 may be a pogo pin, a spring pin, a spring plate, a conductive block, a conductive patch, a conductive sheet, a pin, a plug, a contact pad, a jack, a socket, or the like in the audio apparatus electrical connector. A method for setting the interface 5-1813 and the interface 5-1822 is not limited in embodiments of this application.

The processor 5-1810 and the processor 5-1820 of the audio apparatus may transmit information through the interface 5-1813 and the interface 5-1822, or charge a battery in the audio apparatus 5-1802.

The magnet 5-1811 in the host 5-1801 may be distributed on a watch cover of the host 5-1801 and/or at a location close to the audio apparatus slot. A location of the magnet 5-1811 may correspond to a location at which the audio apparatus 5-1802 is placed in the audio apparatus slot, so that when the audio apparatus 5-1802 is in an in state or an out state, a magnitude of a magnetic induction intensity (for example, a magnetic flux) detected by the magnetic field sensor 5-1821 of the audio apparatus shown in FIG. 17 is mainly generated by the magnet 5-1811. Similarly, the magnet 5-1812 in the host 5-1801 may alternatively be distributed on the watch cover of the host 5-1801 and/or at a location close to the audio apparatus slot. A location of the magnet 5-1812 may correspond to a location at which the audio apparatus 5-1803 is placed in the audio apparatus slot, so that when the audio apparatus 5-1803 is in an in state or an out state, a magnitude of a magnetic induction intensity (for example, a magnetic flux) detected by the magnetic field sensor 5-1822 of the audio apparatus is mainly generated by the magnet 5-1812.

The audio apparatus 5-1802 may implement in/out state detection of the audio apparatus 5-1802 through the magnetic field sensor 5-1821. The audio apparatus 5-1803 may implement in/out state detection of the audio apparatus 5-1803 through the magnetic field sensor 5-1831.

In some embodiments, a magnetic field sensor may be disposed in the host 5-1801, and magnets may be disposed in the audio apparatus 5-1802 and the audio apparatus 5-1803. The host 5-1801 may detect, through the magnetic field sensor, whether the audio apparatus 5-1802 and the audio apparatus 5-1803 are in the in state or the out state.

For a method for placing the audio apparatus 5-1803 in the host 5-1801 to form an electrical connection to the host 5-1801, refer to the foregoing method for electrically connecting the audio apparatus 5-1802 to the host 5-1801. Details are not described herein again.

It is not shown that the host 5-1801 may further have a wireless communication module. The wireless communication module may be configured to support data exchange of wireless communication including Bluetooth, a GNSS, a WLAN, FM, NFC, IR, and the like between the host 5-1801 and another electronic device (for example, an audio apparatus). In addition, the wireless communication module may be further connected to an antenna, and may receive an electromagnetic wave through the antenna, perform frequency modulation and filtering on the electromagnetic wave signal, and sends a processed signal to the processor 5-1810. The wireless communication module may further receive a to-be-sent signal from the processor 5-1810, perform frequency modulation and amplification on the signal, and convert, through the antenna, the signal into an electromagnetic wave for radiation. The wireless communication module may further cooperate with a wireless charging coil to wirelessly charge the wearable device 5-1800.

It is not shown that the host 5-1801 may further have a power module. The power module may be configured to supply power to the host 5-1801, supply power to modules in the host 5-1801, support the host 5-1801 in receiving a charging input, and the like.

It is not shown that the host 5-1801 may further have a wireless charging coil, to obtain power supply from an external power supply (for example, a wireless charging cradle) in a wireless charging manner.

It is not shown that a first part (which may be referred to as a cover body) of the host 5-1801 may further have a magnetic field sensor, and a second part (which may be referred to as a main body) of the host 5-1801 may be mounted with a status detection magnet. The magnetic field sensor may be configured to detect a magnetic flux of the status detection magnet in the second part. A value of the magnetic flux may be used by the processor 5-1810 to determine whether the cover of the host 5-1801 is opened. A location of the magnetic field sensor and a location of the status detection magnet may be interchanged, that is, the magnetic field sensor may be in the main body, and the status detection magnet may be in the cover body.

FIG. 17 shows only an example of the host 5-1801 of the wearable device 5-1800 according to embodiments of this application. In actual application, the host 5-1801 may include more or fewer components. For implementation details of the host 5-1801, refer to the content of the foregoing sections. Details are not described herein again.

**Structures of the audio apparatus 5-1802 and the audio apparatus 5-1803 shown in** **FIG. 17** **may be completely consistent. Here, the audio apparatus 5-1802 is used as an example to describe a structure of the audio apparatus.**

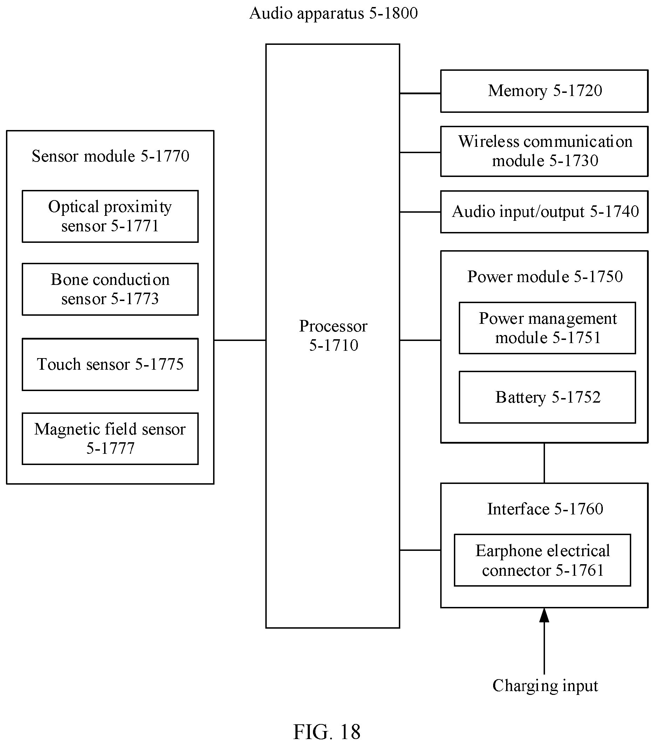

As shown in FIG. 18, the audio apparatus 5-1802 may include a processor 5-1710, a memory 5-1720, a wireless communication module 5-1730, an audio input/output circuit 5-1740, a power module 5-1750, an interface 5-1760, a sensor module 5-1770, and the like. The power module 5-1750 may include a power management module 5-1751 and a battery 5-1752. The interface 5-1760 may include an audio apparatus electrical connector 5-1761.

The memory 5-1720 may be configured to store program code, for example, program code used to charge the audio apparatus 5-1802, perform wireless pairing and connection between the audio apparatus 5-1802 and another electronic device, or perform wireless communication between the audio apparatus 5-1802 and an electronic device. The memory 5-1720 may further store a Bluetooth address used to uniquely identify a wireless audio apparatus. In addition, the memory 5-1720 may further store connection data of an electronic device that is previously successfully paired with the audio apparatus 5-1802. For example, the connection data may be a Bluetooth address of the electronic device that is previously successfully paired with the audio apparatus 5-1802. Based on the connection data, the audio apparatus 5-1802 can be automatically paired with the electronic device, and does not need to configure a connection to the electronic device, for example, perform validity verification. The Bluetooth address may be a media access control (media access control, MAC) address.

The processor 5-1710 may be configured to execute the program code stored in the memory 5-1720, and invoke a related module to implement a function of the audio apparatus 5-1802 in embodiments of this application, for example, to implement a charging function, a wireless communication function, an audio data playing function, a wearing detection function, and an in/out state detection function of the audio apparatus 5-1802. The processor 5-1710 may be specifically an integrated control chip, or may include a circuit including various active components and/or passive components, and the circuit is configured to perform a function of the processor 5-1710 that is described in this embodiment of this application. The processor of the audio apparatus 5-1802 may be a micro controller unit (micro controller unit, MCU).

In some embodiments, the processor 5-1710 may include one or more interfaces. The processor 5-1710 may be connected to another component of the audio apparatus 5-1802 through the one or more interfaces.

The wireless communication module 5-1730 may be configured to support data exchange of wireless communication including Bluetooth, a GNSS, a WLAN, FM, NFC, IR, and the like between the audio apparatus 5-1802 and another electronic device. In some embodiments, the wireless communication module 5-1730 may be a Bluetooth chip. The audio apparatus 5-1802 may be paired with and wirelessly connected to a Bluetooth chip in another electronic device through the Bluetooth chip, to implement wireless communication between the audio apparatus 5-1802 and the another electronic device and through the wireless connection. For example, in embodiments of this application, the wireless communication module 5-1730 may be configured to: after the processor 5-1710 determines that the audio apparatus 5-1802 is removed from a compartment, send remaining power of the audio apparatus 5-1802 to an electronic device that establishes a wireless connection (for example, a Bluetooth connection) to the audio apparatus 5-1802.

In addition, the wireless communication module 5-1730 may be further connected to an antenna. The wireless communication module 5-1730 receives an electromagnetic wave through the antenna, performs frequency modulation and filtering processing on the electromagnetic wave signal, and sends a processed signal to the processor 5-1710. The wireless communication module 5-1730 may further receive a to-be-sent signal from the processor 5-1710, perform frequency modulation and amplification on the signal, and convert, through the antenna, the signal into an electromagnetic wave for radiation.

The audio input/output circuit 5-1740 may be connected to a sound collection apparatus like a microphone, to process a sound, convert the sound into an audio signal, and transmit the audio signal to the processor for further processing. The audio input/output circuit 5-1740 may be further connected to a sound playing apparatus like a speaker, to convert an audio signal from the processor into a sound for output. In this way, functions such as answering/making a call, playing music, and using a voice assistant can be implemented.

The power module 5-1750 may be configured to supply power to the audio apparatus 5-1802, supply power to modules of the audio apparatus 5-1802, support the audio apparatus 5-1802 in receiving a charging input, and the like.

The interface 5-1760 may be used to provide a wired connection for charging or communication between the audio apparatus 5-1802 and the smartwatch 5-101. In some embodiments, the audio apparatus 5-1802 may have a plurality of interfaces 5-1760. In some embodiments, the interface 5-1760 may include an audio apparatus electrical connector 5-1761. When the audio apparatus 5-1802 is placed in an audio apparatus slot of the smartwatch 5-101, the audio apparatus 5-1802 may establish an electrical connection to an electrical connector in the smartwatch 5-101 through the audio apparatus electrical connector 5-1761 (for example, the audio apparatus electrical connector is in direct contact with the electrical connector in the smartwatch 5-101). After the electrical connection is established, the smartwatch 5-101 may charge the battery 5-1752 in the audio apparatus 5-1802 based on current transmission functions of the audio apparatus electrical connector 5-1761 and the electrical connector in the smartwatch 5-101. For example, the audio apparatus electrical connector 5-1761 may be a pogo pin, a spring pin, a spring plate, a conductive block, a conductive patch, a conductive sheet, a pin, a plug, a contact pad, a jack, a socket, or the like. A specific type of the electrical connector 5-1761 is not limited in embodiments of this application. In some other embodiments, after the electrical connection is established, the audio apparatus 5-1802 may further perform data communication with the smartwatch 5-101, for example, may receive a pairing instruction from the smartwatch 5-101.

The sensor module 5-1770 may include, for example, an optical proximity sensor 5-1771, a bone conduction sensor 5-1772, a touch sensor 5-1773, and a magnetic field sensor 5-1774. In some embodiments, the processor 5-1710 may perform wearing detection through the optical proximity sensor 5-1771, to determine whether the audio apparatus 5-1802 is worn by a user. In some embodiments, the processor 5-1710 may obtain a vibration signal of a vibration bone of a vocal-cord part through the bone conduction sensor 5-1772, and obtain a voice signal through parsing, to implement a voice function. In some embodiments, the processor 5-1710 may detect, based on a change of a magnetic induction intensity detected by the magnetic field sensor 5-1774, whether the audio apparatus 5-1802 is in an in state or an out state. The magnetic field sensor 5-1774 may be a Hall effect sensor or a magnetometer. In addition, the processor 5-1710 may perform the method in embodiments of this application, and exchange information with devices such as the smartwatch 5-101, the electronic device 5-200, and the electronic device 5-300.

In some embodiments, a housing of the audio apparatus 5-1802 may be further provided with a magnet (for example, a magnetic iron) configured to attract the smartwatch 5-101, so that the audio apparatus 5-1802 is placed in the audio apparatus slot of the smartwatch 5-101. For example, an outer surface of the audio apparatus 5-1802 may further include components such as a button, an indicator light (which may indicate power, an incoming/outgoing call, a pairing mode, and the like), a display (which may prompt user-related information), and a dust filter (which may be used in cooperation with an earpiece). The button may be a physical button, a touch button (used in cooperation with the touch sensor), or the like, and is configured to trigger operations such as powering on, powering off, pausing, playing, recording, starting charging, and stopping charging.

The structure shown in FIG. 18 does not constitute a specific limitation on the audio apparatus 5-1802. In actual application, the audio apparatus 5-1802 may include more or fewer components than those shown in the figure, or some components may be combined, or some components may be split, or different component arrangements may be used. The components shown in the figure may be implemented by hardware, software, or a combination of software and hardware.

An embodiment of this application provides an audio communication system, including a wearable device and an audio apparatus. The foregoing "fixed connection" may be formed between the wearable device and the audio apparatus. The wearable device may be the wearable device described in embodiments in FIG. 17, and the audio apparatus may be the audio apparatus described in embodiments in FIG. 17 and FIG. 18. For specific details of the wearable device and the audio apparatus, refer to the descriptions of the wearable device and the audio apparatus in the foregoing sections. Details are not described herein again.

An embodiment of this application further provides an audio communication system, including a wearable device, an audio apparatus, and a first electronic device. The foregoing "triangular connection" may be formed between the wearable device, the audio apparatus, and the first electronic device. The wearable device may be the wearable device described in embodiments in FIG. 17, the audio apparatus may be the audio apparatus described in embodiments in FIG. 17 and FIG. 18, and the first electronic device may be the electronic device described in embodiments in FIG. 16. For specific details of the wearable device and the audio apparatus, refer to the descriptions of the wearable device and the audio apparatus in the foregoing sections. Details are not described herein again. For specific details of the first electronic device, refer to the descriptions of the mobile phone in the "triangular connection" in the foregoing sections and the electronic device 5-200. Details are not described herein again.

An embodiment of this application further provides an audio communication system, including a wearable device, an audio apparatus, a first electronic device, and a second electronic device. The foregoing "U-shaped connection" may be formed between the wearable device, the audio apparatus, the first electronic device, and the second electronic device. The wearable device may be the wearable device described in embodiments in FIG. 17, the audio apparatus may be the audio apparatus described in embodiments in FIG. 17 and FIG. 18, and both the first electronic device and the second electronic device may be the electronic device described in embodiments in FIG. 16. For specific details of the wearable device and the audio apparatus, refer to the descriptions of the wearable device and the audio apparatus in the foregoing sections. Details are not described herein again. For specific details of the first electronic device and the second electronic device, refer to the descriptions of the two mobile phones in the "U-shaped connection" in the foregoing sections and the electronic device 5-200 and the electronic device 5-300. Details are not described herein again. In a possibility, the earphones may support a plurality of connections. In this way, the system may further form the foregoing "2+1 connection", that is, the earphones may be connected to both the first electronic device and the second electronic device. However, there is a physical connection between the earphones and one of the electronic devices, and there is a virtual connection between the earphones and the other electronic device.

An embodiment of this application further provides an audio communication system, including a wearable device, an audio apparatus, and more than two electronic devices. When earphones support a plurality of connections, the foregoing "2+1 connection", "2+2 connection", "2+3 connection", and even a more complex communication architecture may be formed among the wearable device, the audio apparatus, and the more than two electronic devices. The wearable device may be the wearable device described in embodiments in FIG. 17, the audio apparatus may be the audio apparatus described in embodiments in FIG. 17 and FIG. 18, and both the first electronic device and the second electronic device may be the electronic device described in embodiments in FIG. 16.

It may be understood that each user interface described in embodiments of this application is merely an example interface, and constitutes no limitation on the solutions of this application. In another embodiment, the user interface may use different interface layouts, may include more or fewer controls, and may add or reduce other function options, and provided that the user interface is based on a same inventive idea provided in this application, all fall within the protection scope of this application.

It should be noted that, if no contradiction or conflict occurs, any feature or any part of any feature in any embodiment of this application may be combined, and a combined technical solution also falls within the scope of embodiments of this application.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A wearable device management method, wherein the method is applied to a wearable device, a cover body and an audio apparatus slot that accommodates an audio apparatus are disposed in the wearable device, a communication connection is established between the wearable device and the audio apparatus, and the method comprises:
displaying, by the wearable device, a first interface when the cover body is closed, wherein the first interface comprises audio apparatus information; and
displaying, by the wearable device, a second interface in response to a first operation on the first interface, wherein the second interface comprises one or more audio apparatus management controls, and the audio apparatus management controls are used to manage the audio apparatus.

2. The method according to claim 1, wherein the audio apparatus information comprises an audio apparatus icon, and the method further comprises:
displaying, by the wearable device, a third interface in response to an operation on the audio apparatus icon, wherein the third interface comprises one or more of the following: in-position information and power information of the audio apparatus, the in-position information indicates whether the audio apparatus is placed in the audio apparatus slot, and the power information of the audio apparatus indicates power of the audio apparatus.

3. The method according to claim 1, wherein the audio apparatus information comprises one or more of the following: in-position information and power information of the audio apparatus, the in-position information indicates whether the audio apparatus is placed in the audio apparatus slot, and the power information of the audio apparatus indicates power of the audio apparatus.

4. The method according to claim 2 or 3, wherein the audio apparatus slot comprises a first audio apparatus slot and a second audio apparatus slot, and the in-position information indicates that there is an audio apparatus placed in each of the first audio apparatus slot and the second audio apparatus slot;
the in-position information indicates that there is an audio apparatus placed in the first audio apparatus slot and there is no audio apparatus in the second audio apparatus slot;
the in-position information indicates that there is an audio apparatus placed in the second audio apparatus slot and there is no audio apparatus in the first audio apparatus slot; or
the in-position information indicates that there is no audio apparatus in each of the first audio apparatus slot and the second audio apparatus slot.

5. The method according to any one of claims 1 to 4, wherein the first interface further comprises wearable device information, and the wearable device information comprises time display information.

6. The method according to any one of claims 1 to 5, wherein that the second interface comprises one or more audio apparatus management controls specifically comprises:
the second interface comprises one or more of the following audio apparatus management controls: a noise control mode switching control, an audio apparatus-connected device management control, an audio apparatus sound effect setting control, and a left and right ear recognition control, wherein
the noise control mode switching control is used to switch a noise control mode of the audio apparatus, and the noise control mode comprises a noise cancellation mode, an awareness mode, and a noise cancellation and awareness disabled mode; the audio apparatus-connected device management control is used to manage a device connected to the audio apparatus; the audio apparatus sound effect setting control is used to set a sound effect of the audio apparatus; and the left and right ear recognition control is used to enable or disable a left and right ear recognition function of the audio apparatus.

7. The method according to any one of claims 1 to 6, wherein the method further comprises:
detecting, by the wearable device, a second operation, and displaying a fourth interface, wherein the fourth interface comprises one or more wearable device management controls and one or more audio apparatus management controls, and the wearable device management controls are used to manage the wearable device.

8. The method according to any one of claims 1 to 7, wherein the method further comprises:
detecting, by the wearable device, a third operation, wherein the third operation is used to search for the audio apparatus; and
when there is a communication connection established between the wearable device and the audio apparatus, sending, by the wearable device, a first ringing instruction to the audio apparatus in response to the third operation, wherein the first ringing instruction instructs the audio apparatus to ring; or
when there is no communication connection between the wearable device and the audio apparatus, querying, by the wearable device in response to the third operation, a first location of the audio apparatus in a case in which the wearable device is disconnected from the audio apparatus last time, and displaying, by the wearable device, the first location.

9. The method according to any one of claims 1 to 8, wherein the method further comprises:
sending, by the wearable device, a first instruction to the audio apparatus, wherein the first instruction instructs the audio apparatus to establish a communication connection to a first device.

10. The method according to any one of claims 1 to 9, wherein the method further comprises:
when there is a foreign matter in the audio apparatus slot, providing, by the wearable device, a foreign matter prompt, wherein the foreign matter prompt indicates that there is the foreign matter in the audio apparatus slot.

11. The method according to any one of claims 1 to 10, wherein the wearable device is not connected to a charging apparatus, and the method further comprises:
when the audio apparatus is placed in the audio apparatus slot, charging, by the wearable device, the audio apparatus.

12. The method according to claim 11, wherein before the charging, by the wearable device, the audio apparatus, the method further comprises:
detecting, by the wearable device, that power of the wearable device is higher than a first power threshold.

13. The method according to claim 11 or 12, wherein before the charging, by the wearable device, the audio apparatus, the method further comprises:
obtaining, by the wearable device, the power of the audio apparatus, wherein the power of the audio apparatus is lower than a second power threshold.

14. The method according to any one of claims 11 to 13, wherein after the charging, by the wearable device, the audio apparatus, the method further comprises:
determining, by the wearable device, whether the power of the wearable device is higher than the first power threshold; and
when the power of the wearable device is higher than the first power threshold, continuing, by the wearable device, charging the audio apparatus; or
when the power of the wearable device is lower than the first power threshold, stopping, by the wearable device, charging the audio apparatus.

15. The method according to any one of claims 11 to 14, wherein after the charging, by the wearable device, the audio apparatus, the method further comprises:
determining, by the wearable device, whether the power of the audio apparatus is lower than the second power threshold; and
when the power of the audio apparatus is lower than the second power threshold, continuing, by the wearable device, charging the audio apparatus; or
when the power of the audio apparatus is higher than the second power threshold, stopping, by the wearable device, charging the audio apparatus.

16. The method according to any one of claims 1 to 10, wherein the wearable device is connected to a charging apparatus, the audio apparatus is placed in the audio apparatus slot, and power from the charging apparatus is used to charge the wearable device and the audio apparatus according to a first charging time sequence, wherein
the first charging time sequence comprises one or more of the following time sequences: the power from the charging apparatus is used to simultaneously charge the wearable device and the audio apparatus; the power from the charging apparatus is first used to charge the audio apparatus, and when the power of the audio apparatus reaches a third power threshold, the power from the charging apparatus is then used to charge the wearable device; and the power from the charging apparatus is first used to charge the wearable device, and when the power of the wearable device reaches a fourth power threshold, the power from the charging apparatus is then used to charge the audio apparatus.

17. The method according to any one of claims 1 to 16, wherein the wearable device is any one of the following devices: a smartwatch, a smart band, smart glasses, a smart helmet, smart clothing, and a smart backpack.

18. A wearable device management method, wherein the method is applied to an audio apparatus, the audio apparatus is capable of being accommodated in an audio apparatus slot of a wearable device, a communication connection is established between the audio apparatus and the wearable device, and the method comprises:
receiving, by the audio apparatus, a first instruction from the wearable device, wherein the first instruction instructs the audio apparatus to establish a communication connection to a first device; and
establishing, by the audio apparatus, the communication connection to the first device in response to the first instruction.

19. The method according to claim 18, wherein the method further comprises:
receiving, by the audio apparatus, first audio data from the first device; and
playing, by the audio apparatus, first audio based on the first audio data.

20. The method according to claim 18 or 19, wherein the method further comprises:
receiving, by the audio apparatus, a second instruction from the wearable device, wherein the second instruction instructs the audio apparatus to establish a communication connection to a second device; and
establishing, by the audio apparatus, the communication connection to the second device in response to the second instruction.

21. The method according to claim 20, wherein the method further comprises:
receiving, by the audio apparatus, second audio data from the second device; and
playing, by the audio apparatus, second audio based on the second audio data.

22. The method according to any one of claims 18 to 21, wherein the method further comprises:
receiving, by the audio apparatus, a first ringing instruction from the wearable device; and
ringing, by the audio apparatus, according to the first ringing instruction.

23. The method according to any one of claims 18 to 22, wherein the audio apparatus comprises a first audio apparatus and a second audio apparatus, and the method further comprises:
recognizing, by the first audio apparatus and the second audio apparatus, a left ear and a right ear, wherein
when the first audio apparatus recognizes that the first audio apparatus is worn on the left ear, the first audio apparatus is configured to play audio of a left channel; and
when the second audio apparatus recognizes that the second audio apparatus is worn on the right ear, the second audio apparatus is configured to play audio of a right channel.

24. The method according to any one of claims 18 to 23, wherein the method further comprises:
detecting, by the audio apparatus, a fourth operation performed on a first area, wherein the first area comprises an area in which an ear wearing the audio apparatus is located; and
performing, by the audio apparatus in response to the fourth operation, one or more types of the following control: switching a noise control mode, pausing audio playing, resuming audio, switching audio playing, adjusting volume, answering a call, and hanging up a call.

25. The method according to any one of claims 18 to 24, wherein the audio apparatus is any one of the following devices: earphones, a mini sound box, and a portable music player.

26. An electronic device, wherein the electronic device is a wearable device, an audio apparatus slot accommodating an audio apparatus is disposed in the electronic device, the electronic device comprises a communication apparatus, a memory, and a processor, the communication apparatus is configured to establish a communication connection between the electronic device and the audio apparatus, the memory is configured to store a computer program, and the processor is configured to invoke the computer program, for the electronic device to perform the method according to any one of claims 1 to 17.

27. An audio apparatus, wherein the audio apparatus is capable of being accommodated in an audio apparatus slot of a wearable device, the audio apparatus comprises a communication apparatus, a memory, and a processor, the communication apparatus is configured to establish a communication connection between the audio apparatus and the wearable device, the memory is configured to store a computer program, and the processor is configured to invoke the computer program, for the audio apparatus to perform the method according to any one of claims 15 to 25.

28. A computer-readable storage medium, comprising instructions, wherein when the instructions are run on an electronic device, the electronic device is enabled to perform the method according to any one of claims 1 to 17 or 15 to 25.

29. A communication system, wherein the communication system comprises the electronic device according to claim 26 and the audio apparatus according to claim 27.
